# EUROPEAN PATENT APPLICATION

(11) **EP 4 292 863 A1**
(43) Date of publication of application: **20.12.2023**
(21) Application number: 23172864.3
(22) Date of filing: 11.05.2023
(51) Int. Cl.: B60L 50/51, H01M 10/42, H02J 7/00, H02J 7/06, H02M 7/483

(54) **CHARGE STORAGE DEVICE**

(30) Priority: 13.05.2022 US 202263341630 P
(71) Applicant: Solaredge Technologies Ltd., 4673335 Herzeliya (IL)
(72) Inventor: YOSCOVICH, Ilan, 4673335 Herzeliya (IL); LEVY, Yehuda, 4673335 Herzeliya (IL)
(74) Representative: V.O.

(57) **Abstract**

Systems, apparatuses, and methods are described for charge storage devices with a plurality of battery cells. The plurality of battery cells may be connected to each other in one or more battery stacks. The plurality of battery cells may be connected to one or more coils of a motor of an electric vehicle.

## Description

### BACKGROUND

Electric charge is a physical property of matter that causes matter to experience a force when placed in an electromagnetic field. Electric charge may be positive or negative. Electric charge may be carried by particles, such as protons or electrons. Electrical energy is energy derived as a result of movement of electrically charged particles. Electric power is the rate, per unit time, at which electrical energy is transferred by an electric circuit. Electric power may be supplied by electric generators, or by charge storage devices, such as electric batteries. A charge storage device may include one or more electrochemical cells and may be connected to electrical devices to power them. Reusable charge storage devices, such as rechargeable batteries, may be charged and discharged multiple times. Charge storage devices may be charged using an applied electric current. Charge storage devices may be used to power loads, such as motors in electric vehicles. Electronics may be connected between the loads and the charge storage devices. These electronics may be used to convert the power supplied to the load from the charge storage devices, and/or to help recharge the charge storage devices using power supplied from a power source.

### SUMMARY

The following summary presents a simplified summary of certain features. The summary is not an extensive overview and is not intended to identify key or critical elements.

Systems, apparatuses, and methods are described for charge storage devices with a plurality of battery cells.

In some examples, the plurality of battery cells may be connected to each other in one or more battery stacks. A battery stack may include multiple battery cells and multiple respective circuitries in a series string. The string voltage may be configured to be multiple integers of the cell voltage, determined by the number of cells serially connected in the string.

In some examples, the plurality of battery cells may be connected to one or more coils of a motor of an electric vehicle.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1A shows an example charge storage device with N battery stacks.
FIG. 1B shows an example charge storage device with 3 battery stacks.
FIG. 1C shows an example charge storage device with 1 battery stack.
FIG. 2A shows an example power system.
FIG. 2B shows an example power system.
FIG. 2C shows an example power system with 3 battery stacks.
FIG. 3A shows an example battery cell.
FIG. 3B shows an example battery cell.
FIG. 3C shows an example battery cell.
FIG. 3D shows an example battery cell.
FIG. 3E shows an example battery cell.
FIG. 3F shows an example battery cell.
FIG. 3G shows an example battery cell.
FIG. 3H shows an example battery cell.
FIG. 3I shows an example battery cell.
FIG. 3J shows an example battery cell.
FIG. 3K shows an example battery cell.
FIG. 3L shows an example battery cell.

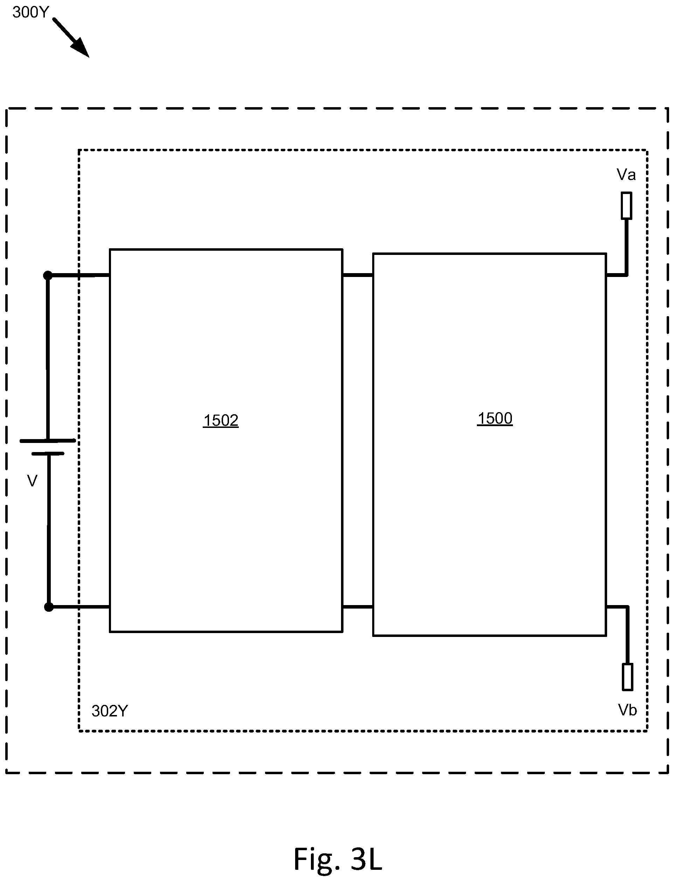

FIG. 3L shows an example battery cell.

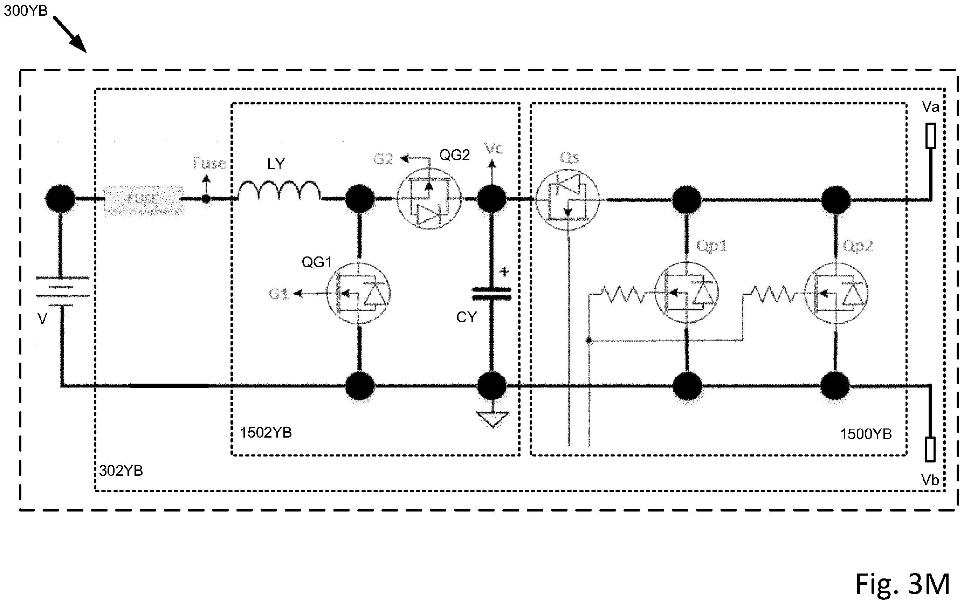

FIG. 3M shows an example battery cell.

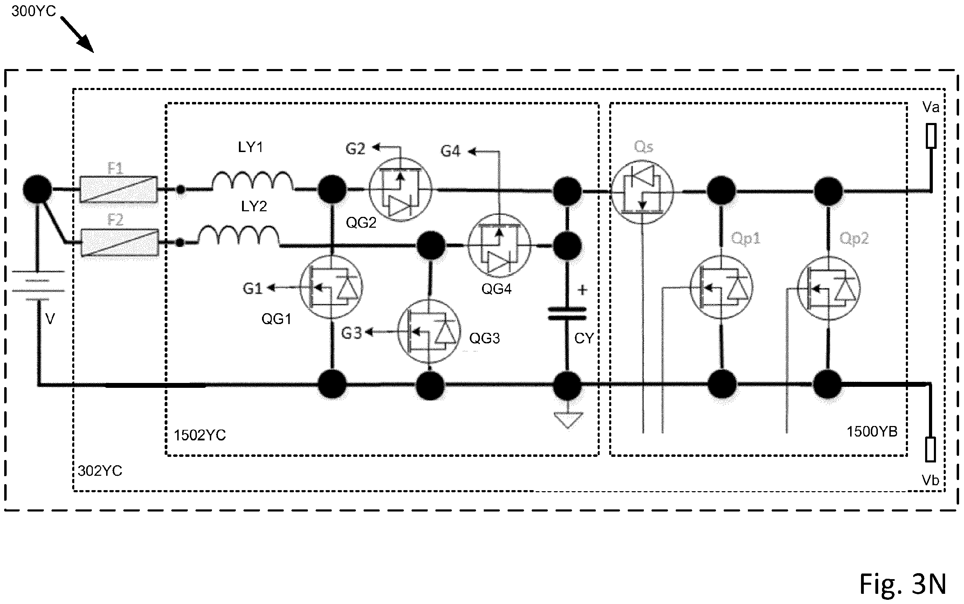

FIG. 3N shows an example battery cell.

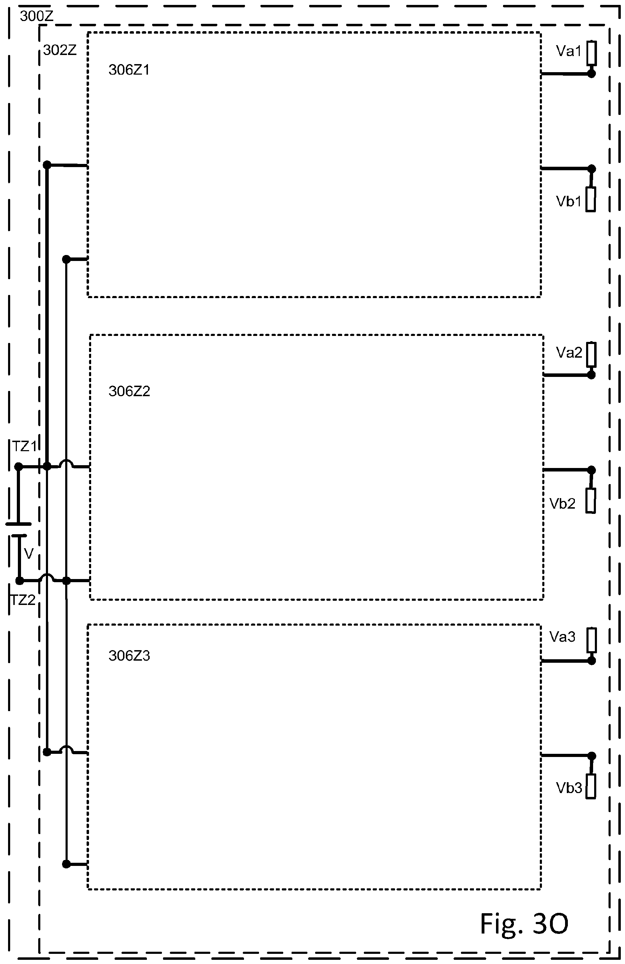

FIG. 3O shows an example battery cell.

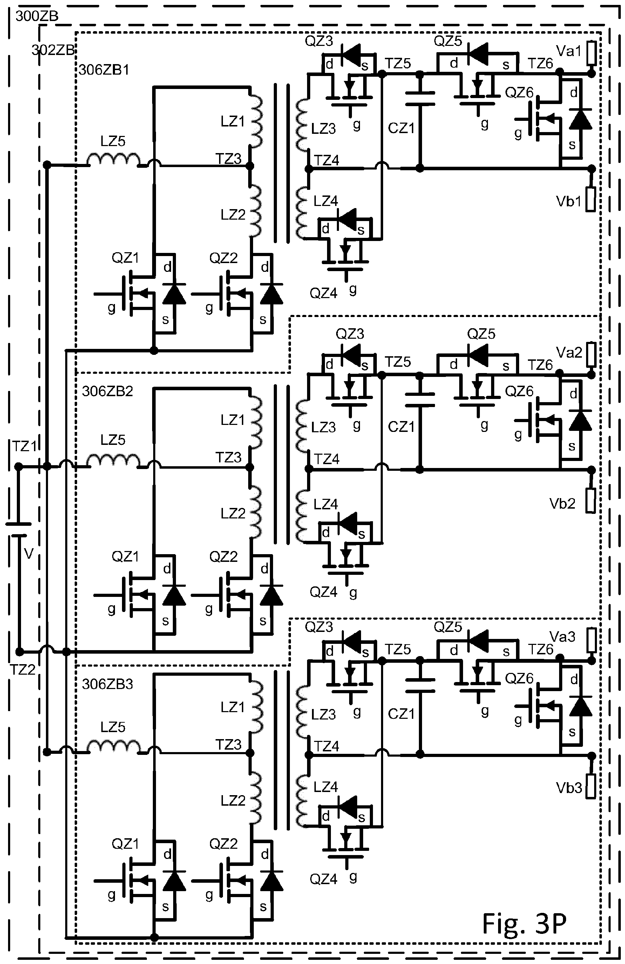

FIG. 3P shows an example battery cell.

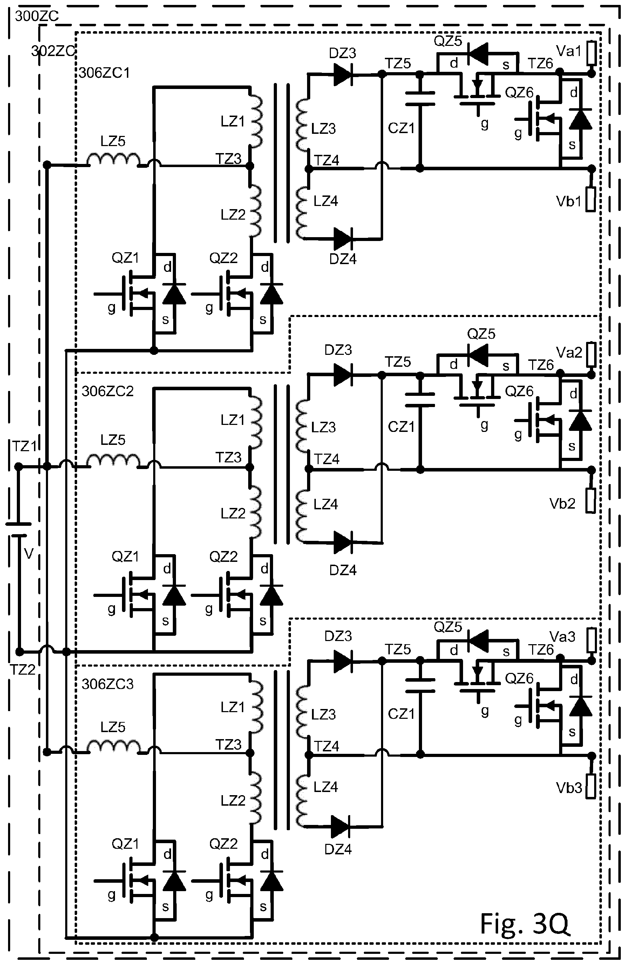

FIG. 3Q shows an example battery cell.

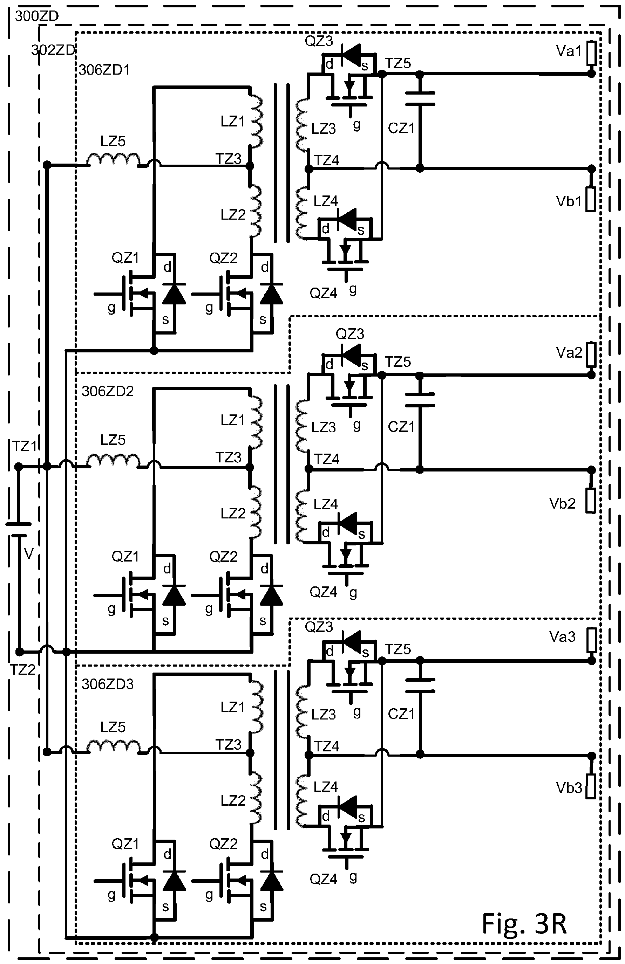

FIG. 3R shows an example battery cell.

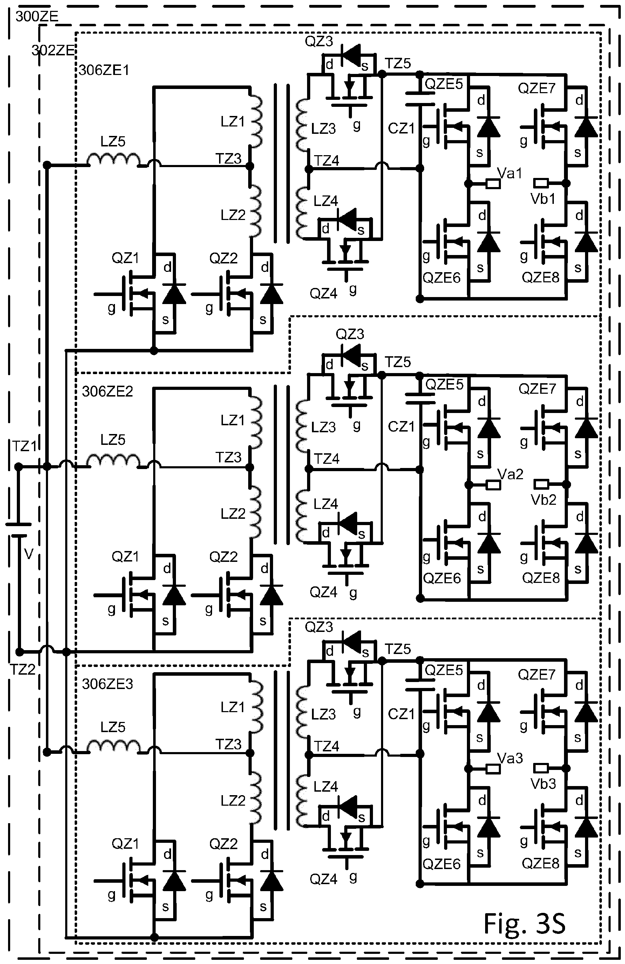

FIG. 3S shows an example battery cell.

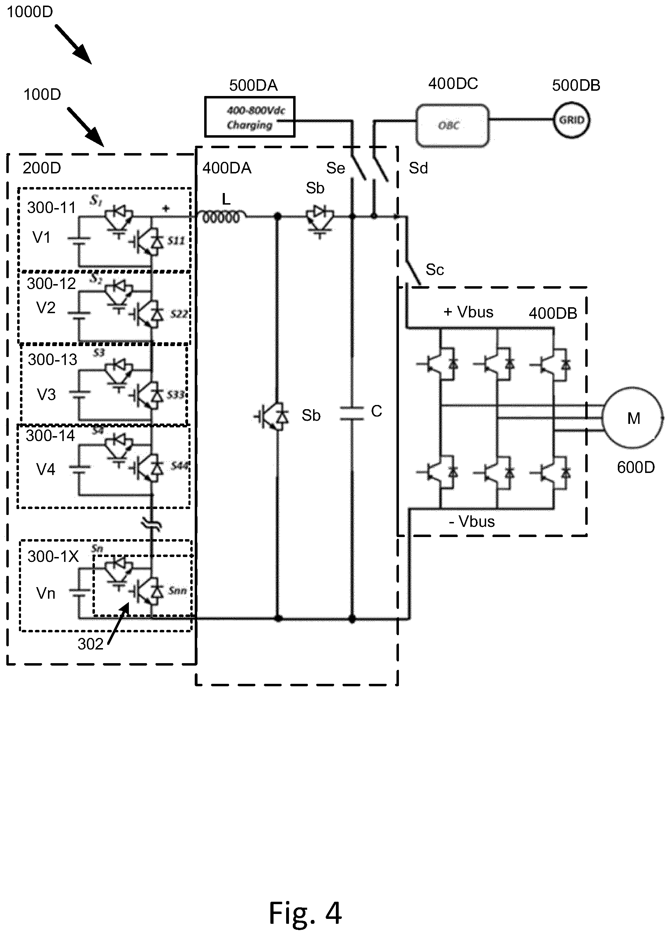

FIG. 4 shows an example power system with 1 battery stack.

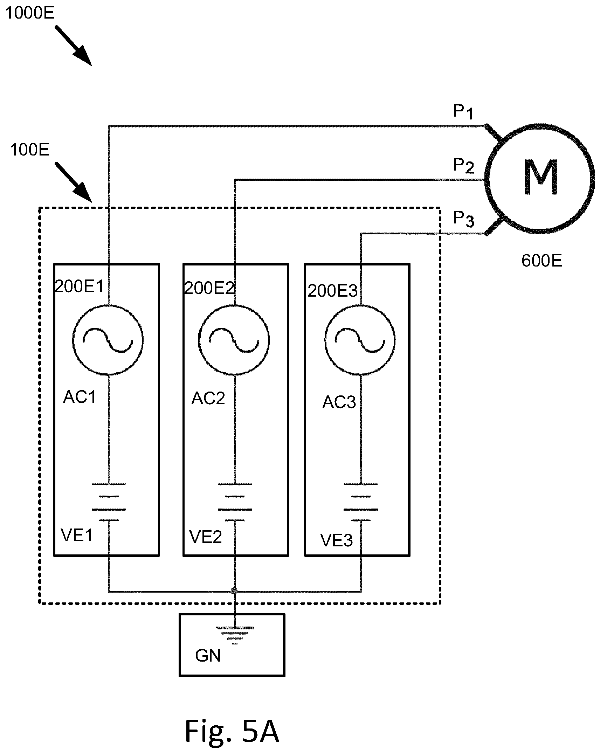

FIG. 5A shows an example power system with a plurality of battery stacks.

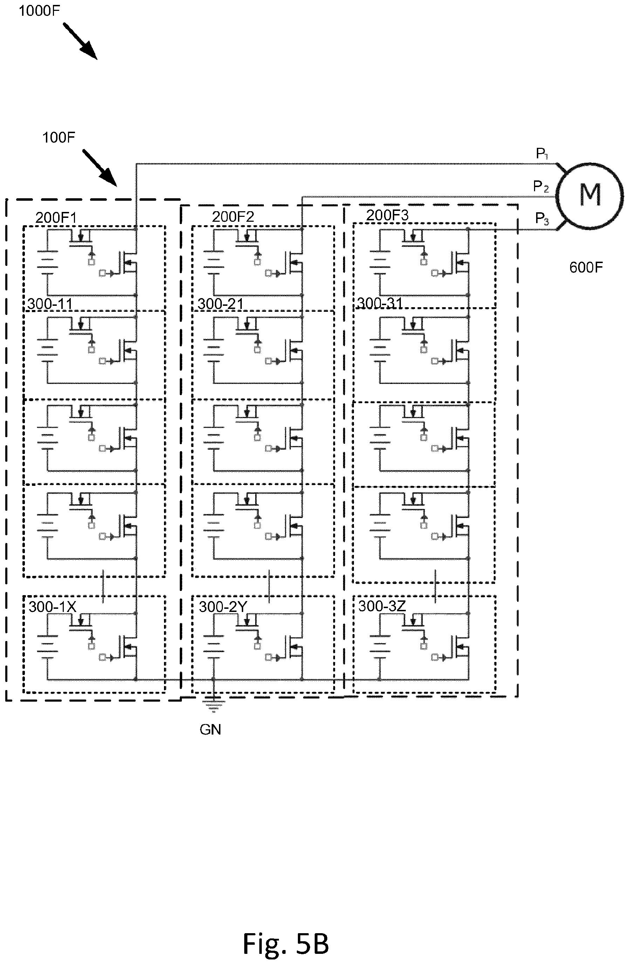

FIG. 5B shows an example power system with a plurality of battery stacks.

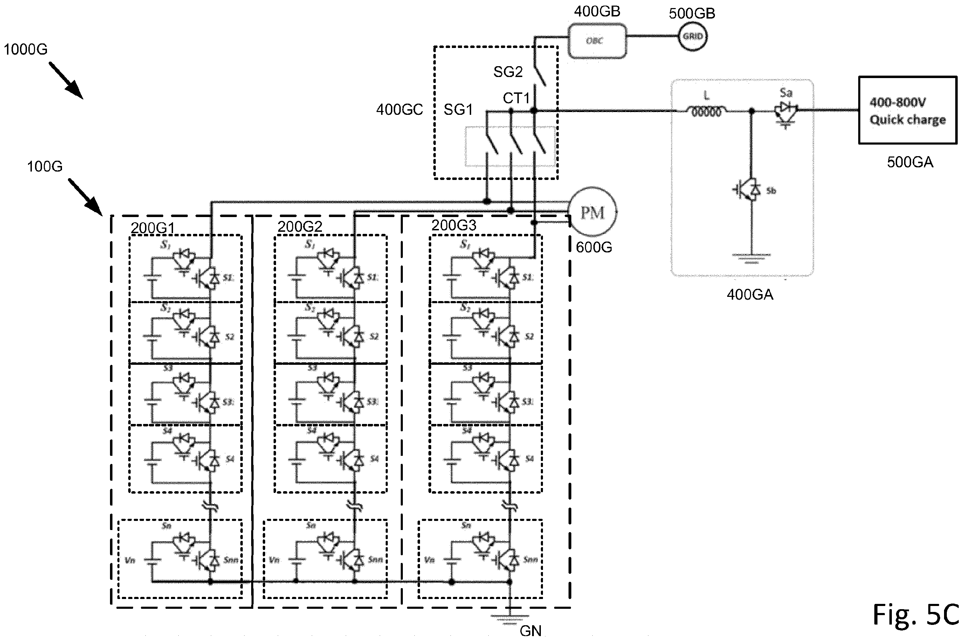

FIG. 5C shows an example power system with additional converter circuitry.

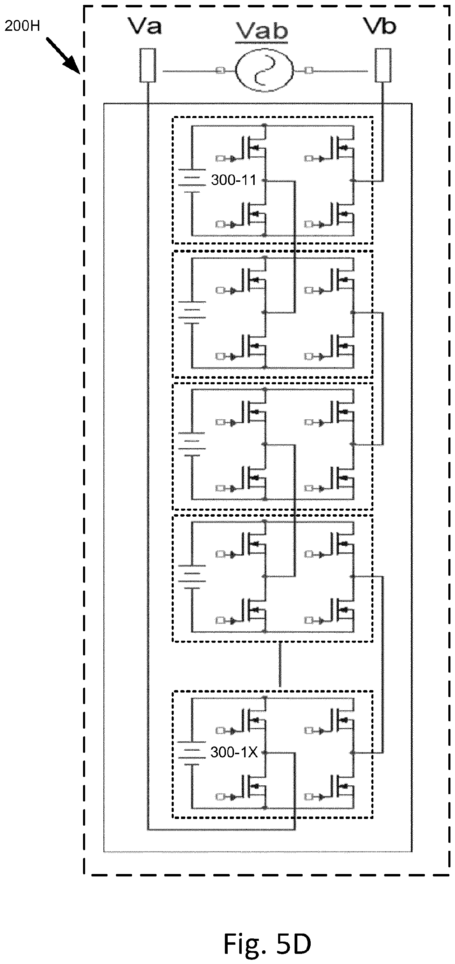

FIG. 5D shows an example battery stack.

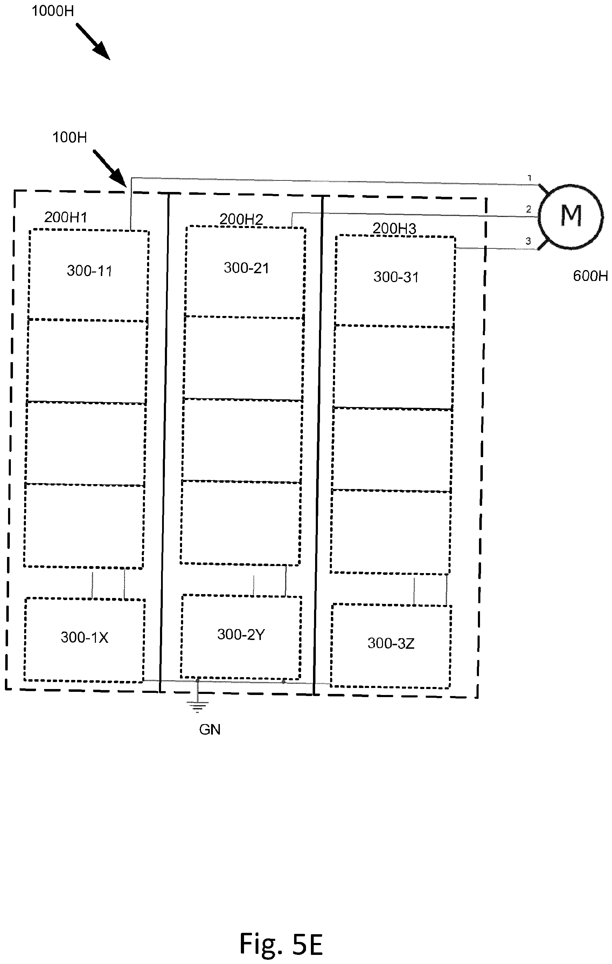

FIG. 5E shows an example power system.

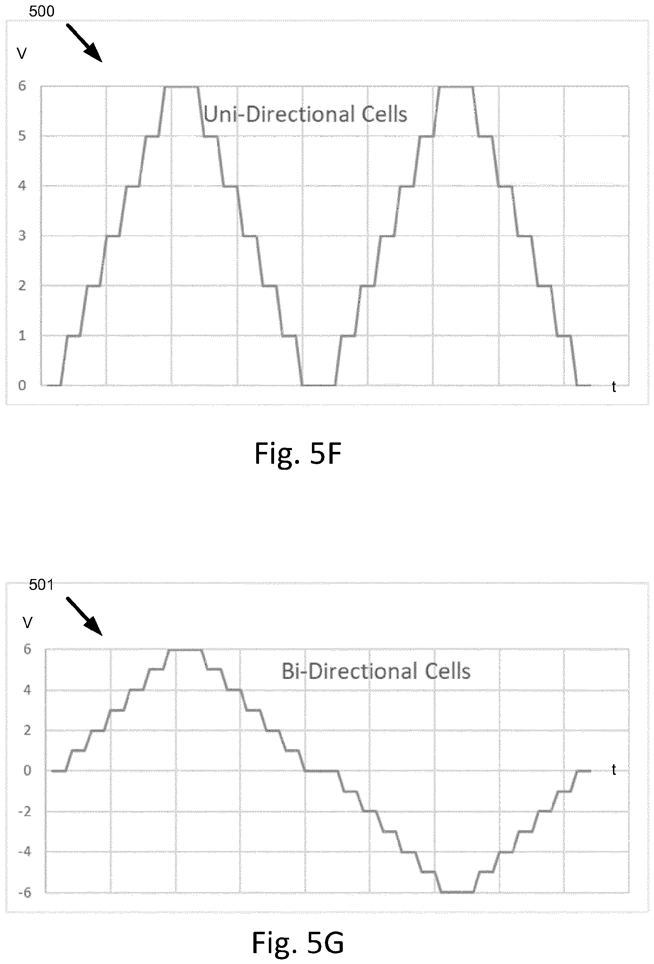

FIG. 5F shows an example graph of voltage as a function of time.
FIG. 5G shows an example graph of voltage as a function of time.

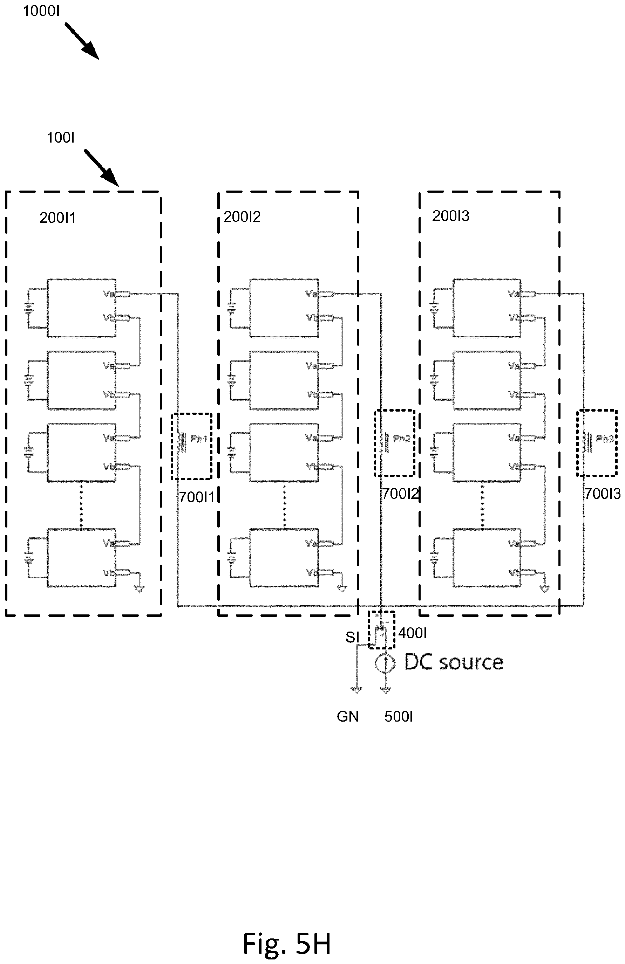

FIG. 5H shows an example power system with a power source switchably connected to the battery stacks via coils of the motor.

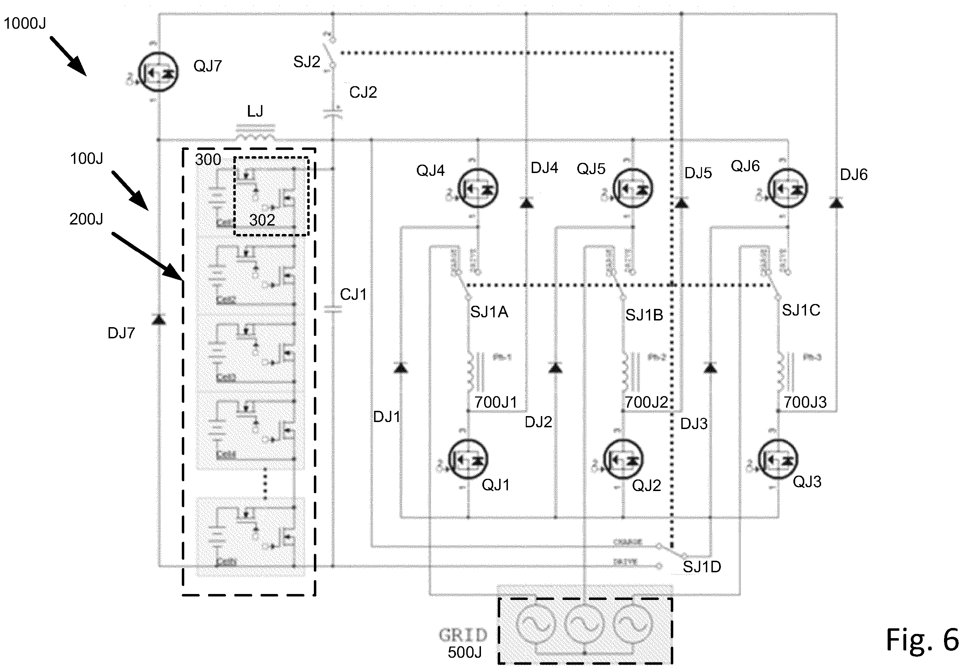

FIG. 6 shows an example power system.

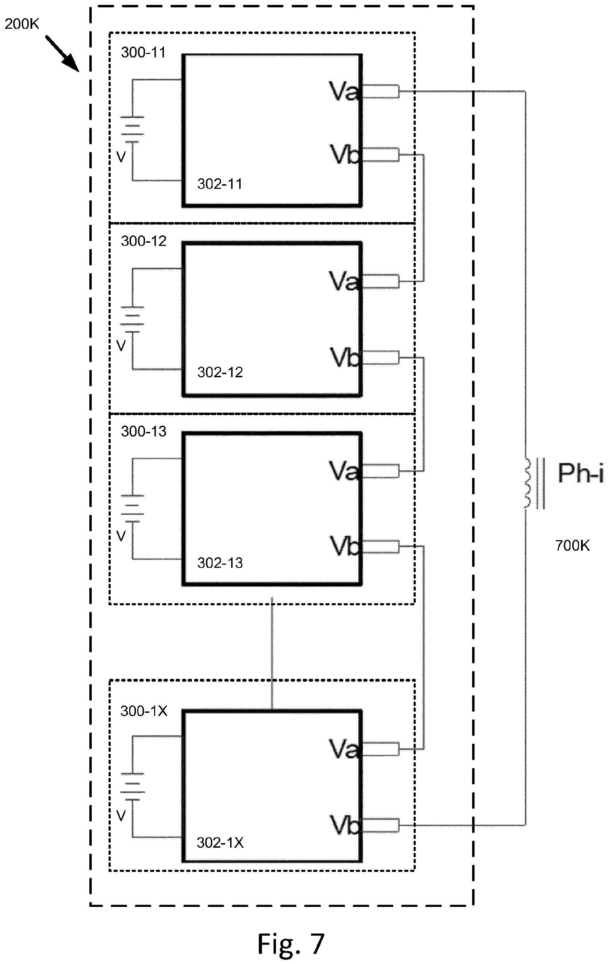

FIG. 7 shows an example battery stack.

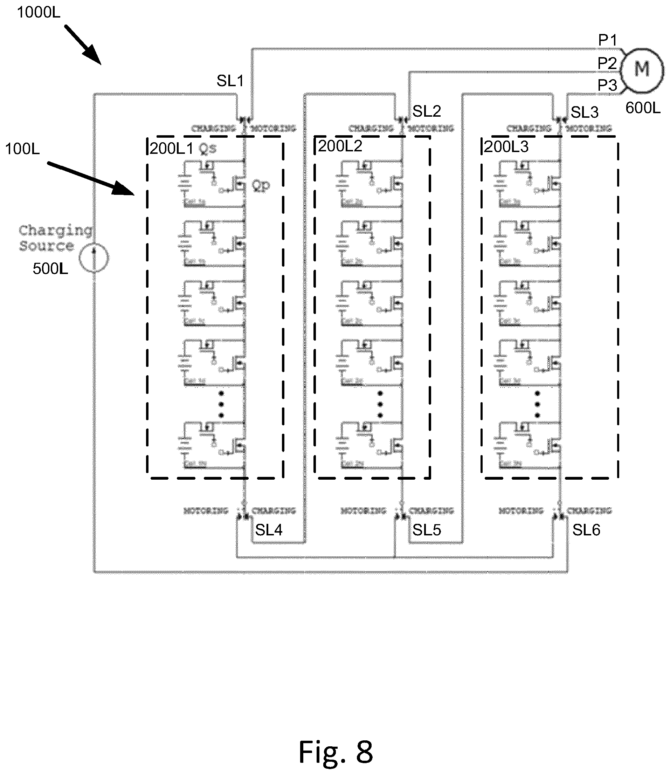

FIG. 8 shows an example power system.

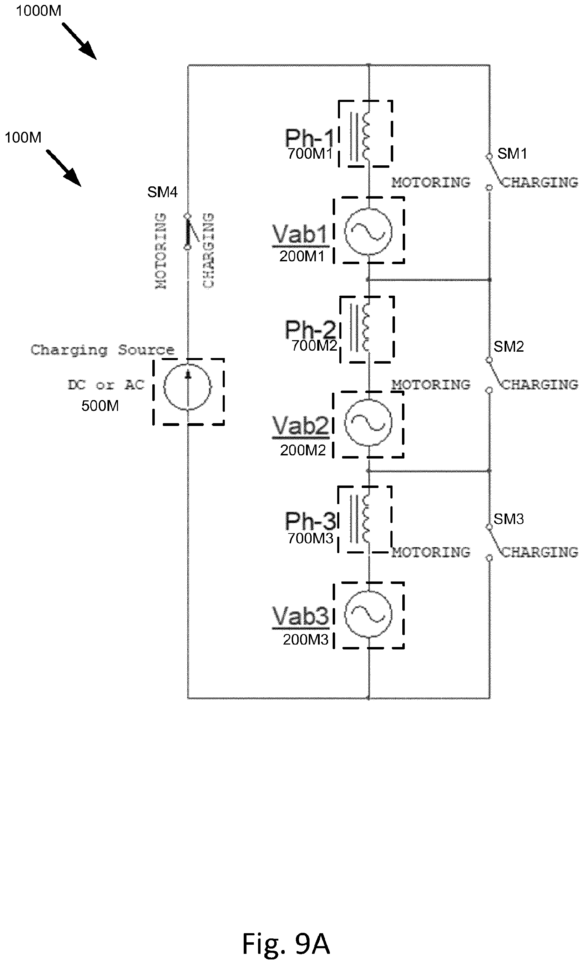

FIG. 9A shows an example power system.

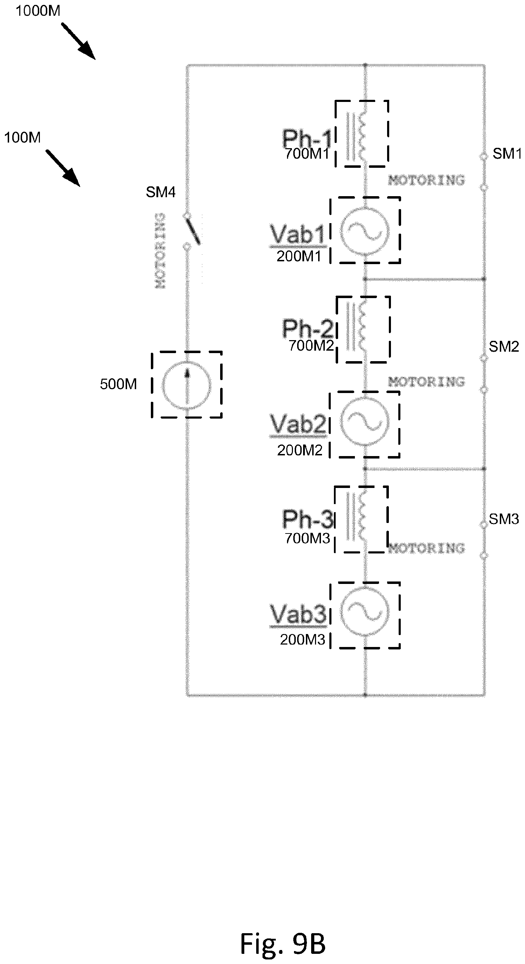

FIG. 9B shows an example power system in a discharge or "motoring" mode of operation.

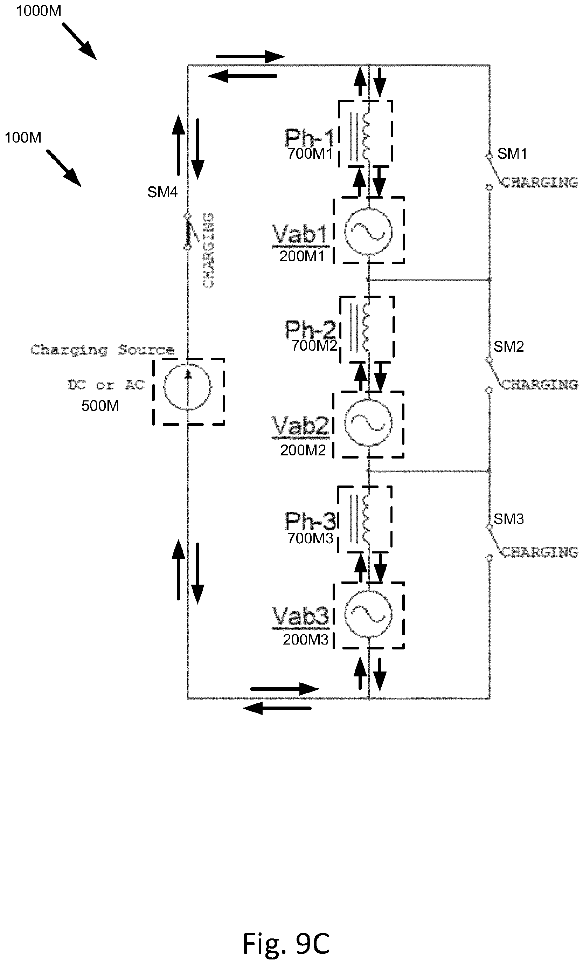

FIG. 9C shows an example power system in a charging mode of operation.

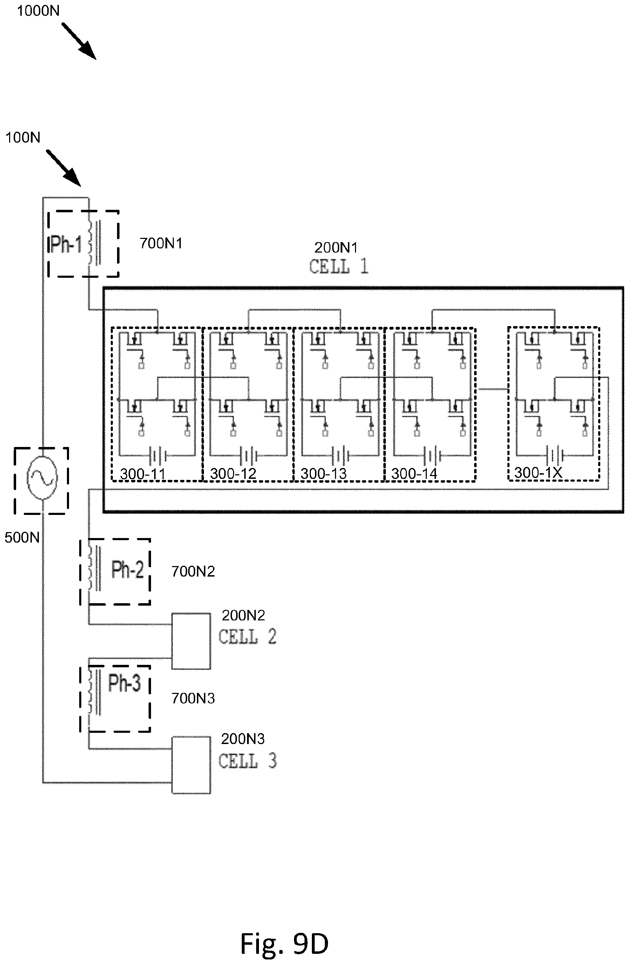

FIG. 9D shows an example power system with a single phase AC power source.

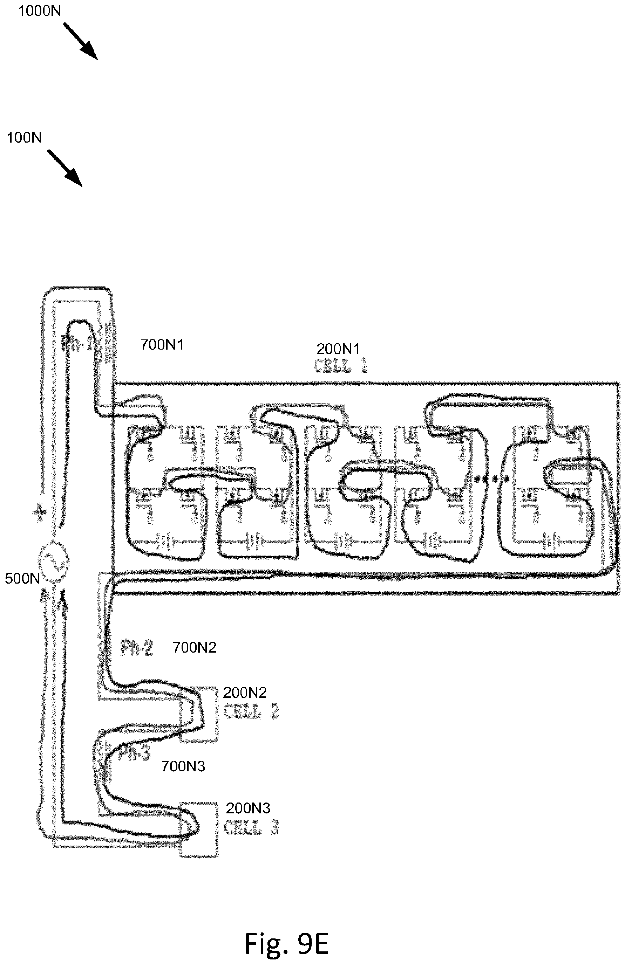

FIG. 9E shows an example power system during a first half cycle.

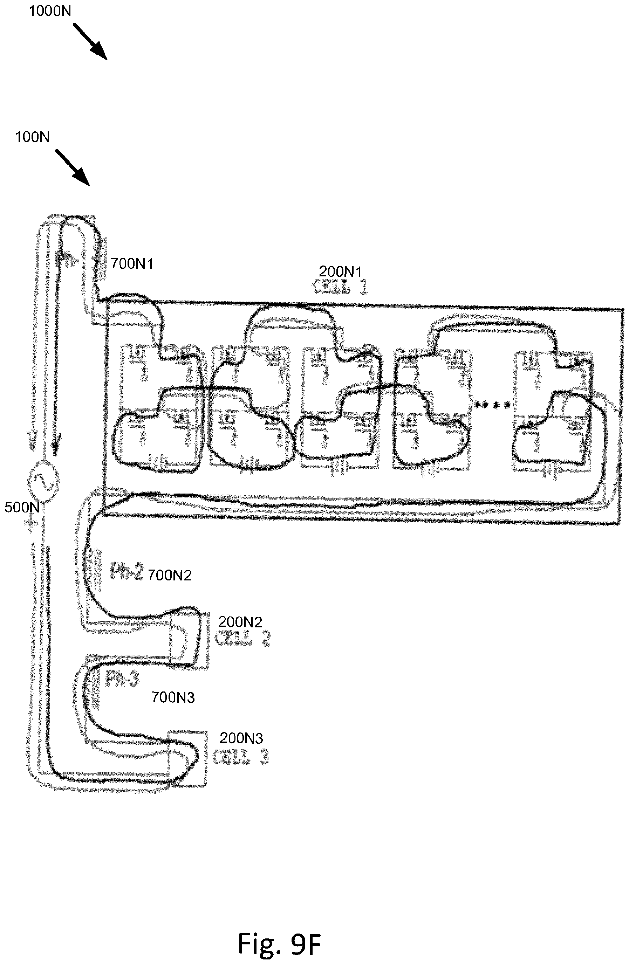

FIG. 9F shows an example power system during a second half cycle.

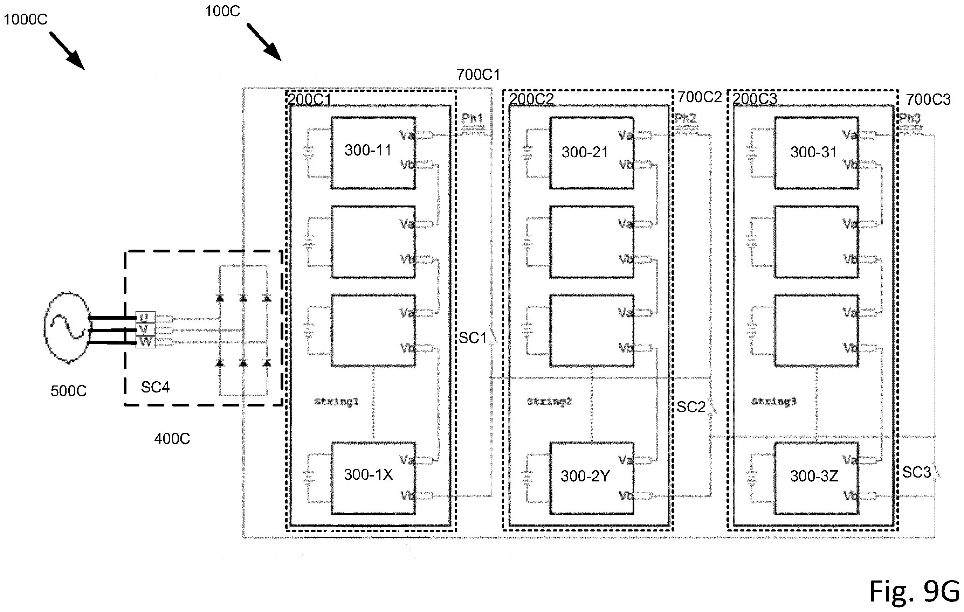

FIG. 9G shows an example power system with 3 phase AC to DC converter circuitry.

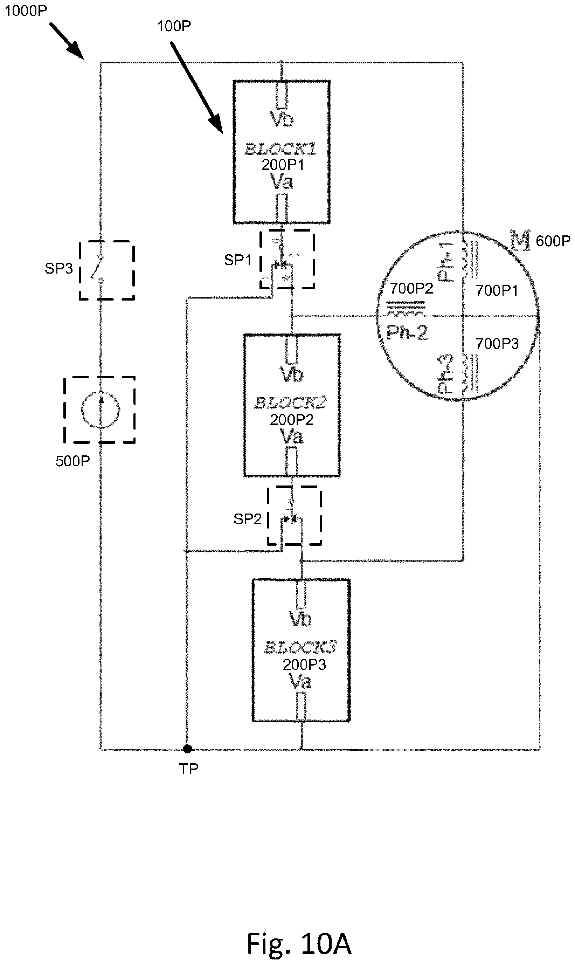

FIG. 10A shows an example power system in a star mode of operation.

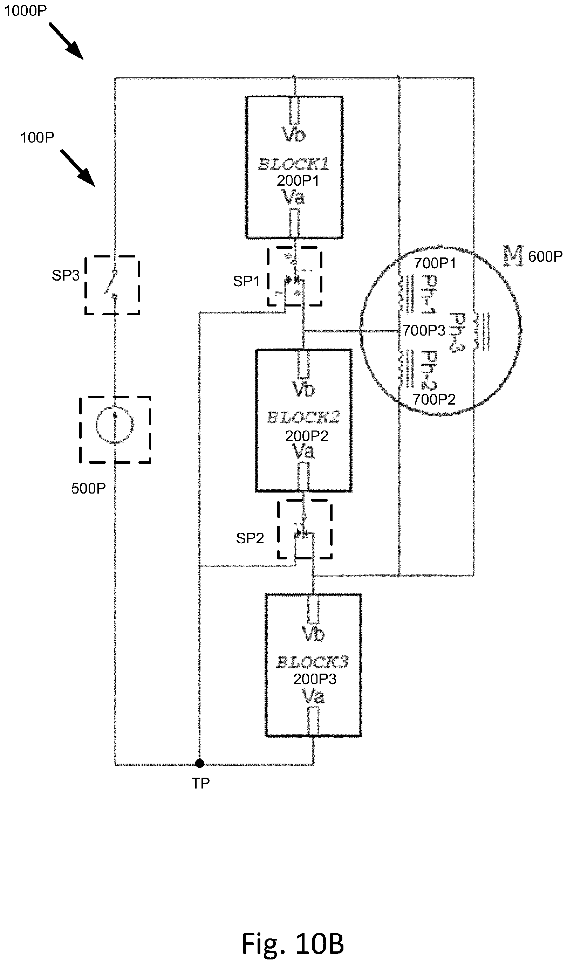

FIG. 10B shows an example power system in a delta mode of operation.

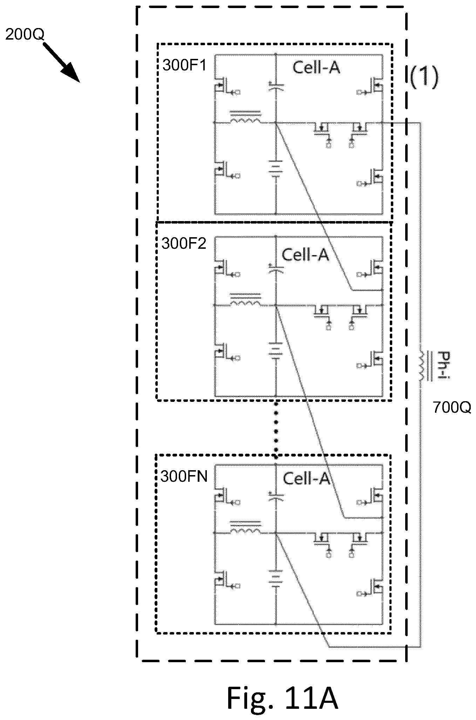

FIG. 11A shows an example battery stack.

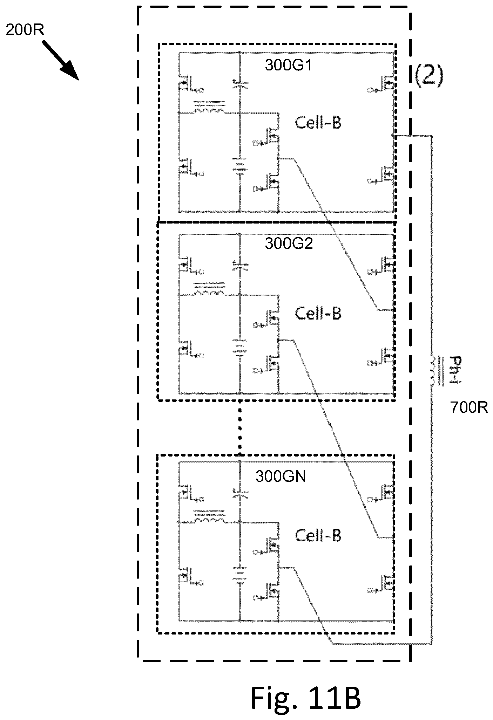

FIG. 11B shows an example battery stack.

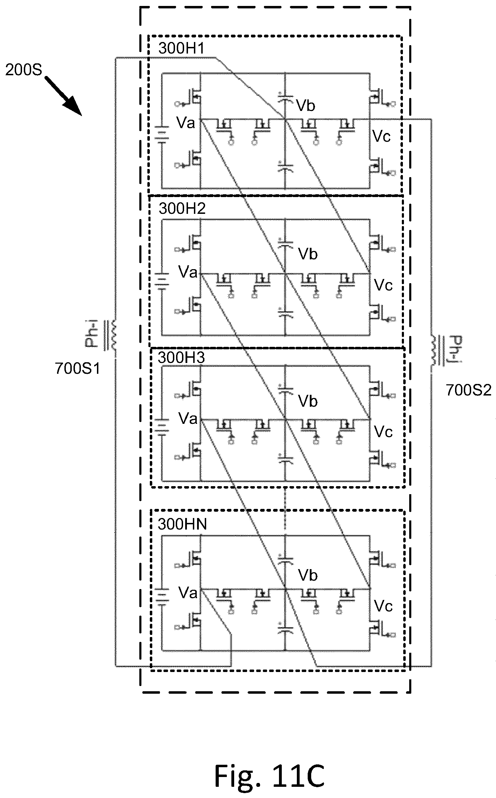

FIG. 11C shows an example battery stack.

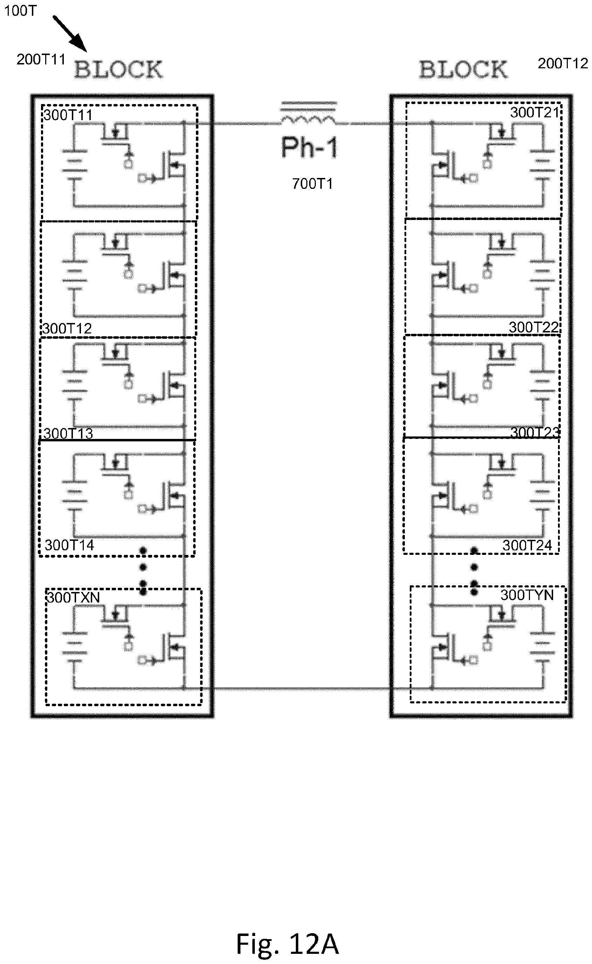

FIG. 12A shows an example pair of battery stacks.

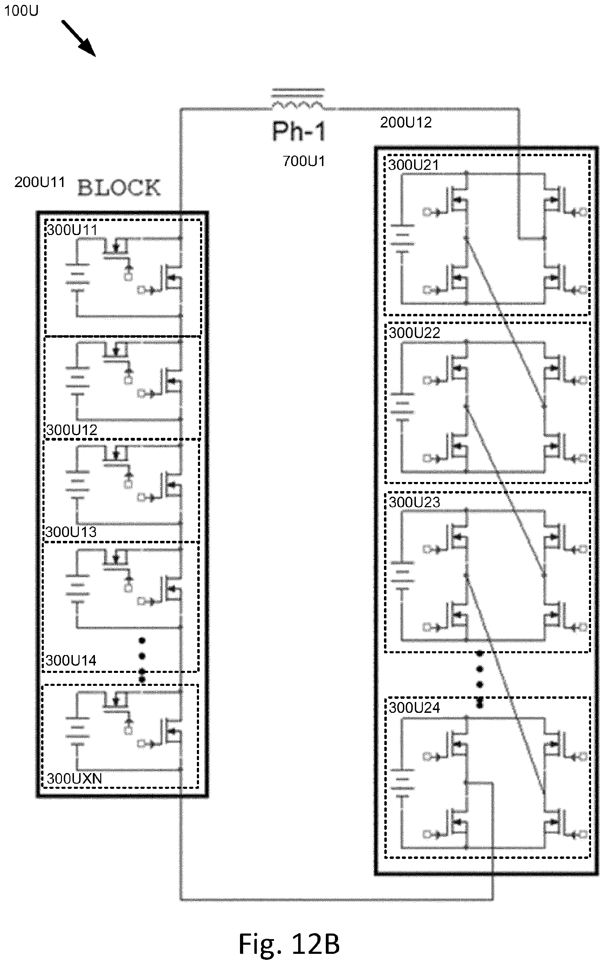

FIG. 12B shows an example pair of battery stacks.

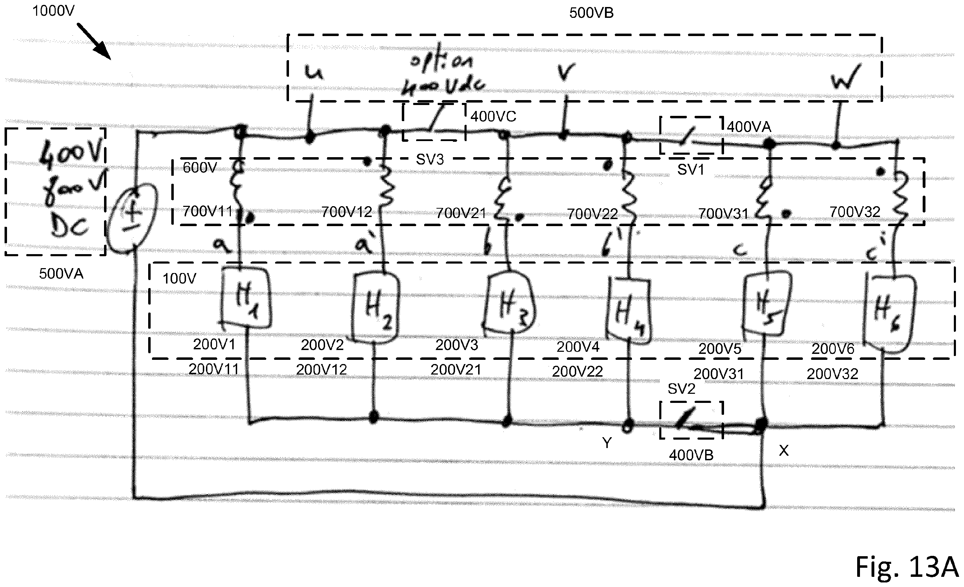

FIG. 13A shows an example power system.

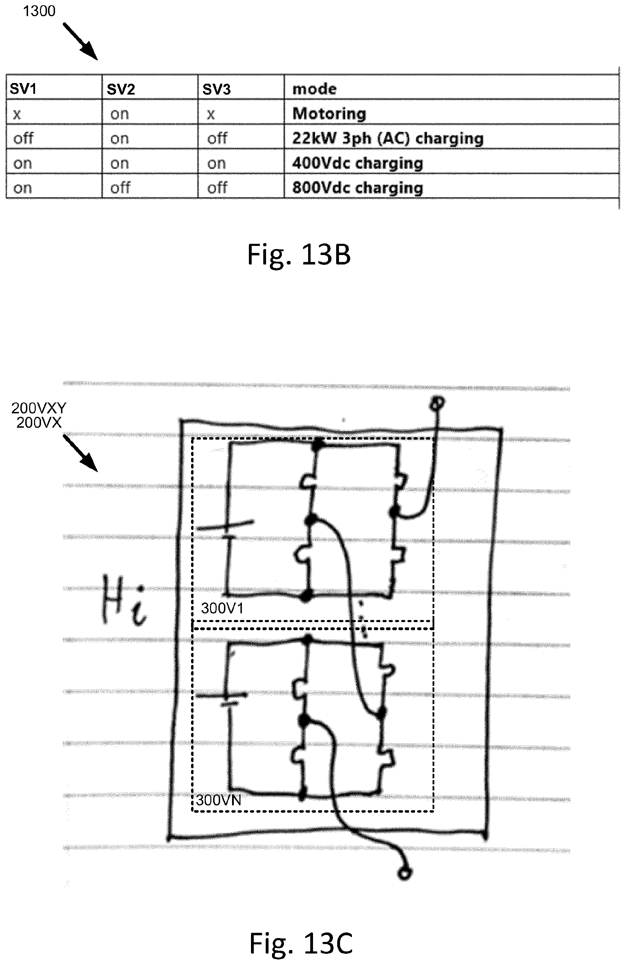

FIG. 13B shows an example chart.
FIG. 13C shows an example battery stack.

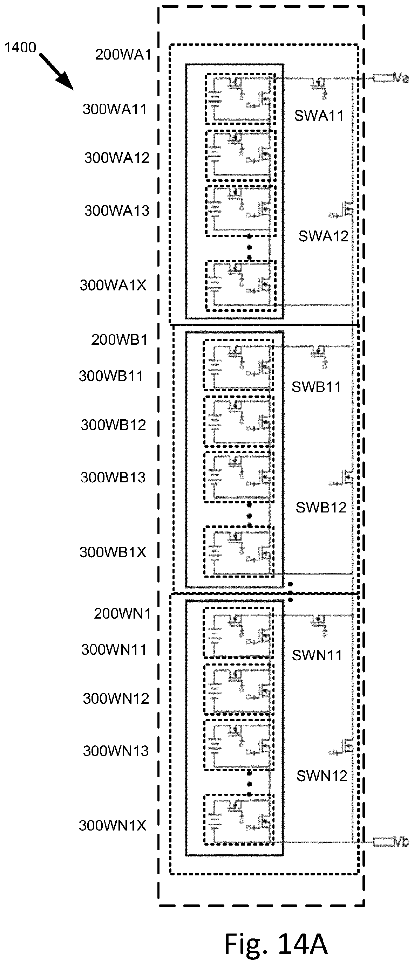

FIG. 14A shows an example battery module.

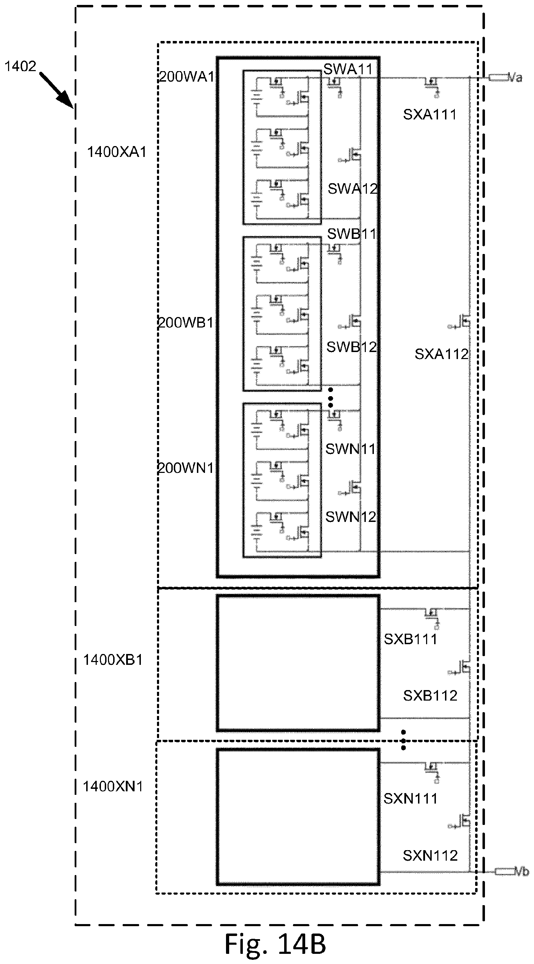

FIG. 14B shows an example battery module.

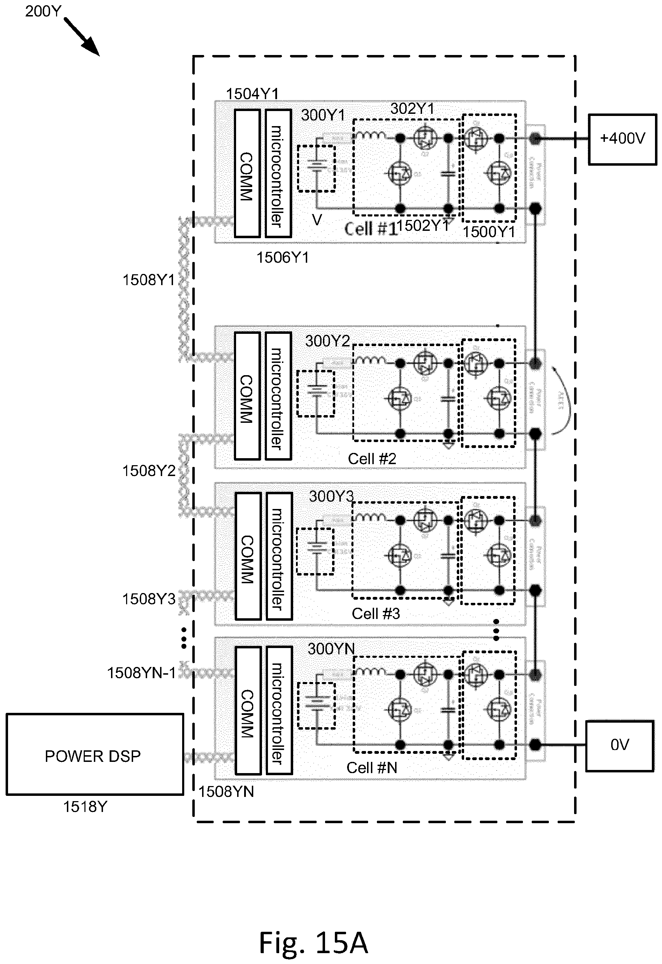

FIG. 15A shows an example power system.

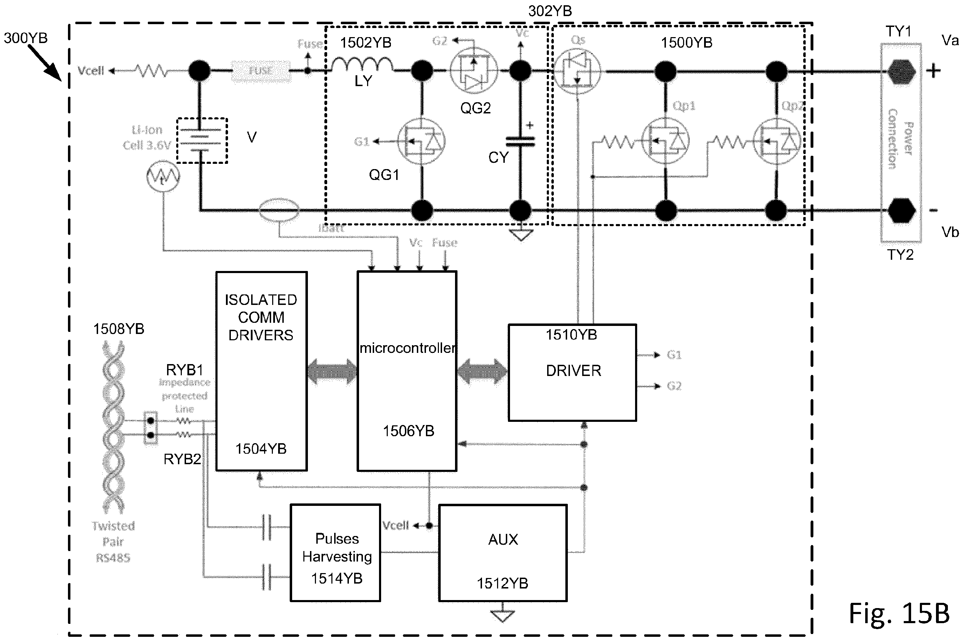

FIG. 15B shows an example battery cell.

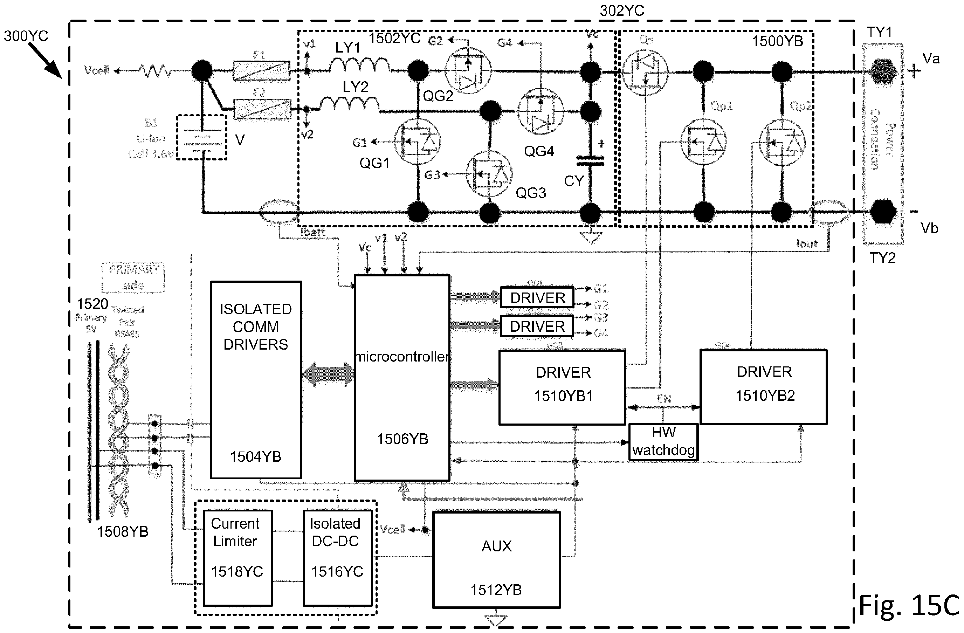

FIG. 15C shows an example battery cell.

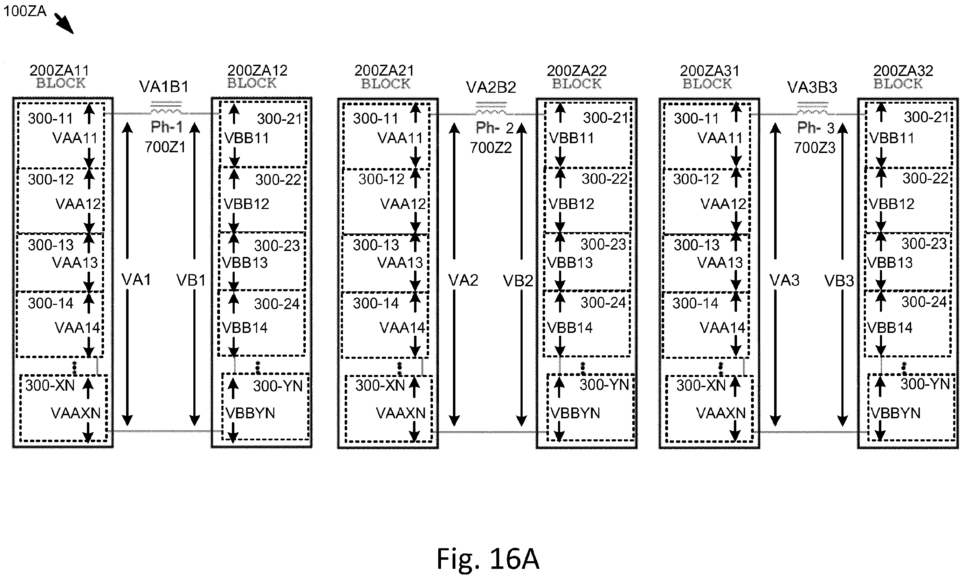

FIG. 16A shows an example charge storage device.

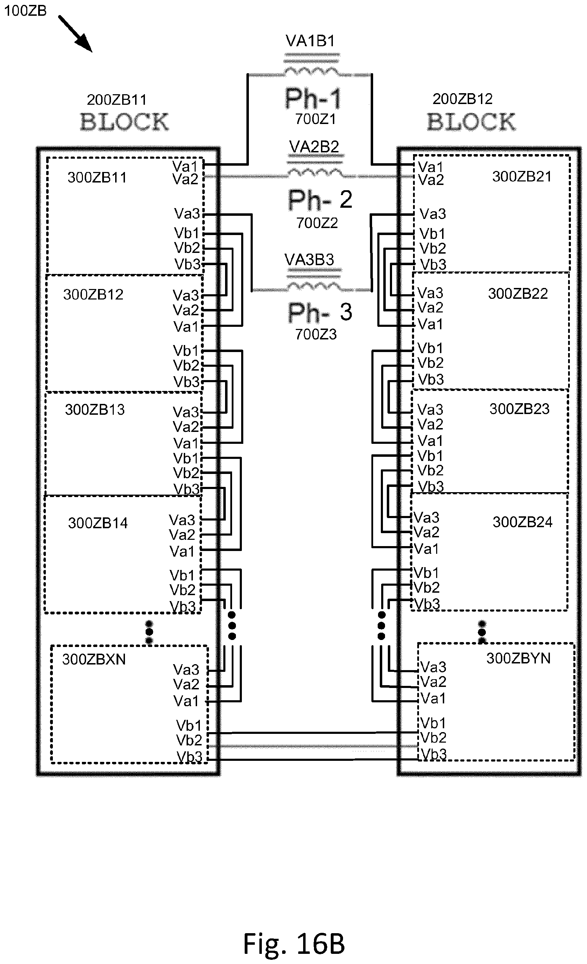

FIG. 16B shows an example charge storage device.

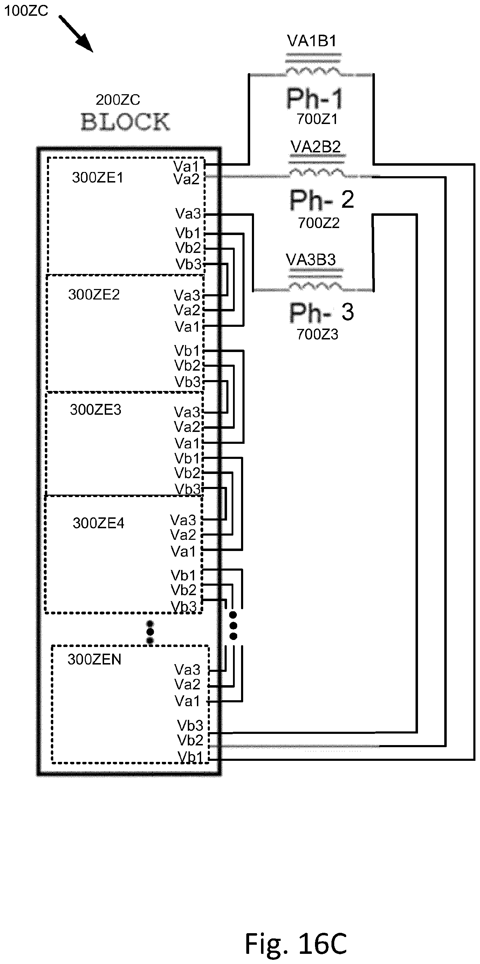

FIG. 16C shows an example charge storage device.

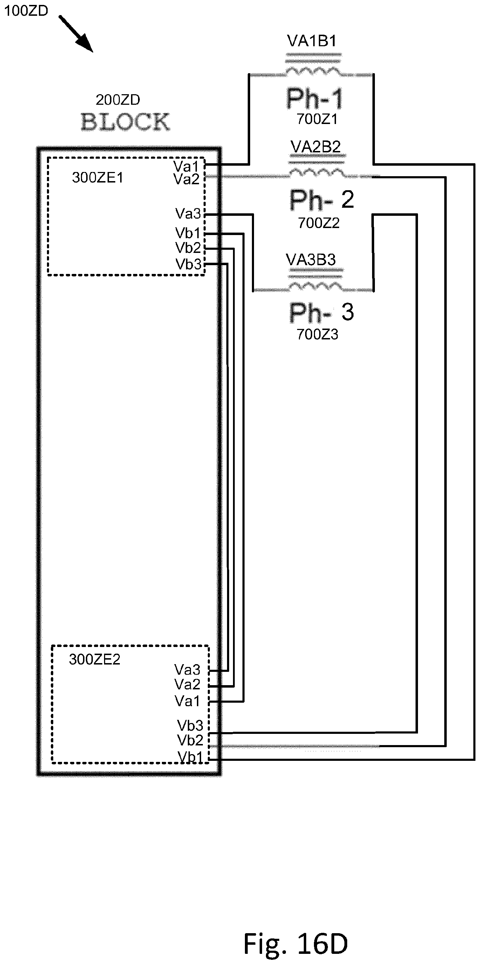

FIG. 16D shows an example charge storage device.

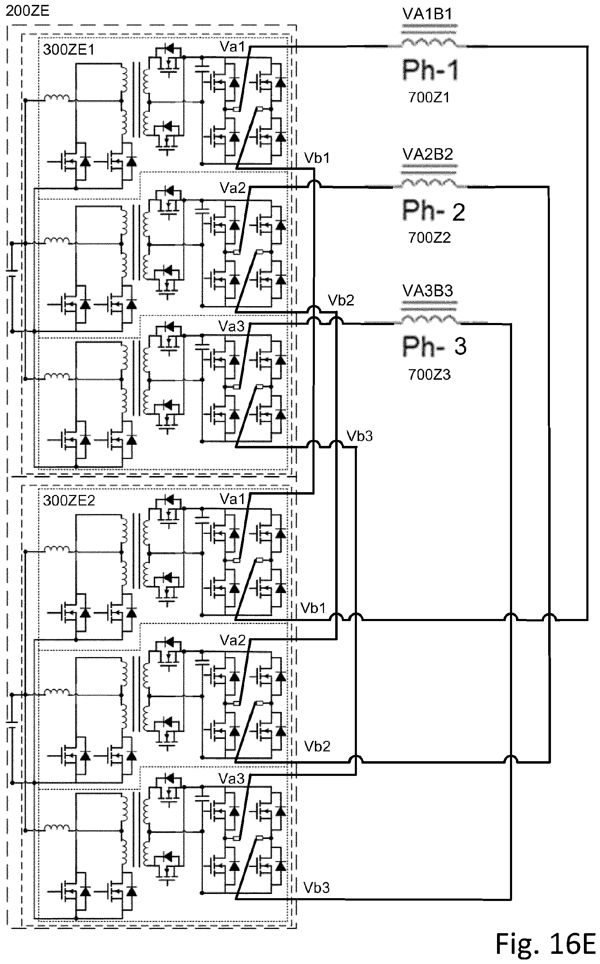

FIG. 16E shows an example battery stack.

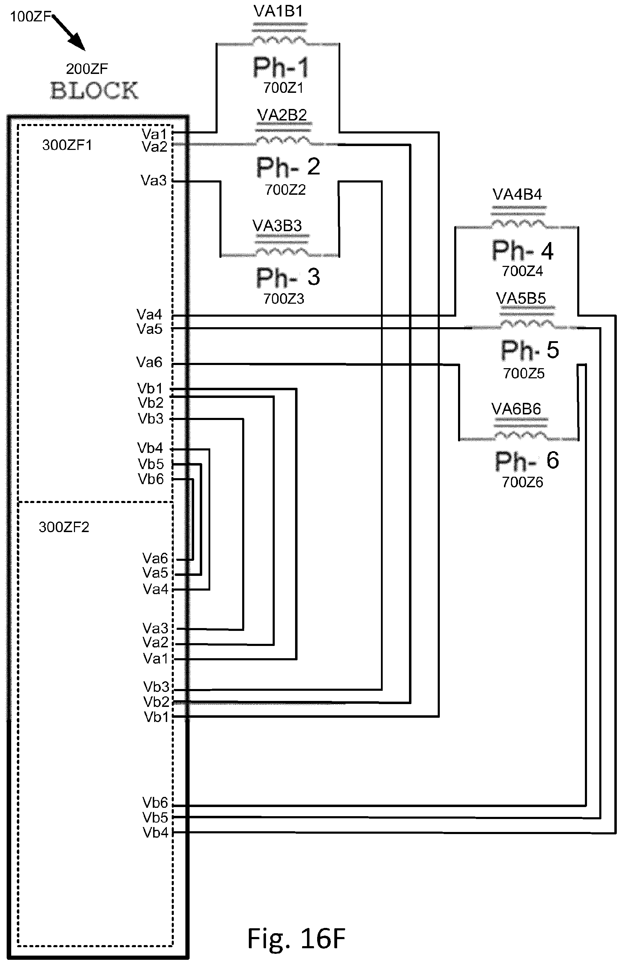

FIG. 16F shows an example charge storage device.

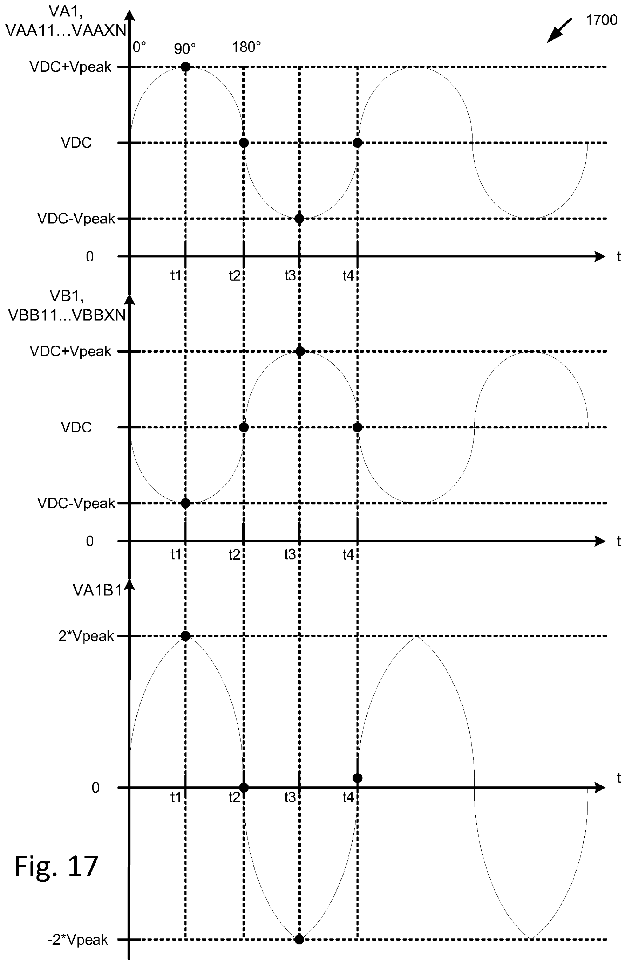

FIG. 17 shows an example graph of voltage as a function of time.

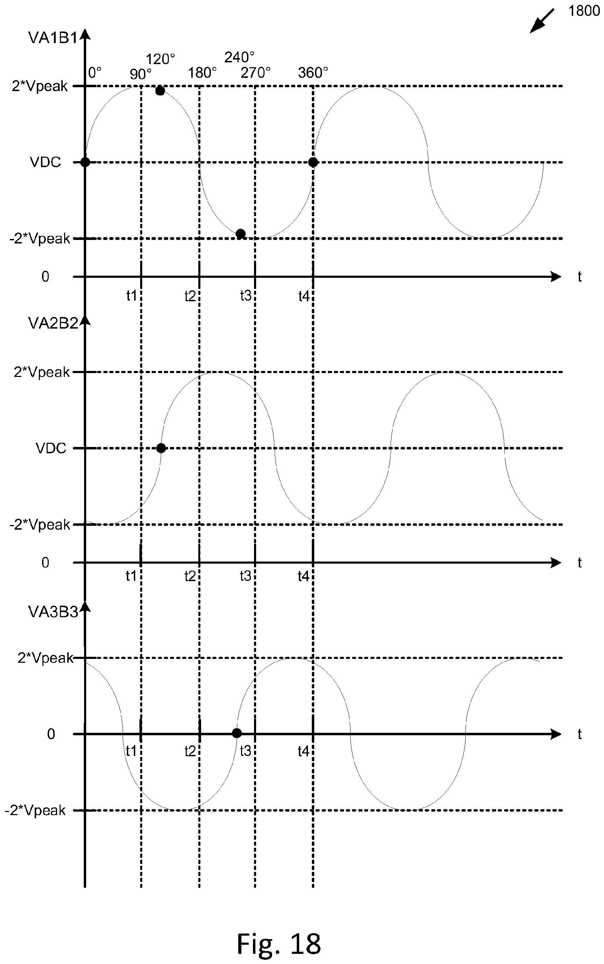

FIG. 18 shows an example graph of voltage as a function of time.

### DETAILED DESCRIPTION

The accompanying drawings, which form a part hereof, show examples of the disclosure. It is to be understood that the examples shown in the drawings and/or discussed herein are non-exclusive and that there are other examples of how the disclosure may be practiced.

Systems, apparatuses, and methods are described herein for charge storage devices with a plurality of battery cells. In some examples, the plurality of battery cells may be serially connected to each other in one or more battery stacks. In some examples, the plurality of battery cells may be connected to one or more coils of a motor of an electric vehicle.

In some examples a plurality of battery stacks may be configured to produce an alternating current (AC) voltage across a load (e.g., a coil of an EV motor). For example, a first battery stack connected to a first terminal of the load may be controlled to produce a first AC voltage having a first phase, a first amplitude, and a first DC offset voltage. A second battery stack connected to a second terminal of the load may be controlled to produce a second AC voltage having a second phase, a second amplitude, and a second DC offset voltage. The first amplitude may be substantially equal to the first amplitude. The first DC offset voltage may be substantially equal to the second DC offset voltage. The first phase may have an about 180 degree difference with the second phase. A third AC voltage, which may be the combination of the first AC voltage and the second AC voltage, may be produced across the load. The third AC voltage may have a third phase, a third amplitude, and substantially no DC offset voltage. The third amplitude may be substantially equal to double the first amplitude, or double the second amplitude (since the first amplitude may be substantially equal to the second amplitude, and the third amplitude may be the sum of the first amplitude and the second amplitude). The third phase may be substantially equal to the first phase. The third AC voltage may have substantially no DC offset voltage since the combination of the first AC voltage and the second AC voltage may cancel out the DC offset of the first voltage and the DC offset of the second voltage (since the first voltage and the second voltage may be out of phase with each other). The first phase and the second phase may be anti-phases, or opposite phases, about 180 degrees opposite from one another. The produced third AC voltage across the load may be the first AC voltage produced by the first battery stack combined with the second AC voltage produced by the second battery stack. In some examples there may be a plurality of loads. The plurality of loads may each be connected to a respective plurality of battery stacks. For example, there may be three loads (e.g., three coils of an EV motor). There may be a pair of battery stacks connected to each load. The AC voltage produced by each pair of battery stacks across the different loads may have a 120 degree phase difference with each other, thereby providing three-phase AC voltage to the three loads.

In some examples, a plurality of battery stacks may be connected to a plurality of loads (e.g., a plurality of coils of an EV motor). For example, a pair of battery stacks may be connected to three loads. In some instances, each battery stack may be connected to different terminals of the different loads. Each battery cell of the battery stacks may have a plurality of connection terminals. Each battery cell may have a plurality of connection terminals that are connected to another battery cell of the battery stack of that battery cell. For one of the battery cells of each battery stack, a plurality of the connection terminals may be connected to a different load of the plurality of loads. For one of the battery cells of each battery stack, a plurality of the connection terminals may be connected to a battery cell of a different battery stack. In the example there are three loads (e.g., three coils of an EV motor), one of the battery cells of each battery stack may have three connection terminals that are connected to a respective terminal of a respective coil of the three coils. One of the battery cells of each battery stack may have three connection terminals that are connected to three respective connection terminals of the other battery stack (thereby connecting the two battery stacks to each other using a plurality of connection terminals on one end and to opposite terminals of each load using respective connection terminals on their other ends). Each battery cell of each battery stack may have three connection terminals that are connected to another battery cell of that battery stack. Additionally, each of the battery cells of a battery stack may be connected in series using at least three connection terminals of a given battery cell (thereby connecting each battery cell of the battery stack to another battery cell of the battery stack using a plurality of connection terminals).

In some examples, a single battery stack may be connected to a plurality of loads (e.g., a plurality of coils of an EV motor). For instance, a single battery stack may be connected to three loads. Moreover, each battery cell of the battery stack may have a plurality of connection terminals andthe battery stack may have two or more battery cells. Each battery cell may have a single electrochemical cell connected to a plurality of converter circuits, each having a plurality of connection terminals. Each battery cell may have a plurality of connection terminals that are connected to another battery cell of the battery stack. In a case where there are three loads (e.g., three coils of an EV motor), one of the battery cells of the battery stack may have three connection terminals that are connected to a respective terminal of a respective coil of the three coils. Another one of the battery cells of the battery stack may have three connection terminals that are connected to three different respective terminals of each load. Each battery cell of the battery stack may have three connection terminals that are connected to another battery cell of the battery stack. For example, each of the battery cells of a battery stack may be connected in series using at least three connection terminals of a given battery cell (thereby connecting each battery cell of the battery stack to another battery cell of the battery stack using a plurality of connection terminals).

It is noted that the teachings of the presently disclosed subject matter are not bound by the systems and apparatuses described with reference to the figures. Equivalent and/or modified functionality may be consolidated or divided in another manner and may be implemented in any appropriate combination. For example, elements which are shown as separate units, may have their functionalities and/or components combined into a single unit.

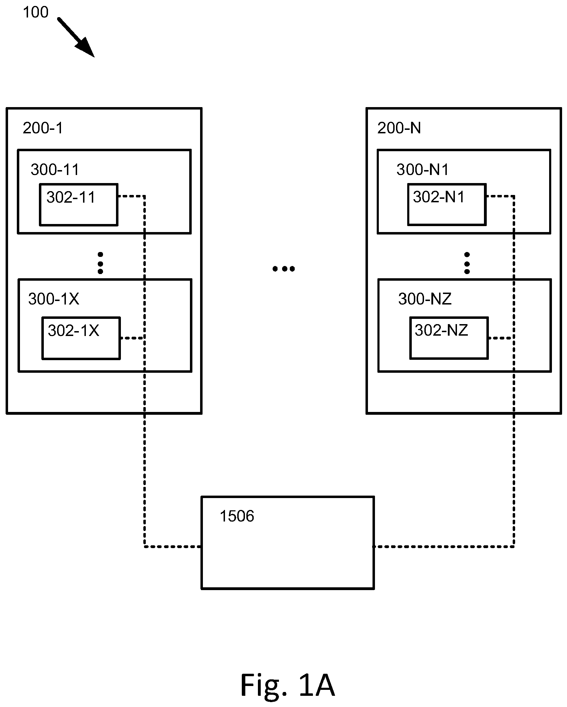

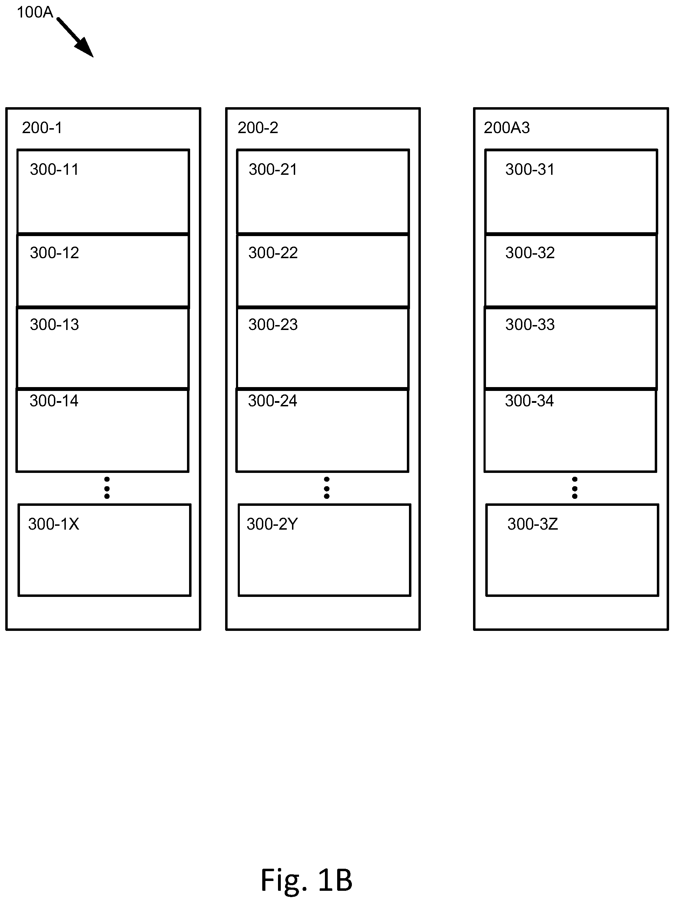

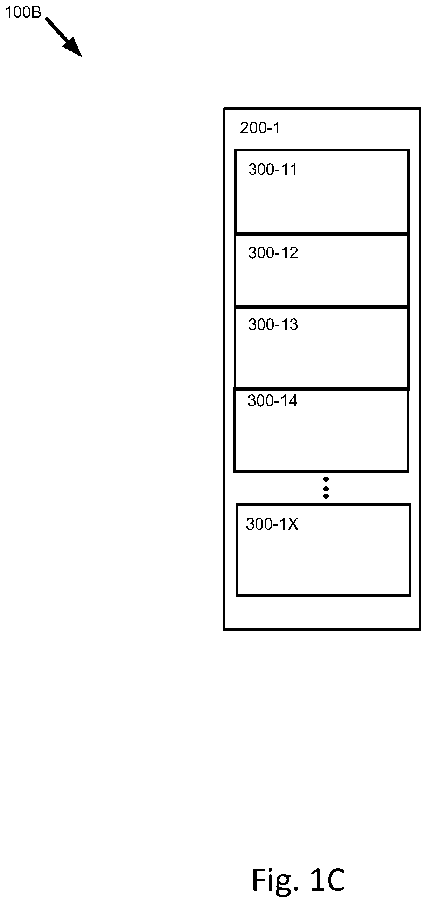

It is also noted that like references in the various figures may refer to like elements throughout the application. Similar reference numbers may also connote similarities between elements. For example, it is to be understood that charge storage device 100 shown in Fig. 1 may be similar to, or the same as, other charge storage devices described and shown herein, and vice versa. Throughout the application certain general references may be used to refer to any of the specific related elements. For example, charge storage device 100 may refer to any of the various charge storage devices (e.g., 100A, 100B, etc.), battery stack 200 may refer to any of the various battery stacks (e.g., 200A), battery cell 300 may refer to any of the various battery cells (e.g., 300A, 300B, etc.), etc. Additionally, references may be indexed with an integer appended to the reference (e.g., 200-1, 200-2; 300-11, 300-1X, 300-N1, 300-NZ; 300A1, 300A2; etc.), which indicates that the referenced element is one of multiple like elements (e.g., multiple battery stacks 200; multiple battery cells 300A, etc.).

It is also noted that all numerical values given in the examples of the description are provided for purposes of example only and do not exclude the use of other numerical values for same feature.

The terms "substantially" and "about" are used herein to indicate variations that are equivalent for an intended purpose or function (e.g., within a permissible variation range). Certain values or ranges of values are presented herein with numerical values being preceded by the terms "substantially" and "about". The terms "substantially" and "about" are used herein to provide literal support for the exact number that it precedes, as well as a number that is near to or approximately the number that the term precedes. In determining whether a number is near to or approximately a specifically recited number, the near or approximating un-recited number may be a number, which, in the context in which it is presented, provides a substantial equivalent of the specifically recited number.

Control devices, including "controller," "controller circuitry," "computer," "processor," "processing circuitry," and variations of these terms as used herein, include any analog or digital electronic hardware circuit capable of performing one or more logical or arithmetic functions. The functions may be based on a received signal (e.g., from a sensor that measures a physical parameter as in the various example described herein). Performance of the functions may cause an output of a signal (e.g., to control another device such as a switch or to provide an indication as in the various examples described herein). Such control devices include, by way of non-limiting examples, a digital signal processor (DSP), microprocessor, microcontroller, field programmable gate array (FPGA), application-specific integrated circuit (ASIC), embedded controller, analog comparator, analog-to-digital controller, digital-to-analog controller, etc., or combinations thereof. Such control devices may include or be connected to a memory that store instructions that may be read, interpreted and executed by the devices, and based on the executed instructions, perform any one of functions or control as described herein. The terms "memory" or "data storage device" used herein include any volatile or non-volatile computer memory suitable to the presently disclosed subject matter (e.g., random-access memory [RAM], static random-access memory [SRAM], read-only memory [ROM], erasable programmable read-only memory [EPROM], electrically erasable programmable read-only memory [EEPROM], dynamic random-access memory [DRAM], etc.). The above may include any of the controller circuitry disclosed herein. More specifically, by way of non-limiting example, the above may include the controller circuitry 1506 disclosed in the present application. Other battery cells 300 shown and described herein may also include one or more controllers. Control devices may be included or connected to interface hardware, that converts signals from other devices (e.g., sensors) to signals compatible with the control device (e.g., a comparator or analog to digital [A/D] converter that converts an analog signal to a digital signal), or that converts signals from the control device to signals compatible with another device (e.g., an amplifier for driving a control input of a switch). The controller may be configured to output control signals to control an operational state (e.g., ON, OFF, opened, closed, etc.) of one or more switches.

The term "switch" used herein may refer to any appropriate switching element that may be switched in a non-permanent fashion. Examples of switches are (but not limited to): a transistor, a field effect transistor (FET), a metal oxide semiconductor field-effect transistor (MOSFET), a bipolar junction transistor (BJT), an insulated-gate bipolar transistor (IGBT), a Silicon Carbide (SiC) switch, a Gallium Nitride (GaN) switch, a thyristor, a semiconductor controlled rectifier (SCR), a solid state relay (SSR), electromechanical relays, AC relays, throw switches, etc. The switch may be single throw, double throw, etc. Switches may be controlled into different states (e.g., ON, OFF) via a control input (e.g., gate, base, coil terminals) connected to a signal generated from a control device (e.g., based on performing one or more functions).

Reference is now made to Fig. 1A, which shows a charge storage device 100. Charge storage device 100 includes a plurality of battery stacks 200-1 to 200-N, where N may be any number (including 0, indicating there is just one battery stack). Each battery stack may be referred to as battery stack 200. Each battery stack 200 may include a plurality of battery cells 300. Battery stack 200-1 may include battery cells 300-11 to 300-1X, battery stack 200-N may include battery cells 300-N1 to 300-NZ. X and Z may be any appropriate number such that each different battery stack may include the same or a different number of cells (including 0, indicating there is just one battery cell in a battery stack). Each battery cell may be referred to as battery cell 300. Each battery cell 300 may include an electrochemical cell, which may be for example, a rechargeable battery cell. Each battery cell 300 may include cell level circuitry. The cell level circuitry may include cell level power converter circuitry 302.. Battery cell 300-11 may include cell level converter circuitry 302-11, battery cell 300-1X may include cell level converter circuitry 302-1X, etc. The cell level converter circuitry 302 may include switches, inductors, capacitors, etc. The cell level converter circuitry 302 may include bi-directional power converter circuitry, half-bridge circuitry, full-bridge circuitry, boost power converter circuitry, buck power converter circuitry, buck-boost power converter circuitry, buck plus boost power converter circuitry, cascaded buck and boost power converter circuitry, cascaded boost and buck power converter circuitry, DC-DC power converter circuitry, AC-DC power converter circuitry, DC-AC power converter circuitry, bypass circuitry, zero voltage loop mode circuitry, etc. The battery cells 300 may be uni-polar voltage producing battery cells, bi-polar voltage producing battery cells, bi-polar voltage producing battery cells with a neutral point, etc. The battery cells 300 may include inductorless converter circuitry or converter circuitry including one or more inductors. The battery cells 300 may be connected to each other in series (e.g., using the cell level circuitry). For example, at least one terminal of the cell level converter circuitry of a given battery cell may be connected to at least one terminal of a different cell level converter circuitry of a different battery cell of the battery stack 200. Each battery stack 200 may be connected (either directly or via intermediate circuitry) to a respective coil (e.g., inductor), of a motor. The motor may be an electric motor of an electric vehicle. For example, the motor may have N coils connected respectively to the N battery stacks. Alternatively, the battery stacks 200 may be connected in parallel (e.g., to a single coil of a motor). Charge storage device 100 may include controller circuitry 1506. Controller circuitry 1506 may be operatively connected to one or more battery stacks 200. Controller circuitry 1506 may be operatively connected to one or more cell level converter circuitry 302 of the one or more battery stacks 200 (connoted by the dotted lines in Fig. 1A). Controller circuitry 1506 may be configured to control one or more electrical elements of the cell level converter circuitry 302. For example, controller circuitry 1506 may be configured to control one or more switches of the cell level converter circuitry 302 (e.g., controlled into different states such as, ON, OFF). Controller circuitry 1506 may include a plurality of controllers. One of the plurality of controllers may be a master controller configured to control one or more of the other controllers of the plurality of controllers. Controller circuitry 1506 and cell level power converter circuitry 302 may be included in any of the other charge storage devices 100 disclosed herein, but might not be illustrated in a given figure of the present figures for the sake of simplicity.

Reference is now made to Fig. 1B, which shows a charge storage device 100A. Charge storage device 100A is an example of a charge storage device 100 with three battery stacks 200. While at least five battery cells are illustrated in each battery stack, any number of cells may be included in each stack (e.g., 1, 2, 3, 6, 20, 100, etc.). The three battery stacks 200 may each be connected (either directly or via intermediate circuitry) to a respective coil (e.g., inductor), of a motor. The motor may be an electric motor of an electric vehicle. For example, the motor may have three coils.

Reference is now made to Fig. 1C, which shows a charge storage device 100B. Charge storage device 100B is an example of a charge storage device 100 with a single battery stack 200-1. While at least five battery cells are illustrated in the single battery stack 200-1, any number of cells may be included in the single battery stack 200-1 (e.g., 1, 2, 3, 6, 20, 100, etc.). The single battery stack 200-1 may be connected to an electric motor either directly or via additional circuitry. For example, single battery stack 200-1 may be connected to one or more coils of a motor (e.g., a single phase motor, two phase motor, three phase motor, etc.).

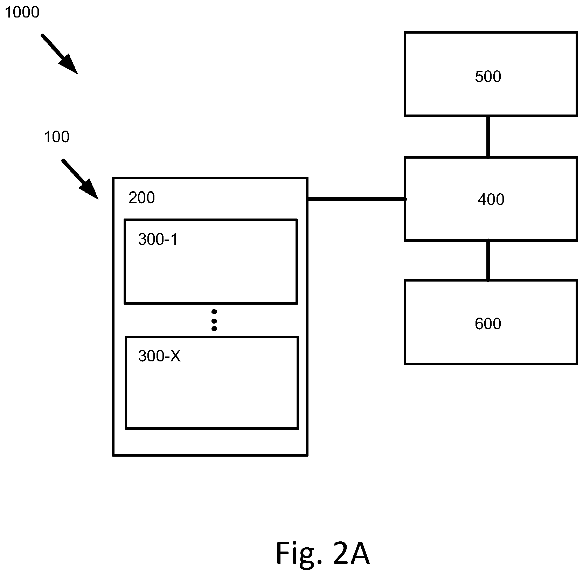

Reference is now made to Fig. 2A, which shows a power system 1000. Power system 1000 may be part of an electric vehicle. Power system 1000 may have a charge storage device 100 (e.g., 100A or 100B) with one or more battery stacks 200 (e.g., connected in parallel) (only one is illustrated), additional circuitry 400, one or more power sources 500, and one or more loads 600. The additional circuitry 400 may be configured to connect the charge storage device 100 to the one or more power sources 500 and/or one or more loads 600. The additional circuitry 400 may include stack level converter circuitry. The stack level converter circuitry may include bi-directional power converter circuitry, half-bridge circuitry, full-bridge circuitry, boost power converter circuitry, buck power converter circuitry, buck-boost power converter circuitry, buck plus boost power converter circuitry, cascaded buck and boost power converter circuitry, cascaded boost and buck power converter circuitry, DC-DC power converter circuitry, AC-DC power converter circuitry, DC-AC power converter circuitry, bypass circuitry, zero voltage loop mode circuitry, etc. The one or more power sources 500 may be configured to charge (e.g., via additional circuitry 400) one or more battery cells 300 of the charge storage device 100. The one or more power sources 500 may include an AC power source (e.g., an electrical power grid), a DC power source (e.g., a DC combustion engine generator, one or more photovoltaic panels, a high voltage charge storage device, another battery, etc.), etc. The one or more loads 600 may be configured to receive power from the charge storage device 100. The one or more loads 600 may include a motor. The motor may be an electric motor of an electric vehicle. The motor may be an inductance motor (IM), permanent magnet inductance motor (PMIM), switched reluctance motor (SRM), etc. The motor may be a one (single) phase motor with one coil, a two phase motor with two coils, a three phase motor with three coils, a four phase motor with four coils, etc. Power system 1000 may be configured to supply an AC voltage to the motor from the one or more battery stacks 200 by controlling the outputs of one or more battery cells 300 to provide a specific voltage to the motor. Power system 1000 may be configured to supply an AC voltage to the motor by controlling the outputs of one or more battery cells 300 to generate a time sequence of voltage steps (an example of which will be described in greater detail below with reference to Fig. 5F and Fig. 5G). Power system 1000 may be configured to supply a charging voltage to the one or more battery stacks 200 from one or more power sources 500 by controlling the inputs to one or more battery cells 300 to provide a specific voltage to the motor.

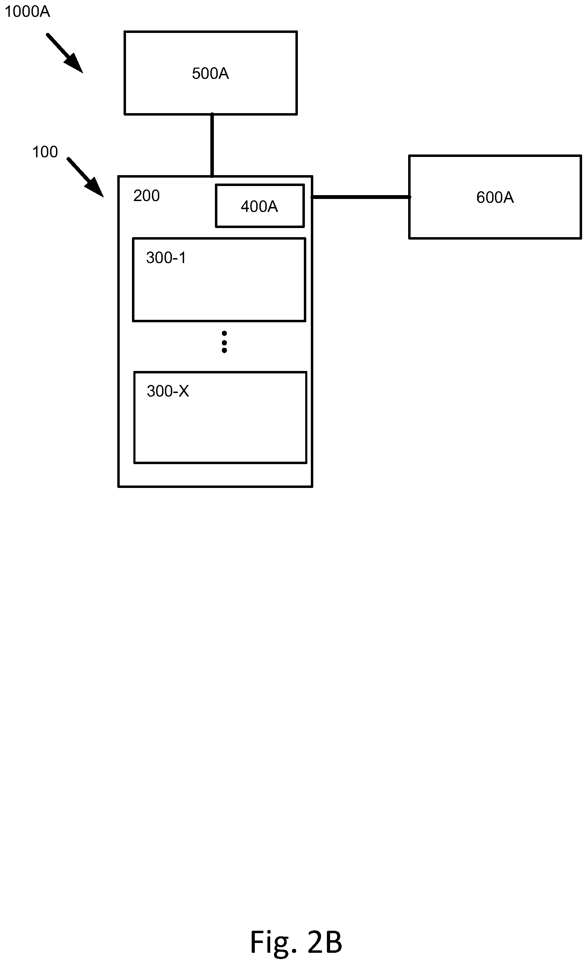

Reference is now made to Fig. 2B, which shows a power system 1000A. Power system 1000A is an example of a power system where the charge storage device 100 (e.g., 100A, 100B) may be directly connected to the one or more power sources 500A and/or the one or more loads 600A. Some functionality of the additional circuitry 400A, which may be the same as circuitry 400 described above may be included in one or more battery cells of the charge storage device 100.

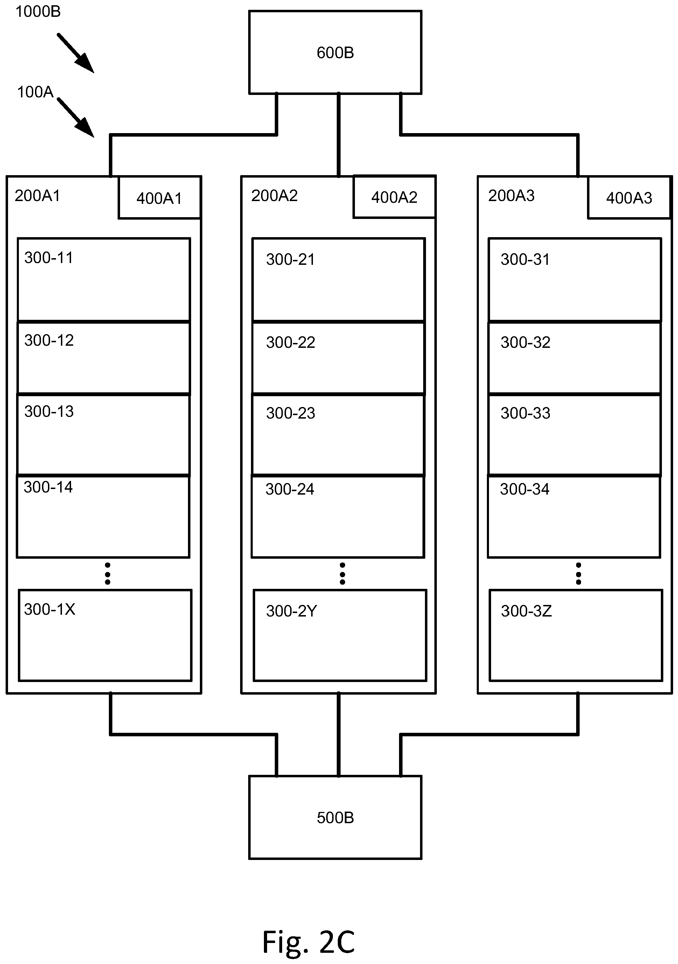

Reference is now made to Fig. 2C, which shows a power system 1000B. Power system 1000B is an example of a power system with charge storage device 100A (including three battery stacks 200A) connected (e.g., directly) to the one or more power sources 500B and/or the one or more loads 600B. Some functionality of the additional circuitry 400A (e.g., 400A1, 400A2, 400A3), which may be the same as circuitry 400 described above may be included in one or more battery cells 300A of the charge storage device 100A.

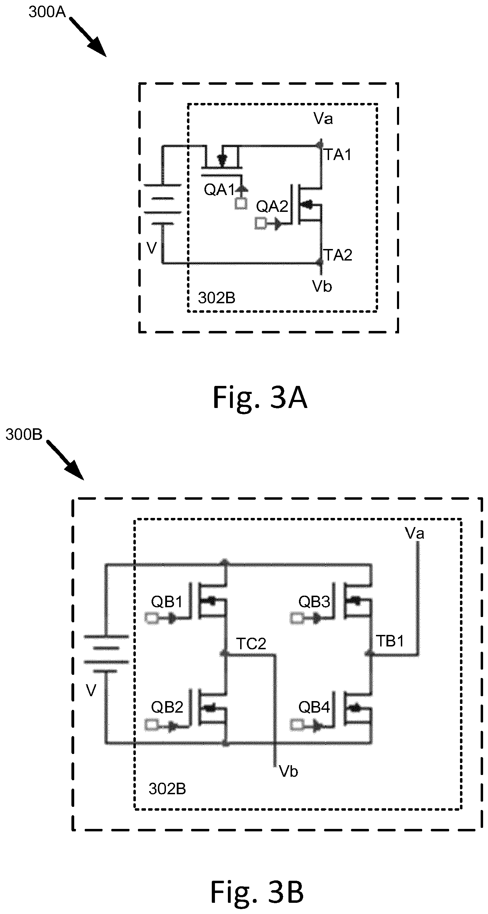

Reference is now made to Fig. 3A, which shows a battery cell 300A. Battery cell 300A may be part of a battery stack 200 (e.g., battery stack 200A), and may be an example of battery cell 300. Battery cell 300A may include an electrochemical cell V and cell level converter circuitry 302A. Cell level converter circuitry 302A may include inductorless half bridge circuitry (also referred to as a half-bridge or a half-bridge circuit). The term "inductorless" used herein may refer to circuitry that does not include an inductor. Cell level converter circuitry 302A may include a plurality of switches Q. The plurality of switches may include a series switch QA1 (e.g., connected in series between one terminal of the electrochemical cell V and connection terminal Va) and a parallel switch QA2 (e.g., connected in parallel across connection terminals Va and Vb). Each switch Q may include a diode such as an integral diode (e.g., a body diode), of the transistor. In some examples of battery cells 300A (and in other battery cells 300 disclosed herein), instead of an integral diode or a body diode, an external diode may be connected in the same manner as an integral or a body diode. The diode may be arranged as a bypass diode or a blocking diode. A blocking diode may also be referred to herein as a cutoff diode. Battery cell 300A may include a plurality of connection terminals Va and Vb at nodes TA1 and TA2 respectively for providing output to discharge the electrochemical cell V or input to charge the electrochemical cell V. Cell level converter circuitry 302A may be bi-directional converter circuitry. For example, cell level converter circuitry 302A may be arranged and controlled (e.g., by pulse width modulating switches QA1 and QA2) to buck voltage output from the electrochemical cell V, and boost voltage input to the electrochemical cell V. Cell level converter circuitry 302A may be controlled to bypass the electrochemical cell V (e.g., by maintaining switch QA2 ON, and optionally maintaining switch QA1 OFF) during a charge mode or during a discharge mode of the battery stack 200. For example, Cell level converter circuitry 302A may be controlled to bypass the electrochemical cell V if the electrochemical cell V is determined to be faulty or insufficiently charged (e.g., below a charge threshold) or if the electrochemical cell V is determined to be sufficiently charged (e.g., above a charge threshold value). For example, one or more controllers may be configured to determine the charge of the battery cell and/or whether the battery cell is faulty. The one or more controllers may be configured to control one or more switches to bypass the battery cell based on the determination(s).

Reference is now made to Fig. 3B, which shows a battery cell 300B. Battery cell 300B may be part of a battery stack 200 (e.g., battery stack 200A), and may be an example of battery cell 300. Battery cell 300C may include an electrochemical cell V and cell level converter circuitry 302B. Cell level converter circuitry 302B may include inductorless full bridge circuitry (also referred to as a full-bridge or a full-bridge circuit). Cell level converter circuitry 302B may include a plurality of switches Q. The plurality of switches may include four switches QB1, QB2, QB3, and QB4. Each switch Q may include a diode such as an integral diode (e.g., a body diode) of the transistor or an external diode arranged in the same manner as an integral or body diode. Battery cell 300B may include a plurality of connection terminals Va and Vb at nodes TB1 and TB2, respectively, for providing output to discharge the electrochemical cell V or input to charge the electrochemical cell V. Cell level converter circuitry 302B may be bi-directional converter circuitry. For example, cell level converter circuitry 302B may be arranged and controlled (e.g. by pulse width modulating the switches) to regulate voltage output from the electrochemical cell V, and regulate voltage input to the electrochemical cell V. Cell level converter circuitry 302B may be controlled to bypass (e.g., by maintaining switches QB1 and QB3 ON or by maintaining switches QB2 and QB4 ON) the electrochemical cell V during a charge mode or during a discharge mode of the battery stack 200. For example, Cell level converter circuitry 302B may be controlled to bypass the electrochemical cell V if the electrochemical cell V is determined to be faulty or insufficiently charged (e.g., below a charge threshold) or if the electrochemical cell V is determined to be sufficiently charged (e.g., above a charge threshold value). For example, one or more controllers may be configured to determine the charge of the battery cell and/or whether the battery cell is faulty. The one or more controllers may be configured to control one or more switches to bypass the battery cell based on the determination(s).

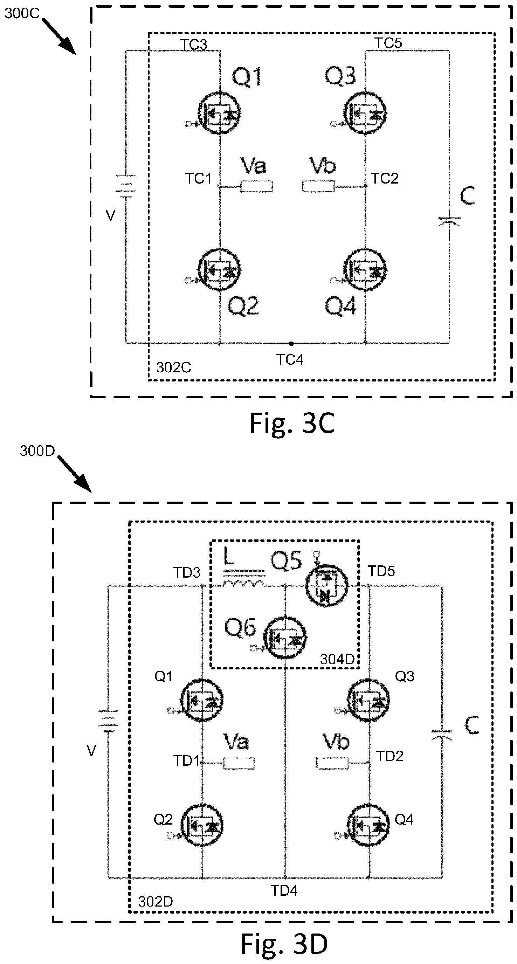

Reference is now made to Fig. 3C, which shows a battery cell 300C. Battery cell 300C may be part of a battery stack 200 (e.g., battery stack 200A), and may be an example of battery cell 300. Battery cell 300C may include an electrochemical cell V and cell level converter circuitry 302C. Cell level converter circuitry 302C may include a capacitor C. Cell level converter circuitry 302C may include a plurality of switches Q. The plurality of switches may include four switches Q1, Q2, Q3, and Q4. Each switch Q may include a diode such as an integral diode (e.g., a body diode) of the transistor or an external diode may be connected in the same manner as an integral or a body diode. Battery cell 300C may include a plurality of connection terminals Va and Vb, at nodes TC1 and TC2, respectively, for providing output to discharge the electrochemical cell V or input to charge the electrochemical cell V.

Cell level converter circuitry 302C may be bi-directional converter circuitry. For example, cell level converter circuitry 302C may be arranged and controlled (e.g. by pulse width modulating the switches) to regulate voltage output from the electrochemical cell V, and regulate voltage input to the electrochemical cell V. Cell level converter circuitry 302C may be controlled to bypass (e.g., by maintaining switches Q2 and Q4 ON) the electrochemical cell V during a charge mode or during a discharge mode of the battery stack 200. For example, Cell level converter circuitry 302C may be controlled to bypass the electrochemical cell V if the electrochemical cell V is determined to be faulty or insufficiently charged (e.g., below a charge threshold) or if the electrochemical cell V is determined to be sufficiently charged (e.g., above a charge threshold value). For example, one or more controllers may be configured to determine the charge of the battery cell and/or whether the battery cell is faulty. The one or more controllers may be configured to control one or more switches to bypass the battery cell based on the determination(s).

Cell level converter circuitry 302C may include two inductorless half bridge circuitries. The first inductorless half bridge converter circuitry may include switches Q1, Q2. The second inductorless half bridge converter circuitry may include switches Q3, Q4. A first terminal of electrochemical cell V may be connected to a first terminal of switch Q1 at node TC3. A second terminal of electrochemical cell V may be connected to a first terminal of switch Q2, a first terminal of switch Q4, and a first terminal of capacitor C at node TC4. A second terminal of switch Q1 may be connected to a second terminal of switch Q2 at node TC1. A second terminal of capacitor C may be connected to a first terminal of switch Q3 at node TC5. A second terminal of switch Q3 may be connected to a second terminal of switch Q4 at node TC2.

Reference is now made to Fig. 3D, which shows a battery cell 300D. Battery cell 300D may be part of a battery stack 200 (e.g., battery stack 200A), and may be an example of battery cell 300. Battery cell 300D may be similar to battery cell 300C, with cell level converter circuity 302D that is similar to cell level converter circuitry 302C, including four switches Q1, Q2, Q3, Q4 arranged as in 302D (with nodes TD1-TD5 arranged the same as nodes TC1-TC5, respectively). Cell level converter circuitry 302D may be bi-directional converter circuitry. For example, cell level converter circuitry 302D may be arranged and controlled (e.g. by pulse width modulating the switches) to regulate voltage output from the electrochemical cell V, and regulate voltage input to the electrochemical cell V. Cell level converter circuitry 302E may be controlled to bypass (e.g., by maintaining switches Q2 and Q4 ON, and optionally maintaining switch Q6 OFF) the electrochemical cell V during a charge mode or during a discharge mode of the battery stack 200. Cell level converter circuity 302D may additionally include energy transfer circuitry 304D. Energy transfer circuitry 304D may be controlled to provide a plurality of different electrical pathways between different combinations of nodes TD3, TD4, and TD5 (e.g., depending on which switches are controlled to be ON or OFF). For example, energy transfer circuitry 304D may be controlled to transfer energy between the electrochemical cell V and capacitor C (e.g., from electrochemical cell V to capacitor C, and also from capacitor C to electrochemical cell V). For example, energy transfer circuitry 304D may be controlled to provide an electrical pathway arranged to transfer energy between the electrochemical cell V and capacitor C in the direction from connection terminal Va to connection terminal Vb or from connection terminal Vb to connection terminal Va. For example, energy transfer circuitry 304D may be controlled to provide an electrical pathway arranged to transfer energy from the capacitor C to the electrochemical cell V while bypassing connection terminal Vb and connection terminal Va such that the transferred energy does not pass through a load or other battery cells 300 connected to Va and Vb (e.g., a coil of the electric motor and/or one or more other battery cells). For example, without energy transfer circuitry 304D (as shown in battery cell 300C of Figure 3C) to transfer energy from the capacitor C to the electrochemical cell V may require a pathway through the load connected to terminals Va and Vb (e.g., through a coil of the electric motor and/or one or more other battery cells 300, to transfer power in the direction from terminal Vb to terminal Va).

Energy transfer circuitry 304D may include converter circuitry, for example, bi-directional converter circuitry, half-bridge circuitry, full-bridge circuitry, boost circuitry, buck circuitry, buck-boost circuitry, buck plus boost circuitry, cascaded buck and boost circuitry, cascaded boost and buck circuitry, DC-DC converter circuitry, AC-DC converter circuitry, DC-AC converter circuitry, bypass circuitry, etc. In the example of Fig. 3D, energy transfer circuitry 304D is shown to include bi-directional converter circuitry which may operate as boost converter circuitry for transferring power from the electrochemical cell V to the capacitor C, which may also operate as buck converter circuitry for transferring power from the capacitor C to electrochemical cell V. For example, energy transfer circuitry 304D may be arranged to boost voltage output from the electrochemical cell V, and buck voltage input to the electrochemical cell V. When used as boost converter circuitry, energy transfer circuitry 304D may be controlled to raise the voltage of the capacitor C. Raising the voltage of the capacitor C may be a particularly useful capability when the electric motor is an SRM motor that may require relatively quick changes between relatively different voltage values (e.g., from a relatively low, substantially zero voltage, to a relatively high voltage, and vice versa). When used as buck converter circuitry, energy transfer circuitry 304D may be controlled to lower voltage. For example, energy transfer circuitry 304D may be arranged to lower voltage output from the capacitor C to input to electrochemical cell V. For example, the voltage of capacitor C may typically be greater than the voltage of electrochemical cell V since the voltage of electrochemical cell V is related to a single battery cell and the voltage of capacitor C may be related to a plurality of battery cells (e.g., a series connection of battery cells). Energy transfer circuitry 304D may be configured to increase the relatively lower voltage of the electrochemical cell V when the electrochemical cell V is the power source (e.g., for discharge) and to decrease the relatively higher voltage of the capacitor C when the electrochemical cell V is the load (e.g., for charge).

In one example, energy transfer circuitry 304D may include an inductor L and a plurality of switches Q5 and Q6. Energy transfer circuitry 304D in the battery cell 300D may form part of cell level converter circuitry 302D of battery cell 300D. Cell level converter circuity 302D may be controlled as a full bridge converter circuitry including inductor L and also controlled as a half bridge converter circuitry also including inductor L. The full bridge converter circuitry may include switches Q3, Q4, Q5, Q6 and inductor L. The half bridge converter circuitry may include switches Q1, Q2 and inductor L. Energy transfer circuitry 304D may be configured to transfer energy from the capacitor C to the electrochemical cell V directly via nodes TD3 and TD5, instead of transferring this energy from connection terminal Vb to connection terminal Va through the load (e.g., motor) or other battery cells 300 connected to Va and Vb. Including energy transfer circuitry 304D in the battery cell 300D provides additional degrees of freedom as opposed to battery cells without energy transfer circuitry 304E. Including energy transfer circuitry 304D in the battery cell 300D provides a path between electrochemical cell V and capacitor C via energy transfer circuitry 304D (e.g., from electrochemical cell V to capacitor C and from capacitor C to electrochemical cell V).

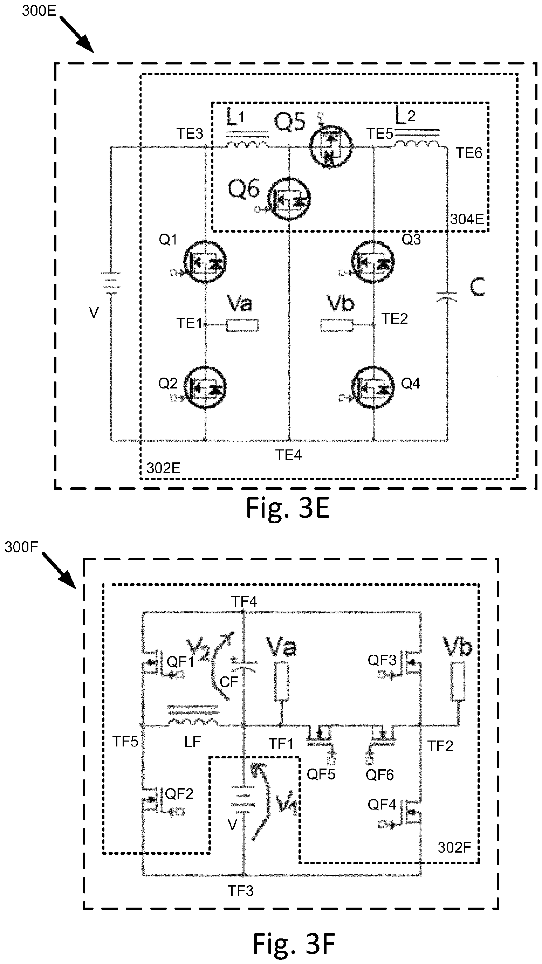

Reference is now made to Fig. 3E, which shows a battery cell 300E. Battery cell 300E may be part of a battery stack 200 (e.g., battery stack 200A), and may be an example of battery cell 300. Battery cell 300E may be the same or similar to battery cell 300D, except battery cell 300E may include energy transfer circuitry 304E. Similar to energy transfer circuitry 304D, energy transfer circuitry 304E may be controlled to provide an electrical pathway between electrochemical cell V and capacitor C.

Energy transfer circuitry 304E may include converter circuitry, for example, bi-directional converter circuitry, half-bridge circuitry, full-bridge circuitry, boost circuitry, buck circuitry, buck-boost circuitry, buck plus boost circuitry, cascaded buck and boost circuitry, cascaded boost and buck circuitry, DC-DC converter circuitry, AC-DC converter circuitry, DC-AC converter circuitry, bypass circuitry, etc. In one example as illustrated Fig. 3E, energy transfer circuitry 304E includes boost converter circuitry that may be controlled to raise the voltage of the capacitor C. For example, energy transfer circuitry 304E may be arranged to boost output from the electrochemical cell V to raise the voltage of the capacitor C. Raising the voltage of the capacitor C may be a particularly useful capability when the electric motor is an SRM motor that may require relatively quick changes between relatively different voltage values (e.g., from a relatively low, substantially zero voltage, to a relatively high voltage, and vice versa). This energy transfer circuit 304E may also operate as buck converter circuitry for transferring power from the capacitor C to a lower voltage at electrochemical cell V.

In one example, energy transfer circuitry 304E may include a plurality of inductors L1, L2, and a plurality of switches Q5, Q6. Energy transfer circuitry 304E in the cell level converter circuitry 302E of battery cell 300E provides the battery cell 300E with two full bridge converter circuitries; the first full bridge converter circuitry including inductor L1, and the second full bridge converter circuitry including inductor L2. The first full bridge converter circuitry includes switches Q3, Q4, Q5, Q6 and inductor L1. The second full bridge converter circuitry includes switches Q1, Q2, Q5, Q6 and inductor L2. Energy transfer circuitry 304E may be controlled to transfer energy from the capacitor C to the electrochemical cell V while bypassing the connection from terminal Vb to connection terminal Va through the load (e.g., motor) or other battery cells 300 connected to Va and Vb. Including energy transfer circuitry 304E in the battery cell 300E provides additional degrees of freedom as opposed to battery cells without energy transfer circuitry 304E. Energy transfer circuitry 304E in the battery cell 300E provides a path between electrochemical cell V and capacitor C via energy transfer circuitry 304E (e.g., from electrochemical cell V to capacitor C and from capacitor C to electrochemical cell V).

In some examples a pair of switches may be connected between connection terminal Va, Va and connection terminal Vb, Vb of the battery cells 302 shown in Fig. 3A to Fig. 3E (similar to switch QF5 and switch QF6 of Fig. 3F) or between connection terminals Va, Vb, Vc of other battery cells 302 shown herein. The pair of switches may be back to back transistors (e.g., connected to each other with the same type of terminal for each transistor). The pair of switches may be arranged as bi-directional switches. The pair of switches may provide additional safety. For example, the pair of switches may be relatively low frequency switches (as opposed to relatively high frequency switches). For example, the pair of switches may be controlled to short a pathway between connection terminal Va and connection terminal Vb and provide a substantially zero voltage value between connection terminal Va and connection terminal Vb.

In some examples, switches Q2 and Q4 (of battery cell 300D or battery cell 300E) may be controlled to short a pathway between connection terminal Va and connection terminal Vb and provide a substantially zero voltage value between connection terminal Va and connection terminal Vb. In such a case, switches Q2 and Q4 may be controlled to be ON and switches Q1 and Q3 may be controlled to be OFF. In some examples, switches Q1, Q3 and Q5 (of battery cell 300D or battery cell 300E) may be controlled to short a pathway between connection terminal Va and connection terminal Vb. In such a case, switches Q1, Q3 and Q5 may be controlled to be ON and switches Q2 and Q4 may be controlled to be OFF.

Reference is now made to Fig. 3F, which shows a battery cell 300F. Battery cell 300F may be part of a battery stack 200 (e.g., battery stack 200A), and may be an example of battery cell 300. Battery cell 300F may include an electrochemical cell V and cell level converter circuitry 302F. Cell level converter circuitry 302F may include a capacitor CF and an inductor LF. Cell level converter circuitry 302F may include a plurality of switches Q. The plurality of switches may include six switches QF1, QF2, QF3, QF4, QF5, and QF6. Each switch Q may include a diode such as an integral diode (e.g., body diode) of the transistor, or an external diode connected in the same manner as an integral or a body diode. Battery cell 300F may include a plurality of connection terminals Va and Vb, at nodes TF1 and TF2, respectively, for providing output to discharge the electrochemical cell V or input to charge the electrochemical cell V.

Cell level converter circuitry 302F may be bi-directional converter circuitry. For example, cell level converter circuitry 302F may be arranged to boost or buck voltage output from the electrochemical cell V, and buck or boost voltage input to the electrochemical cell V. Cell level converter circuitry 302F may be controlled to bypass the electrochemical cell V (e.g., by connecting or shorting terminal Va to terminal Vb), for example, during a charge mode or during a discharge mode of the battery stack 200. For example, Cell level converter circuitry 302F may be controlled to bypass the electrochemical cell V based on (e.g., in response to) the electrochemical cell V being determined to be faulty or insufficiently charged (e.g., below a charge threshold) or based on (e.g., in response to) the electrochemical cell V being determined to be sufficiently charged (e.g., above a charge threshold value). For example, one or more controllers may be configured to determine the charge of the battery cell and/or whether the battery cell is faulty. The one or more controllers may be configured to control one or more switches to bypass the battery cell based on the determination(s).

Cell level converter circuitry 302F may include full bridge converter circuitry that includes switches QF1, QF2, QF3, and QF4, and inductor LF. A first terminal of electrochemical cell V may be connected to a first terminal of inductor LF, a first terminal of capacitor CF, and a first terminal of switch QF5 at node TF1. A second terminal of electrochemical cell V may be connected to a first terminal of switch QF2, and a first terminal of switch QF4 at node TF3. A second terminal of capacitor CF may be connected to a first terminal of switch QF1, and a first terminal of switch QF3 at node TF4. Capacitor CF is illustrated as a polarized capacitor (e.g., an electrolytic capacitor), but CF may also be un-polarized. A second terminal of switch QF3 may be connected to a second terminal of switch QF4, and a first terminal of switch QF6 at node TF2. A second terminal of switch QF6 may be connected to a second terminal of switch QF5. Switch QF5 and switch QF6 may be connected in series to each other with a source terminal of switch QF5 connected to a source terminal of switch QF6. In this example, the gate terminal of switch QF5 and the gate terminal of switch QF6 may be controlled by a single gate driver. Alternatively, switch QF5 and switch QF6 may be connected in series to each other with a drain terminal of switch QF5 connected to a drain terminal of switch QG6. In this example, the gate terminal of switch QF5 and the gate terminal of switch QF6 may be controlled by a pair of gate drivers. Switch QF5 together with switch QF6 may be referred to as a pair of back to back switches or a pair of back to back transistors. Switch QF5 together with switch QF6 may be a pair of transistors connected to each other with the same type of terminal for each transistor. A second terminal of inductor LF may be connected to a second terminal of switch QF1, and a second terminal of switch QF2 at node TF5.

For example, battery cell(s) 300F may be connected (e.g., in a battery stack 200) to a load such as an SRM motor. The battery cells 300F may be configured to provide differential voltage based on the mode of operation of the battery cell 300F. For example, the battery cells 300F may be configured to provide (e.g., from terminal Va to terminal Vb) a positive voltage, a relatively greater negative voltage (e.g., a voltage of greater magnitude and opposite polarity from the positive voltage), and a zero voltage (or substantially zero voltage) depending on the mode of operation. Providing a zero (or substantially zero) voltage may provide a zero voltage loop mode, which may be particularly useful when the load is an SRM motor that may require or be optionally be operated in such a mode. Providing a relatively greater negative voltage may provide a discharge/recovery mode, which may be particularly useful when the load is an SRM motor that may require or optionally be operated in a discharge/recovery mode. In general, the SRM motor may benefit from changes between relatively different voltage values (e.g., between a relatively greater negative voltage, a substantially zero voltage, a positive voltage, etc.) to operate the SRM in different modes.

For example, an SRM motor may have a plurality of motoring states/drive modes (e.g., motor winding energize, zero voltage loop (ZVL), motor winding demagnetize, etc.), and a plurality of charging modes (e.g., charge, free-wheel charge, etc.). Providing differential voltages (e.g., with battery cells 300F) such as relatively greater negative voltages, zero (or substantially zero) voltages, positive voltages (e.g., that are substantially higher than zero), etc. may provide the various modes of the SRM (e.g., the ZVL mode, energize mode, demagnetize/de-energize mode, etc.). For example, de-magnetize mode may be produced from battery cell 300F outputting an adjustable voltage for the high rotations per minute (RPM) zone, which reduces torque ripple and/or audible noise. For example, the battery cell 300F may produce a relatively quicker de-magnetize mode by outputting a negative voltage that is relatively greater in magnitude than the positive voltage (e.g., about two times greater or more in magnitude, as opposed to a negative voltage that is about the same magnitude). In another example, battery cell 300G may provide a ZVL mode by outputting a zero (or substantially zero voltage), which reduce energy losses and discharge the coils of the motor faster. In another example, the battery cell 300F provides zero (or substantially zero) voltage with soft switching (e.g., relatively less switching of the switches, for example, at a relatively lower switching frequency than hard switching), which may provide less torque relative to an output without soft switching. Some battery cells 300F may be configured to provide a positive voltage when the SRM motor is in a charge/energize mode, substantially zero voltage when the SRM is a ZVL mode, and a negative voltage (which may be relatively greater in magnitude than the positive voltage) when the SRM is in a discharge/de-energize mode.

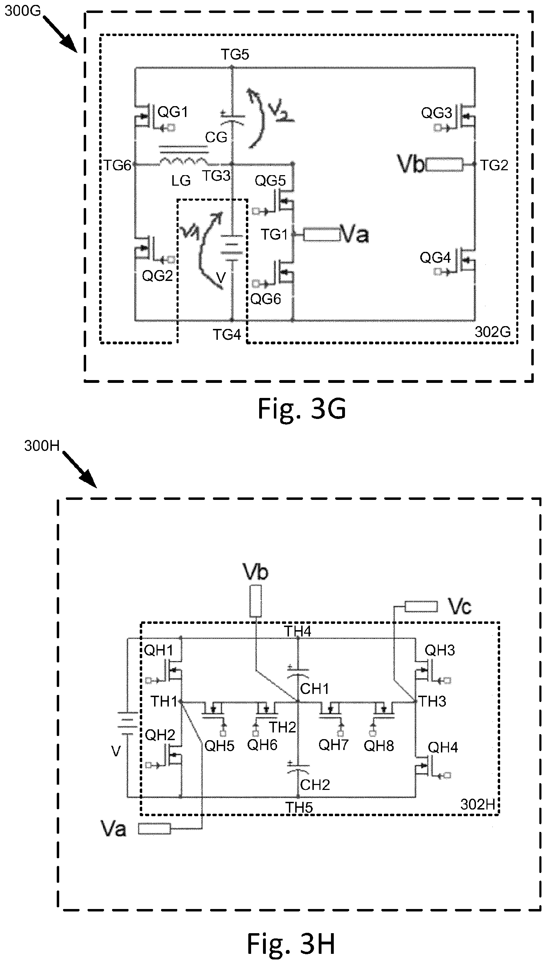

Reference is now made to Fig. 3G, which shows a battery cell 300G. Battery cell 300G may be part of a battery stack 200 (e.g., battery stack 200A), and may be an example of battery cell 300. Battery cell 300G may include an electrochemical cell V and cell level converter circuitry 302G. Cell level converter circuitry 302G may include a capacitor CG and an inductor LG. Capacitor CG is illustrated as a polarized capacitor (e.g., an electrolytic capacitor), but capacitor CG may also be un-polarized. Cell level converter circuitry 302G may include a plurality of switches Q. The plurality of switches may include six switches QG1, QG2, QG3, QG4, QG5, and QG6. Each switch Q may include a diode such as an integral diode (e.g., a body diode) of the transistor, or an external diode connected in the same manner as an integral or a body diode. Battery cell 300G may include a plurality of connection terminals Va and Vb connected to nodes TG1 and TG2, respectively, for providing output to discharge the electrochemical cell V or input to charge the electrochemical cell V.

Cell level converter circuitry 302G may be bi-directional converter circuitry. For example, cell level converter circuitry 302G may be arranged to boost or buck voltage output from the electrochemical cell V, and buck or boost voltage input to the electrochemical cell V. Cell level converter circuitry 302G may be controlled to bypass the electrochemical cell V during a charge mode or during a discharge mode of the battery stack 200. For example, Cell level converter circuitry 302G may be controlled to bypass the electrochemical cell V (e.g., by connecting or shorting terminal Va to terminal Vb), for example, based on (e.g., in response to) the electrochemical cell V being determined to be faulty or insufficiently charged (e.g., below a charge threshold) or based on (e.g., in response to) the electrochemical cell V is determined to be sufficiently charged (e.g., above a charge threshold value). For example, one or more controllers may be configured to determine the charge of the battery cell and/or whether the battery cell is faulty. The one or more controllers may be configured to control one or more switches to bypass the battery cell based on the determination(s).

Cell level converter circuitry 302G may include full bridge converter circuitry that includes switches QG1, QG2, QG3, and QG4, and inductor LG. A first terminal of electrochemical cell V may be connected to a first terminal of inductor LG, a first terminal of capacitor CG, and a first terminal of switch QG5 at node TG3. A second terminal of electrochemical cell V may be connected to a first terminal of switch QG2, a first terminal of switch QG4, and a first terminal of switch QG6 at node TG4. A second terminal of capacitor CG may be connected to a first terminal of switch QG1, and a first terminal of switch QG3 at node TG5. A second terminal of switch QG3 may be connected to a second terminal of switch QG4, and terminal Vb at node TG2. A second terminal of switch QG5 may be connected to a second terminal of switch QG6 and a terminal Va at node TG1. A second terminal of inductor LG may be connected to a second terminal of switch QG1, and a second terminal of switch QG2 at node TG6.

For example, battery cell(s) 300G may be connected (e.g., in a battery stack 200) to a load such as an SRM motor. The battery cells 300G may be configured to provide differential voltage based on the mode of operation of the battery cell 300G. For example, the battery cells 300G may be configured to provide (e.g., from terminal Va to terminal Vb) a positive voltage, a relatively greater negative voltage e.g., a voltage of greater magnitude and opposite polarity from the positive voltage), and a zero (or substantially zero) voltage depending on the mode of operation. Providing a zero (or substantially zero) voltage may provide a zero voltage loop mode, which may be particularly useful when the load is an SRM motor that may require or be optionally be operated in such a mode. Providing a relatively greater negative voltage may provide a discharge/recovery mode, which may be particularly useful when the load is an SRM motor that may require or optionally be operated in a discharge/recovery mode. In general, the SRM motor may benefit from changes between relatively different voltage values (e.g., between a relatively greater negative voltage, a zero (or substantially zero) voltage, a positive voltage, etc.) to operate the SRM in different modes.

Reference is now made to Fig. 3H, which shows a battery cell 300H. Battery cell 300H may be part of a battery stack 200 (e.g., battery stack 200A), and may be an example of battery cell 300. Battery cell 300H may be a three-terminal battery cell 300 including three connection terminals Va, Vb, and Vb. Battery cell 300H may have a plurality of series connections between a first three-terminal battery cell 300 and a second three-terminal battery cell 300 of a battery stack 200S as shown in Fig. 11C. For example, terminal Va of a first three-terminal battery cell 300 may be connected to terminal Vb of a second three-terminal battery cell 300, and terminal Vb of the first three-terminal battery cell 300 may be connected to terminal Vc of the second three-terminal battery cell 300. Battery cell 300H may be controlled to get different levels of output voltage. Battery cell 300H may have a plurality of different output voltages between different pairs of the connection terminals Va, Vb, Vc. For example, battery cell 300H may have a first output voltage from terminal Va to terminal Vb, and a second output voltage from terminal Vb to terminal Vc. Battery cell 300H may be associated with a plurality coils/inductors of a motor. The plurality of different output voltages may be associated with the plurality of different coils/inductors of a motor. Returning to Fig. 3H, battery cell 300H may include an electrochemical cell V and cell level converter circuitry 302H. Cell level converter circuitry 302H may include a plurality of capacitors CH1, CH2, which are illustrated as polarized capacitors (e.g., an electrolytic capacitor), but may also be un-polarized. Cell level converter circuitry 302H may include a plurality of switches Q. The plurality of switches may include eight switches QH1, QH2, QH3, QH4, QH5, QH6, QH7, and QH8. Switch QH5 and switch QH6 may be a first pair of series connected switches. Switch QH7 and Switch QH8 may be a second pair of series connected switches. Each switch Q may include a diode such as an integral diode (e.g., a body diode) of the transistor, or an external diode connected in the same manner as an integral or a body diode. As mentioned above, battery cell 300H may include a plurality of connection terminals Va, Vb, and Vc at nodes TH1, TH2, and TH3, respectively, for providing output to discharge the electrochemical cell V or input to charge the electrochemical cell V.

Cell level converter circuitry 302H may be bi-directional converter circuitry. For example, cell level converter circuitry 302H may be arranged to boost or buck voltage output from the electrochemical cell V, and buck or boost voltage input to the electrochemical cell V. Cell level converter circuitry 302H may be controlled to bypass the electrochemical cell V during a charge mode or during a discharge mode of the battery stack 200. For example, Cell level converter circuitry 302H may be controlled to bypass the electrochemical cell V (e.g., by connecting or shorting Va, Vb, and/or Vc), for example, based on (e.g., in response to) the electrochemical cell V being determined to be faulty or insufficiently charged (e.g., below a charge threshold) or based on (e.g., in response to) the electrochemical cell V is determined to be sufficiently charged (e.g., above a charge threshold value). For example, one or more controllers may be configured to determine the charge of the battery cell and/or whether the battery cell is faulty. The one or more controllers may be configured to control one or more switches to bypass the battery cell based on the determination(s).

Cell level converter circuitry 302H may include inductorless full bridge converter circuitry, that includes switches QH1, QH2, QH3, and QH4. A first terminal of electrochemical cell V may be connected to a first terminal of switch QH1, a first terminal of capacitor CH1, and a first terminal of switch QH3 at node TH4. A second terminal of electrochemical cell V may be connected to a first terminal of switch QH2, a first terminal of capacitor CH2, and a first terminal of switch QH4 at node TH5. A second terminal of capacitor CH1 may be connected to a second terminal of capacitor CH2, a first terminal of switch QH6, a first terminal of switch QH7, and connection terminal Vb at node TH2. A second terminal of switch QH6 may be connected to a first terminal of switch QH5. Switch QH5 and switch QH6 may be connected in series to each other with a source terminal of switch QH5 connected to a source terminal of switch QH6. In this example, the gate terminal of switch QH5 and the gate terminal of switch QH6 may be controlled by a single gate driver. Alternatively, switch QH5 and switch QH6 may be connected in series to each other with a drain terminal of switch QH5 connected to a drain terminal of switch QH6. In this example, the gate terminal of switch QH5 and the gate terminal of switch QH6 may be controlled by a pair of gate drivers. Switch QH5 together with switch QH6 may be referred to as a first pair of back to back switches or a first pair of back to back transistors. Switch QH5 together with switch QH6 may be a first pair of transistors connected to each other in series. A second terminal of switch QH7 may be connected to a first terminal of switch QH8. Switch QH7 and switch QH8 may be connected in series to each other with a source terminal of switch QH7 connected to a source terminal of switch QH8. In this example, the gate terminal of switch QH7 and the gate terminal of switch QH8 may be controlled by a single gate driver. Alternatively, switch QH7 and switch QH8 may be connected in series to each other with a drain terminal of switch QH7 connected to a drain terminal of switch QH8. In this example, the gate terminal of switch QH7 and the gate terminal of switch QH8 may be controlled by a pair of gate drivers. Switch QH7 together with switch QH8 may be referred to as a second pair of back to back switches or a second pair of back to back transistors. Switch QH7 together with switch QH8 may be a second pair of transistors connected to each other in series. A second terminal of switch QH5 may be connected to a second terminal of switch QH1, a second terminal of switch QH2, and connection terminal Va at node TH1. A second terminal of switch QH8 may be connected to a second terminal of switch QH3, a second terminal of switch QH4, and connection terminal Vc at node TH3.

For example, battery cell(s) 300H may be connected (e.g., in a battery stack 200) to a load such as an SRM motor. Battery cell 300H may be connected to a plurality of motor coils (e.g., with a first connection terminal connected to a first motor coil and a second connection terminal connected to a second motor coil) as shown in Fig. 11C. For example, terminal Vb of a first three-terminal battery cell 300H1 at a first end of the battery stack 200S may be connected to a first motor coil 700S1 and terminal Vc of the first three-terminal battery cell 300H1 at the first end of the battery stack 200S may be connected to a second motor coil 700S2. Terminal Va of a second three-terminal battery cell 300HN at a second end of the battery stack may be connected to the first motor coil 700SN and terminal Vb of the second three-terminal battery cell 300HN at the second end of the battery stack 200S may be connected to the second motor coil 700S2. Returning to Fig. 3H, battery cells 300H may be configured to provide differential voltage based on the mode of operation of the battery cell 300H. For example, the battery cells 300H may be configured to provide a first output voltage from terminal Va to terminal Vb, and a second output voltage from terminal Vb to terminal Vc. The first output voltage and/or the second output voltage may be any one of: a positive voltage, a relatively greater negative voltage (e.g., a voltage of greater magnitude and opposite polarity from the positive voltage), and a zero (or substantially zero) voltage depending on the mode of operation. Providing a zero (or substantially zero) voltage may provide a zero voltage loop mode, which may be particularly useful capability when the electric motor is an SRM motor that may require a zero voltage loop mode. Providing a relatively greater negative voltage may provide a discharge/recovery mode, which may be particularly useful when the load is an SRM motor that may require or optionally be operated in a discharge/recovery mode. In general, the SRM motor may benefit from changes between relatively different voltage values (e.g., between a relatively greater negative voltage, a substantially zero voltage, a positive voltage, etc.) to operate the SRM in different modes.

As mentioned above, battery cell 300H may be controlled (e.g., by a controller) to get different levels of output voltage. For example, each battery stack 200 of battery cells 300H may be associated with two coils/inductors of the motor. For example, the plurality of capacitors CH1, CH2 may be arranged to lock in voltage levels, and battery cell 300H may be controlled to produce different voltages (e.g., a plurality of voltage levels) that may be combined in different ways. Battery cell 300H may be controlled to produce a plurality of voltage levels for a de-magnetize mode of an SRM motor.

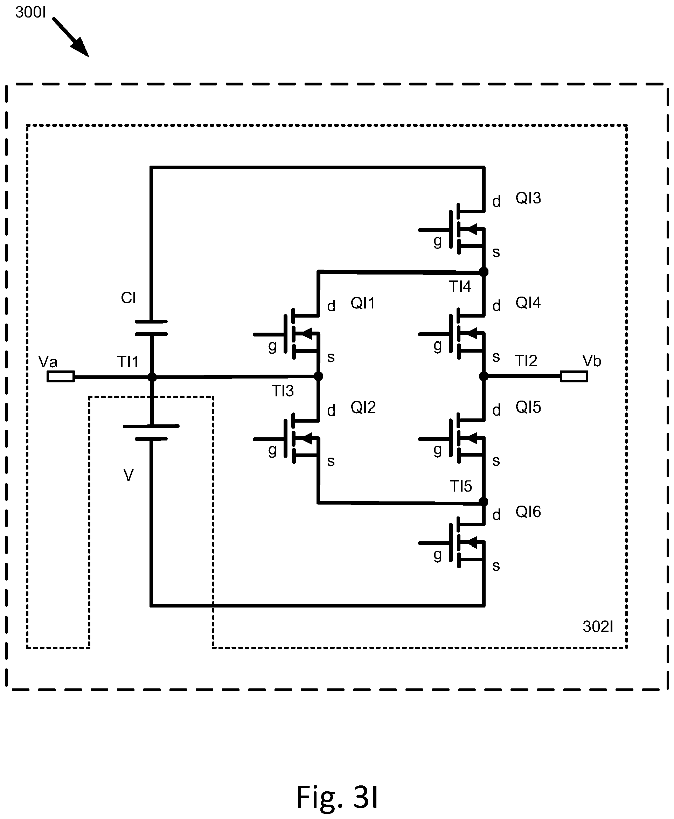

Reference is now made to Fig. 3I, which shows a battery cell 300I. Battery cell 300I may be part of a battery stack 200 (e.g., battery stack 200A), and may be an example of battery cell 300. Battery cell 300I may include an electrochemical cell V and cell level converter circuitry 3021. Cell level converter circuitry 302I may include inductorless neutral point clamped (NPC) circuitry. Cell level converter circuitry 302I may include a capacitor CI. Cell level converter circuitry 302I may include a plurality of switches Q. The plurality of switches may include six switches QI1, QI2, QI3, QI4, QI5, and QI6. Each switch Q may include a diode such as an integral diode (e.g., body diode) of the transistor, or an external diode connected in the same manner as an integral or a body diode. Battery cell 300I may include a plurality of connection terminals Va and Vb, at nodes TI1 and TI2, respectively, for providing output to discharge the electrochemical cell V or input to charge the electrochemical cell V.

Cell level converter circuitry 302I may be bi-directional converter circuitry. For example, cell level converter circuitry 302I may be arranged to boost or buck voltage output from the electrochemical cell V, and buck or boost voltage input to the electrochemical cell V. Cell level converter circuitry 302I may be controlled to bypass the electrochemical cell V (e.g., by connecting or shorting Va to Vb), for example, during a charge mode or during a discharge mode of the battery stack 200. For example, Cell level converter circuitry 302I may be controlled to bypass the electrochemical cell V based on (e.g., in response to) the electrochemical cell V being determined to be faulty or insufficiently charged (e.g., below a charge threshold) or based on (e.g., in response to) the electrochemical cell V being determined to be sufficiently charged (e.g., above a charge threshold value). For example, one or more controllers may be configured to determine the charge of the battery cell and/or whether the battery cell is faulty. The one or more controllers may be configured to control one or more switches to bypass the battery cell based on the determination(s).

A first terminal of electrochemical cell V may be connected to a first terminal of capacitor CJ, node TI3, and to connection terminal Va at node TI1. A second terminal of electrochemical cell V may be connected to a first terminal of switch QI6. A second terminal of capacitor CI may be connected to a first terminal of switch QI3. A second terminal of switch QI3 may be connected to a first terminal of switch QI1, and a first terminal of switch QI4 at node TI4. A second terminal of switch QI6 may be connected to a first terminal of switch QI2, and a first terminal of switch QI5 at node TI5. A second terminal of switch QI4 may be connected to a second terminal of switch QI5, and to connection terminal Vb at node TI2. A second terminal of switch QI1 may be connected to a second terminal of switch QI2 at node TI3. Node TI1 may be directly connected to node TI3.

For example, battery cell(s) 300I may be connected (e.g., in a battery stack 200) to a load such as an SRM motor. The battery cells 300I may be configured to provide differential voltage based on the mode of operation of the battery cell 300I. For example, the battery cells 300I may be configured to provide (e.g., from terminal Va to terminal Vb) a positive voltage, a relatively greater negative voltage (e.g., a voltage of greater magnitude and opposite polarity from the positive voltage), and a zero voltage (or substantially zero voltage) depending on the mode of operation. Providing a zero (or substantially zero) voltage may provide a zero voltage loop mode, which may be particularly useful when the load is an SRM motor that may require or be optionally be operated in such a mode. Providing a relatively greater negative voltage may provide a discharge/recovery mode, which may be particularly useful when the load is an SRM motor that may require or optionally be operated in a discharge/recovery mode. In general, the SRM motor may benefit from changes between relatively different voltage values (e.g., between a relatively greater negative voltage, a substantially zero voltage, a positive voltage, etc.) to operate the SRM in different modes.

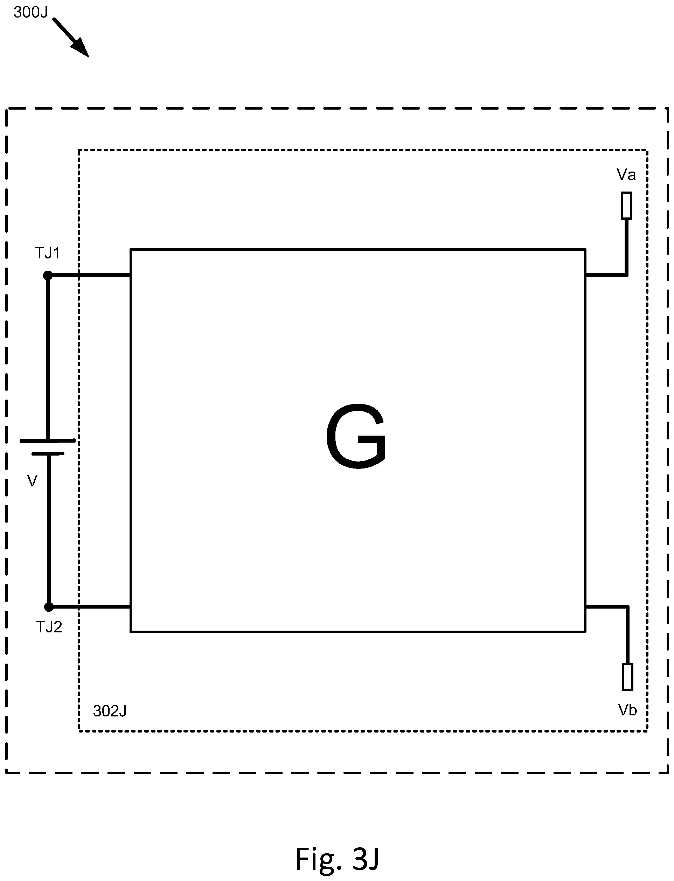

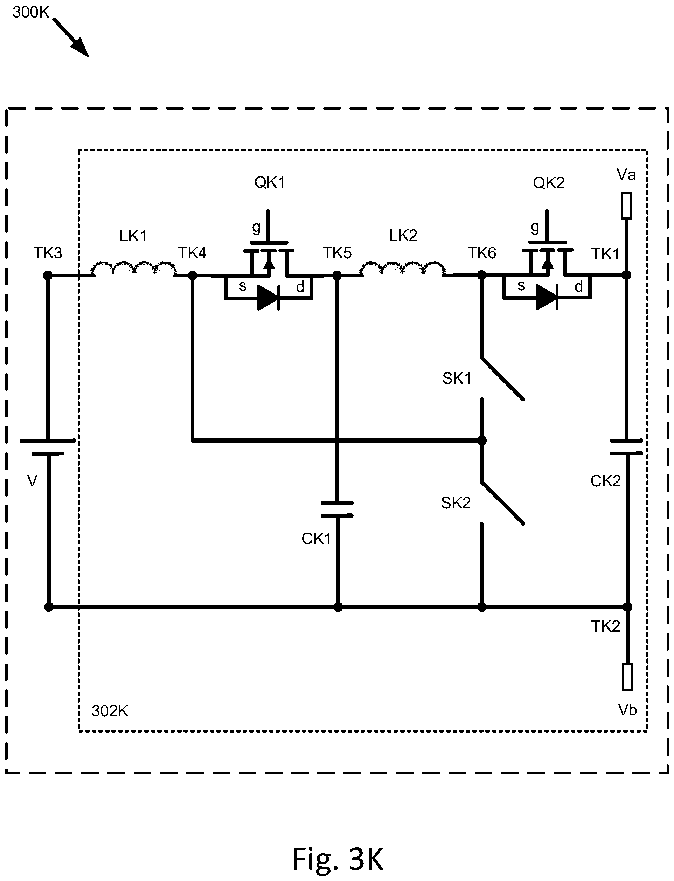

Reference is now made to Fig. 3J, which shows a battery cell 300J. Battery cell 300J may be part of a battery stack 200 (e.g., battery stack 200A), and may be an example of battery cell 300. Battery cell 300J may include an electrochemical cell V and cell level converter circuitry 302J. Cell level converter circuitry 302J may include high gain converter circuitry G. High gain converter circuitry G may be bi-directional converter circuitry. High gain circuitry G may be controlled to bridge relatively low voltage (e.g., ones of volts) to relatively high voltage (e.g., tens of volts or hundreds of volts), and vice versa. High gain circuitry G may be controlled (e.g., by a controller) to bridge between a relatively low input voltage to a relatively high output voltage, or a relatively high input voltage to a relatively low output voltage. For example, high gain circuitry G may be controlled to produce a relatively high voltage gain range with a relatively lower duty cycle. For example, high gain circuitry G may be controlled to produce an output voltage that is about 10 times greater than the input voltage. For example, if the electrochemical cell V produces about 3 volts to about 5 volts that is input to the high gain circuitry G, the high gain circuitry G may be controlled to produce an output voltage that is about 30 volts to about 50 volts. With high gain circuitry G a relatively lower number of battery cells may be controlled to produce a relatively high voltage, compared to the number of battery cells used to produce that voltage without high gain circuitry G. For example, to produce a total output voltage of about 300 volts to about 500 volts (e.g., for a load, such as a motor) using a battery stack 200 of series connected battery cells 300 that have their output terminals connected to one another in a serial string, with battery cells 300 having high gain circuitry G that is able to perform 1:10 conversion with a relatively low duty cycle (e.g., about 70%, below 70%) about 10 battery cells 300 may be used. For example, if battery cells 300 without high gain circuitry G that with a relatively low duty cycle (e.g., about 70%, below 70%) are able to perform 1:5 conversion are used then about 20 battery cells 300 may be used to produce a total output voltage of about 300 volts to about 500 volts (e.g., about twice as many battery cells 300 compared to battery cells 300 with high gain circuitry G). Since high gain circuitry G is bi-directional, high gain circuitry G may also be controlled to produce a relatively low output voltage from a relatively high input voltage (e.g., a relatively high voltage source that may be used to charge one or more electrochemical cells V of a battery stack 200). For example, high gain circuitry G may be controlled to produce an output voltage that is about 10 times less than the input voltage. For example, if the battery cell 300J receives about 30 volts to about 50 volts that is input to the high gain circuitry G, the high gain circuitry G may be controlled to produce an output voltage that is about 3 volts to about 5 volts to the electrochemical cell. Some examples of high gain circuitry G may be two or more boost converter circuits that are connected in a cascaded fashion, quadratic boost converter circuitry (e.g., shown in Fig. 3K for example), etc.

Reference is now made to Fig. 3K, which shows a battery cell 300K. Battery cell 300K may be part of a battery stack 200 (e.g., battery stack 200A), and may be an example of battery cell 300. Battery cell 300K may include an electrochemical cell V and cell level converter circuitry 302K. Cell level converter circuitry 302K may include quadratic converter circuitry (e,g., high gain circuitry G shown in Fig. 3J for example). Cell level converter circuitry 302K may include a plurality of inductors LK1 and LK2 and a plurality of capacitors capacitor CK1 and CK2. Cell level converter circuitry 302K may include a plurality of switches Q and S. The plurality of switches may include switches QK1, QK2, SK1, and SK2. The plurality of switches Q and S may be any appropriate type of switch (e.g., FET, JFET, IGBT, MOSFET, etc.). Each switch Q and S may include a diode such as an integral diode (e.g., body diode) of the transistor, or an external diode connected in the same manner as an integral or a body diode. Battery cell 300K may include a plurality of connection terminals Va and Vb, at nodes TK1 and TK2, respectively, for providing output to discharge the electrochemical cell V or input to charge the electrochemical cell V.

Cell level converter circuitry 302K may be bi-directional converter circuitry. For example, cell level converter circuitry 302K may be arranged to boost or buck voltage output from the electrochemical cell V, and buck or boost voltage input to the electrochemical cell V. For example, switch QK1 and switch QK2 may be MOSFETS arranged to provide bidirectional conversion functionality of the battery cell 300K. Cell level converter circuitry 302K may be controlled to bypass the electrochemical cell V (e.g., by connecting or shorting Va to Vb), for example, during a charge mode or during a discharge mode of the battery stack 200. For example, Cell level converter circuitry 302K may be controlled to bypass (e.g., by closing SK1, SK2, and QK2) the electrochemical cell V (e.g., by closing SK1, SK2, and QK2) based on (e.g., in response to) the electrochemical cell V being determined to be faulty or insufficiently charged (e.g., below a charge threshold) or based on (e.g., in response to) the electrochemical cell V being determined to be sufficiently charged (e.g., above a charge threshold value). For example, one or more controllers may be configured to determine the charge of the battery cell and/or whether the battery cell is faulty. The one or more controllers may be configured to control one or more switches to bypass the battery cell based on the determination(s).

As mentioned above, cell level converter circuitry 302K may include quadratic converter circuitry. For example, in systems where the battery cell is controlled to have a high conversion ratio (e.g., an input of about 3 volts from the electrochemical cell and an output in a range of about 12 volts to about 20 volts, i.e., greater than a 1:3 ratio) quadratic converter circuitry may work more efficiently compared to other converter circuitries. For example, quadratic converter circuitry may have a relatively lower duty cycle in the range of about 65% to about 70% to gain a relatively greater ratio of about 1:10, e.g., about 3 volt input and about 30 volt output per battery cell (as opposed to other circuitries that may require a relatively higher duty cycle of about 90% for the same ratio). Quadratic converter circuitry may have a more efficient gain transfer function that is a function of the duty cycle. For example, the quadratic converter circuitry may have a plurality of levels, e.g., quadratic converter circuitry may be three-level quadratic converter circuitry.

A first terminal of electrochemical cell V may be connected to a first terminal of inductor LK1 at node TK3. A second terminal of electrochemical cell V may be connected to a first terminal of capacitor CK1, a first terminal of switch SK2, a first terminal of capacitor CK2, and connection node Vb at node TK2. A second terminal of inductor LK1 may be connected to a first terminal of switch QK1, a second terminal of switch SK2, and a first terminal of switch SK1 at node TK4. A second terminal of switch QK1 may be connected to a first terminal of inductor LK2, and a second terminal of capacitor CK1 at node TK5. A second terminal of inductor LK2 may be connected to a second terminal of switch SK1, and a first terminal of switch QK2 at node TK6. A second terminal of switch QK2 may be connected to a second terminal of capacitor CK2, and connection terminal Va at node TK1.

Reference is now made to Fig. 3L, which shows a battery cell 300Y. Battery cell 300Y may be part of a battery stack 200 (e.g., battery stack 200A), and may be an example of battery cell 300. Battery cell 300Y may include an electrochemical cell V and cell level converter circuitry 302Y. The cell level converter circuitry 302Y may include first cell level converter circuitry 1500 and second cell level converter circuitry 1502. First cell level converter circuitry 1500 and second cell level converter circuitry 1502 may each include converter circuitry, such as, bypass circuitry, bi-directional power converter circuitry, half-bridge power converter circuitry, full-bridge power converter circuitry, DC-DC power converter circuitry, DC-AC power converter circuitry, boost power converter circuitry, buck power converter circuitry, buck-boost circuitry, buck plus boost power converter circuitry, cascaded buck and boost power converter circuitry, cascaded boost and buck power converter circuitry, etc., or any cell level converter circuitry 302 described herein (e.g., cell level converter circuitry 302 shown in Fig. 3A to Fig. 3K).

Reference is now made to Fig. 3M, which shows a battery cell 300YB. Battery cell 300YB may be an example of battery cell 300Y of Fig. 3L. For example, the first cell level converter circuitry 1500YB may include the inductorless half bridge cell level converter circuitry 302A shown in Fig. 3A (and may include an addition parallel switch QP2), and the second cell level converter circuitry 1502YB may include boost power converter circuitry including a plurality of switches, an inductor LY and a capacitor CY. The locations of the first cell level converter circuitry 1500YB and the second cell level converter circuitry 1502Y within the battery cell 300YB may be changed. For example, the first cell level converter circuitry 1500Y may be connected in between the electrochemical cell V and the second cell level converter circuitry 1502YB. For example, the first cell level converter circuitry 1500YB may be arranged to perform cellular bypass as described herein. Including individual, cell level boost converter circuitry with an inductor in each battery cell may allow additional control and freedom to operating the battery cell 300Y (in some examples cell level converter circuitry 302 may include cell level boost converter circuitry with an inductor as shown in second cell level converter circuitry 1502YB without first cell level converter circuitry 1500YB, in such cases one or more other switches may be included to bypass the electrochemical cell V). For example, having cell level boost converter circuitry with an inductor may provide more control of the battery cell 300Y when charging and discharging the battery cell. For example, battery cell 300Y may be configured for cellular bypass during a charging mode of the battery stack 200Y based on a determination that the electrochemical cell V is above a voltage threshold. For example, in charge storage devices that have a central, shared boost converter circuitry with an inductor the battery stack may produce a relatively lower voltage (e.g., about 120 volts DC) and the central, shared boost converter circuitry may step up the voltage to a relatively higher voltage (e.g., about 400 volts DC). In comparison, for example, a battery stack 200Y with battery cells 300Y having cell level boost converter circuitry 1502Y with an inductor LY may allow battery stack 200Y to produce a relatively higher voltage (e.g., about 400 volts DC), since each individual battery cell 300Y may be configured to step up the voltage of the electrochemical cell V using the cell level boost converter circuitry 1502Y.

Reference is now made to Fig. 3N, which shows a battery cell 300YC. Battery cell 300YC may be an example of battery cell 300Y of Fig. 3L. For example, the first cell level converter circuitry 1500YB may be similar to the one described with relation to Fig. 3M, and the second cell level converter circuitry 1502YC may include boost power converter circuitry similar to second cell level converter circuitry 1502YB except that it includes an additional branch of inductors and switches connected between the electrochemical cell V and the capacitor CY. The additional branch may provide added reliability in case one of the two branches fails or is otherwise inoperable.

Reference is now made to Fig. 30, which shows a battery cell 300Z. Battery cell 300Z may be part of a battery stack 200 (e.g., battery stack 200A), and may be an example of a battery cell (e.g., battery cell 300). Battery cell 300 may include an electrochemical cell V and cell level converter circuitry 302Z. The cell level converter circuitry 302Z of Fig. 3O may have a plurality of connection terminals Va, Vb. The plurality of connection terminals Va, Vb may be connected to different coils 700, or connection terminals Va1 to Va3 and Vb1 to Vb3 (collectively referred to herein as (Va and Vb, respectively) of other battery cells 300Z (of the same battery stack 200 or a different battery stack 200). The plurality of connection terminals Va, Vb may be configured to provide a plurality of voltages to a respective plurality of coils 700. For example, the plurality of voltages may be at different phases relative to one another. Additionally, the plurality of connection terminals Va, Vb may be configured to provide a first voltage having a first phase to a first coil 700, a second voltage having a second phase to a second coil 700, a third voltage having a third phase to a third coil 700, etc. (*See,* , *e.g*., Fig. 16B to Fig. 16F.) A first plurality of the connection terminals Va may be connected to different coils 700-*e.g*., connection terminal Va1 may be connected to a first coil 700, connection terminal Va2 may be connected to a second coil 700, connection terminal Va3 may be connected to a third coil 700, etc. The first plurality of connection terminals Va may be connected to a second plurality of connection terminals Vb of a different battery cell 300Z. The different battery cell 300Z may be in the same battery stack 200. For example, connection terminal Va1 of a first battery cell 300Z may be connected to connection terminal Vb1 of a second battery cell 300Z, connection terminal Va2 of the first battery cell 300Z may be connected to connection terminal Vb2 of the second battery cell 300Z, connection terminal Va3 of the first battery cell 300Z may be connected to connection terminal Vb3 of the second battery cell 300Z. The second plurality of connection terminals Vb may be connected to a third plurality of connection terminals Vb of a different battery cell 300Z. The different battery cell 300Z may be in a different battery stack 200. The different battery stack 200 may be connected to a terminal of a coil 700. The first battery stack 200 may be connected to a different terminal of the coil 700. For example, connection terminal Vb1 of a first battery cell 300Z of a first battery stack 200 may be connected to connection terminal Vb1 of a second battery cell 300Z of a second battery stack 200, connection terminal Vb2 of the first battery cell 300Z of the first battery stack 200 may be connected to connection terminal Vb2 of the second battery cell 300Z of the second battery stack 200, connection terminal Vb3 of the first battery cell 300Z of the first battery stack 200 may be connected to connection terminal Vb3 of the second battery cell 300Z of the second battery stack 200. In some instances, a single battery stack may be connected to a plurality of respective terminals of a plurality of loads-*e.g*., a second plurality of the connection terminals Vb may be connected to different terminals of the different coils 700. Connection terminal Vb1 may be connected to a second terminal of the first coil 700, connection terminal Vb2 may be connected to a second terminal of the second coil 700, and connection terminal Vb3 may be connected to a second terminal of the third coil 700, etc.

The cell level converter circuitry 302Z may include a plurality of instances of converter circuitry 306Z with a plurality of respective connection terminals Va, Vb for each instance of converter circuitry 306Z. For example, cell level converter circuitry 302Z may include a plurality of converter circuitry 306Z that are connected in parallel to electrochemical cell V. For example, the plurality of converter circuitry 306Z may each be connected to terminals of the electrochemical cell V. In some cases, each instance of the plurality of converter circuitry 306Z may be connected to a different respective electrochemical cell V. In the example of Fig. 30, the plurality of converter circuitry 306Z include a first converter circuitry 306Z1, a second converter circuitry 306Z2, and a third converter circuitry 306Z3. First converter circuitry 306Z1, second converter circuitry 306Z2, and third converter circuitry 306Z3 may each include converter circuitry, such as, bypass circuitry, bi-directional power converter circuitry, half-bridge power converter circuitry, full-bridge power converter circuitry, DC-DC power converter circuitry, DC-AC power converter circuitry, boost power converter circuitry, buck power converter circuitry, buck-boost circuitry, buck plus boost power converter circuitry, cascaded buck and boost power converter circuitry, cascaded boost and buck power converter circuitry, etc., or any cell level converter circuitry 302 described herein (e.g., cell level converter circuitry 302 shown in Fig. 3A to Fig. 3N). Additionally, the bypass circuitry may include one or more series switches and one or more parallel switches in some cases.

Reference is now made to Fig. 3P, which shows a battery cell 300ZB. Battery cell 300ZB may be used to implement battery cell 300Z of Fig. 30. As shown in Fig. 3P, each converter circuitry 306ZB may include isolated boost converter circuitry and bypass circuitry (similar to the inductorless half bridge cell level converter circuitry 302A shown in Fig. 3A). The bypass circuitry of Fig. 3P may also include switch QZ5 and switch QZ6 (similar to series switch QA1 and parallel switch QA2 of Fig. 3A). The isolated boost converter circuitry may include a plurality of switches Q and inductors L. The isolated boost converter circuitry may also be arranged with a voltage transformer arrangement and may facilitate the connection of multiple converter circuitry 306Z to a single electrochemical cell V (for example, in parallel to the electrochemical cell V across the terminals of the electrochemical cell V, e.g., at nodes TZ1, TZ2). In some examples, each battery cell may include a number of converter circuitry 306ZB that is a multiple of 3. This number may depend on a number of loads of the battery cell (e.g., a number of coils of an EV motor, which may be the number of phases of the EV motor). For example, there may be three converter circuitry 306ZB for three loads, six converter circuitry 306ZB for six loads, nine converter circuitry 306ZB for nine loads, etc. In some examples, there may be two converter circuitry 306ZB for two loads (e.g., a two phase EV motor).

For each converter circuitry 306ZB, a first terminal of electrochemical cell V may be connected to a first terminal of inductor LZ5 at node TZ1. A second terminal of electrochemical cell V may be connected to a first terminal of switch QZ1 and a first terminal of switch QZ2. A second terminal of inductor LZ5 may be connected to a first terminal of inductor LZ1 and a first terminal of inductor LZ2 at node TZ3. A second terminal of inductor LZ1 may be connected to a second terminal of switch QZ1. A second terminal of inductor LZ2 may be connected to a second terminal of switch QZ2. Inductor LZ1 may be configured to be electromagnetically coupled to inductor LZ3. Inductor LZ2 may be configured to be electromagnetically coupled to inductor LZ4. A first terminal of inductor LZ3 may be connected to a first terminal of inductor LZ4, a first terminal of capacitor CZ1, a first terminal of switch QZ6, and connection terminal Vb at node TZ4. A second terminal of inductor LZ3 may be connected to a first terminal of switch QZ3. A second terminal of inductor LZ4 may be connected to a first terminal of switch QZ4. A second terminal of switch QZ3 may be connected to a second terminal of switch QZ4, a second terminal of capacitor CZ1, and a first terminal of switch QZ5 at node TZ5. A second terminal of switch QZ5 may be connected to a second terminal of switch QZ6 and connection terminal Va at node TZ6. These connections may be the same for first converter circuitry 306Z1, second converter circuitry 306Z2, and third converter circuitry 306Z3, etc. Each converter circuitry 306Z may have its own respective connection terminals Va, Vb. For example, first converter circuitry 306Z1 may have connection terminals Va1, Vb1, second converter circuitry 306Z2 may have connection terminals Va2, Vb2, third converter circuitry 306Z3 may have connection terminals Va3, Vb3, etc.

Reference is now made to Fig. 3Q, which shows a battery cell 300ZC. According to some embodiments, battery cell 300ZC may be used to implement battery cell 300Z of Fig. 30. For example, converter circuitry 306ZC may be similar to converter circuitry 306ZB described with relation to Fig. 3P, except that converter circuitry 306ZC may include diode DZ3 in place of switch QZ3, and diode DZ4 in place of switch QZ4.

Reference is now made to Fig. 3R, which shows a battery cell 300ZD. According to some embodiments, battery cell 300ZD may be used to implement battery cell 300Z of Fig. 30. For example, converter circuitry 306ZD may be similar to converter circuitry 306ZB described with relation to Fig. 3P, except that converter circuitry 306ZD may omit switch QZ5 and switch QZ6. In the example of Fig. 3P, switch QZ5 and switch QZ6 may be controlled for bypass during charge or discharge of the electrochemical cell. Switch QZ3 and switch QZ4 may also be controlled for bypass during charge or discharge of the electrochemical cell. In the example of Fig. 3R, switch QZ3 and switches QZ4 may be controlled for bypass during charge or discharge of the electrochemical cell.

Reference is now made to Fig. 3S, which shows a battery cell 300ZE. According to some embodiments, battery cell 300ZE may be used to implement battery cell 300Z of Fig. 3O. For example, converter circuitry 306ZE may be similar to converter circuitry 306ZB described with relation to Fig. 3P, except that converter circuitry 306ZE may include full bridge circuitry between node TZ5 and node TZ4 in place of just half bridge circuitry as in converter circuitry 306ZB. The full bridge circuitry may include a plurality of switches. For example, the full bridge circuitry may include switch QZE5, switch QZE6, switch QZE7, and switch QZE8. The full bridge circuitry may allow a single battery stack 300 to provide three phase AC voltage (or voltage equivalent to three-phase AC voltage). In some examples, the single battery stack 300 may have only two battery cells 302 each with a single electrochemical cell V and a plurality of converter circuitry 306ZE.

As shown in Fig. 3S, for each converter circuitry 306ZE, a first terminal of electrochemical cell V may be connected to a first terminal of inductor LZ5 at node TZ1. A second terminal of electrochemical cell V may be connected to a first terminal of switch QZ1 and a first terminal of switch QZ2. A second terminal of inductor LZ5 may be connected to a first terminal of inductor LZ1 and a first terminal of inductor LZ2 at node TZ3. A second terminal of inductor LZ1 may be connected to a second terminal of switch QZ1. A second terminal of inductor LZ2 may be connected to a second terminal of switch QZ2. Inductor LZ1 may be configured to be electromagnetically coupled to inductor LZ3. Inductor LZ2 may be configured to be electromagnetically coupled to inductor LZ4. A first terminal of inductor LZ3 may be connected to a first terminal of inductor LZ4, a first terminal of capacitor CZ1, a first terminal of switch QZE6, and a first terminal of switch QZE8 at node TZ4. A second terminal of inductor LZ3 may be connected to a first terminal of switch QZ3. A second terminal of inductor LZ4 may be connected to a first terminal of switch QZ4. A second terminal of switch QZ3 may be connected to a second terminal of switch QZ4, a second terminal of capacitor CZ1, a first terminal of switch QZE5, and a first terminal of switch QZE7 at node TZ5. A second terminal of switch QZE5 may be connected to a second terminal of switch QZE6 and connection terminal Va. A second terminal of switch QZE7 may be connected to a second terminal of switch QZE8 and connection terminal Vb. These connections may be the same for first converter circuitry 306ZE1, second converter circuitry 306ZE2, and third converter circuitry 306ZE3, etc. Each converter circuitry 306ZE may have its own respective connection terminals Va, Vb. For example, first converter circuitry 306ZE1 may have connection terminals Va1, Vb1, second converter circuitry 306ZE2 may have connection terminals Va2, Vb2, third converter circuitry 306ZE3 may have connection terminals Va3, Vb3, etc.

Similar to converter circuitry 306ZB depicted in Fig. 3P, each converter circuitry 306ZE shown in Fig. 3S may include isolated boost converter circuitry that may include a plurality of switches Q and inductors L. The isolated boost converter circuitry may be arranged with a voltage transformer arrangement. The isolated boost converter circuitry may facilitate the connection of multiple converter circuitry 306E to a single electrochemical cell V (for example, in parallel to the electrochemical cell V across the terminals of the electrochemical cell V, e.g., at nodes TZ1, TZ2). In some examples, each battery cell may include a number of converter circuitry 306ZE that is a multiple of 3. This number may depend on a number of loads of the battery cell (e.g., a number of coils of an EV motor, which may be the number of phases of the EV motor). For example, there may be three converter circuitry 306ZE for three loads, six converter circuitry 306ZE for six loads, nine converter circuitry 306ZE for nine loads, etc. In some examples, there may be two converter circuitry 306ZE for two loads (e.g., a two phase EV motor).

Reference is now made to Fig. 4, which shows a power system 1000D. Power system 1000D may be part of an electric vehicle. Power system 1000D may have a charge storage device 100D with, for example, a single battery stack 200D, one or more additional circuitry 400DA, 400DB, 400DC, one or more power sources 500DA, 500DB, and one or more loads 600D. The battery stack 200D may include a plurality of battery cells 300-11, 300-12, 300-13, 300-14 ... 300-1X connected to each other in series. Each battery cell 300 may include an electrochemical cell V1, V2, V3, V4 ... Vn and cell level converter circuitry 302. In the example of Fig. 4, the cell level converter circuitry 302 may include inductorless half bridge converter circuitry, for example cell level converter circuitry 302A as shown in Fig. 3A. The inductorless half bridge converter circuitry may include a series switch S1, S2, S3, S4 ... Sn and a parallel switch 511, S22, S33, S44 ... Snn. The switches S may each include an integral diode (e.g. a body diode), or an external diode connected in the same manner as an integral or a body diode. While Fig. 4 illustrates storage device 100D, battery stack 200D, and battery cells 300-11 - 300-1X in system 1000D as examples, any combination of the previously described storage devices (e.g., storage devices 100, 100A, 100B), battery stacks (e.g., battery stacks 200, 200A), and battery cells (e.g., battery cells 300, 300A-300K, 300Y) may be used in place of storage device 100D, battery stack 200D, and battery cell 300-11 - 300-1X, respectively. "X" and "n" may be any integer number. Additional circuitry 400DA may be connected to terminals of the battery stack 200D. Additional circuitry 400DA may be bi-directional converter circuitry. Additional circuitry 400DA may include an inductor L, a first switch Sa, a second switch Sb, and a capacitor C. Additional circuitry 400DA may be configured to boost output voltage from battery stack 200D and buck input voltage to battery stack 200D. Additional circuitry 400DB may be connected to terminals of additional circuitry 400DA. At least one terminal of additional circuitry 400DB may be connected to a terminal of additional circuitry 400DA via a switch Sc. The switch may be turned ON when power is to be provided from the battery stack to the load (e.g., when the electric vehicle is in a motoring mode of operation). Additional circuitry 400DB may be inverter circuitry. Additional circuitry 400DB may include a plurality of switches. Additional circuitry 400DB may be configured to convert DC voltage from additional circuitry 400DA to AC voltage for the load 600D. Load 600D may be connected to terminals of additional circuitry 400DB. For example, additional circuitry 400DB may be a three phase inverter, and load 600D may be a three phase electrical AC motor connected to three output terminals of additional circuitry 400DB. Load 600D may be a motor of an electric vehicle. Load 600D may be a permanent magnet induction motor (PMIM). Additional circuitry 400DC may be switchably connected to a terminal of additional circuitry 400DA. A terminal of additional circuitry 400DC may be connected to a terminal of additional circuitry 400DA via a switch Sd. The switch may be turned ON when power is to be provided from the additional circuitry 400DC to the battery stack (e.g., when the electric vehicle is in an AC power source charging mode of operation). Additional circuitry 400DC, for example, may be rectifier circuitry. Additional circuitry 400DC may include a plurality of switches. Additional circuitry 400DC may include on-board charging circuitry (OBC). Additional circuitry 400DC may be configured to convert AC voltage from power source 500DB to DC voltage to charge one or more electrochemical cells V of the battery stack 200D. Power source 500DB may be an AC power source such as the grid, an AC generator, etc. Power source 500DA may be switchably connected to a terminal of additional circuitry 400DA. A terminal of DC power source 500DA may be connected to a terminal of additional circuitry 400DA via a switch Se. The switch may be turned ON when power is to be provided from the power source 500DA to the battery stack (e.g., when the electric vehicle is in a DC power source charging mode of operation). Power source 500DA may be a DC power source such as a DC generator, a battery, one or more photovoltaic (PV) modules, etc. For example DC power source may provide a relatively higher DC charging voltage, such as about 800 volts DC, or a relatively lower DC charging voltage, such as about 400 volts DC.

While cell converter circuitry 302 in Fig. 4 is illustrated as a half bridge circuit, any previously described cell converter circuitry may be used. As mentioned above, cell level converter circuitry 302 may be configured to convert electrical power to or from the electrochemical cell V of the battery cell 300 (e.g., battery cell 300-11). For example, cell level converter circuitry 302 may be bi-directional converter circuitry. For example, cell level converter circuitry 302 may be configured to buck an input voltage received from the electrochemical cell V to a lower output voltage for the series connection of battery cells 300. For example, cell level converter circuitry 302 may alternatively or additionally be configured to boost an input voltage received from the series connection of battery cells 300 to a higher output voltage for the electrochemical cell V. Cell level converter circuitry 302 may include inductorless half bridge circuitry (e.g., cell level converter circuitry 302A as shown in Fig. 3A for example) that may operate together with a central, shared inductor (e.g., inductor L in circuitry 400DA). For example, switches QB1, QB2 (in Fig. 3A) together with the central, shared inductor may be arranged as buck converter circuitry in the direction from the electrochemical cell V and may be arranged as boost converter circuitry in the direction to the electrochemical cell V. For example, when cell level converter circuitry 302 may include inductorless full bridge circuitry (e.g., cell level converter circuitry 302B as shown in as shown in Fig. 3B for example) the cell level converter circuitry 302 may operate together with a central, shared inductor. For example, switches QC1, QC2 , QC3, and QC4 (in Fig. 3B) together with the central, shared inductor may be arranged as buck converter circuitry or boost converter circuitry in the direction from the electrochemical cell V and may be arranged as boost converter circuitry or buck converter circuitry in the direction to the electrochemical cell V. In some examples, cell level converter circuitry 302 may include one or more internal inductors that are arranged inside each battery cell 300. For example, when cell level converter circuitry 302 may include one or more inductors (e.g., as shown in Fig. 3D, 3E, 3F, 3K, 3M, 3N for example) the switches Q together with the one or more internal inductors may be arranged as buck converter circuitry or boost converter circuitry in the direction from the electrochemical cell V and may be arranged as boost converter circuitry or buck converter circuitry in the direction to the electrochemical cell V. For example, the output voltage of the cell level converter circuitry 302 may be controlled by controlling the duty cycle of one or more switches Q.

As mentioned above, cell level converter circuitry 302 may be configured to bypass the electrochemical cell V of the battery cell 300. This will also be referred to herein as "cellular bypass". For example, each battery cell 300 of a battery stack 200 may be controlled to selectively bypass that given battery cell 300. For example, one or more battery cells may be arranged in a cellular bypass mode when the battery stack is operating in other modes of operation. For example, one or more battery cells may be arranged in a cellular bypass mode when the battery stack 200 is in a charge mode of operation, a discharge mode of operation, etc. The "charge mode of operation" may also be referred to herein as "charging mode". The "discharge mode of operation" may also be referred to herein as "discharge mode." A "motoring mode" is an example of a discharge mode when the load is a motor. Each battery cell 300 may have a charge bypass mode, a discharge bypass mode, etc. For example, one or more controllers may be configured to control the cellular bypass of a given battery cell. A battery cell may be arranged in bypass mode based on a determination (e.g., a controller determines that the battery cell is faulty) that the battery cell is faulty or malfunctioning. A battery cell may be arranged in bypass mode based on a determination related to the state of charge of the electrochemical cell of the battery cell. In one example, when the battery stack is in a charge mode of operation, based on a determination (e.g., by a controller) that the electrochemical cell is above a second (e.g., high) charge threshold, then that battery cell is bypassed. If based on the determination (e.g., by the controller) the electrochemical cell is not above the second (e.g., high) charge threshold, then that battery cell is not bypassed. Additionally or alternatively, when the battery stack is in a discharge mode of operation, based on a determination (e.g., by a controller) that the electrochemical cell is below a first (e.g., low) charge threshold then that battery cell is bypassed. If based on the determination (e.g., by the controller) the electrochemical cell is not below the first (e.g., low) charge threshold, then that battery cell is not bypassed. The determination whether or not to bypass one or more battery cells may be made by a controller based on one or more obtained electrical values that are related to the one or more battery cells. For example, the one or more electrical values may include: a voltage value, a current value, a power value, a frequency value, etc. Any of the cell level converter circuitry 302 shown in Fig. 3A to Fig. 3N may be configured to perform cellular bypass.

One or more switches of the cell level converter circuitry may be controlled to arrange the battery cell in a bypass arrangement when in bypass mode. The specific bypass arrangement (e.g., which switches are in what state) may depend on the mode of operation of the given battery stack of the battery cell. For example, when in a charge bypass mode a first switch may be switched ON and a second switch may be switched OFF to control a string current of one or more other battery cells of the battery stack to flow through the first switch and bypass the electrochemical cell. For example, when in a discharge bypass mode the first switch and the second switch may be switched OFF to control a string current of one or more other battery cells of the battery stack to flow through a bypass diode (e.g., a body diode of one of the switches) and bypass the electrochemical cell.

For example, in the example of Fig. 4, the series switch Sn may be arranged to charge the electrochemical cell Vn in a charge mode when the series switch Sn is switched ON or OFF, and the parallel switch Snn is switched OFF, to control a current to flow through series switch Sn or the blocking diode of the series switch Sn and charge the electrochemical cell Vn. The parallel switch Snn may be arranged to bypass the electrochemical cell Vn in a charge bypass mode when the series switch Sn is switched OFF and the parallel switch Snn is switched ON to control a string current to flow through the parallel switch Snn and bypass the electrochemical cell Vn. The series switch Sn may be arranged to discharge the electrochemical cell Vn in a discharge mode when the series switch Sn is switched ON and the parallel switch Snn is switched OFF to control a current to flow from the electrochemical cell Snn towards the series connection of battery cells 300 of the battery stack 200. The bypass diode of the parallel switch Snn may be arranged to bypass the battery cell 300 in a discharge bypass mode when the series switch Sn is switched OFF and the parallel switch Snn is switched OFF to control a string current to flow through the bypass diode of the parallel switch Snn and bypass the electrochemical cell Vn. The blocking diode of the series switch Sn may be arranged to block current from the electrochemical cell Vn towards the series connection of battery cells 300 in the discharge bypass mode. The bypass diode of the parallel switch Snn may be arranged to block current in the charge mode.

In some examples, the battery cells 300 may allow the functionality of the on-board charging (OBC) circuitry to be integrated in the battery stack(s) 200.

Reference is now made to Fig. 5A, which shows a power system 1000E. Power system 1000E may be part of an electric vehicle. Power system 1000E may have a charge storage device 100E with a plurality of battery stacks 200E1, 200E2, 200E3, and a load 600E. Each battery stack 200E may include a plurality of battery cells connected to each other in series. Each battery cell may include an electrochemical cell and cell level converter circuitry. In one example of Fig. 5A, load 600E may be a three phase electrical AC motor with three phase lines P1, P2, P3, and each one of the battery stacks 200E may be connected to a respective phase line of the AC motor. The DC power from each battery stack 200E is represented as a respective DC source VE1, VE2, VE3 in Fig. 5A. Each battery stack may be controlled to produce an AC power output represented as a respective AC source AC1, AC2, AC3 in Fig. 5A. The plurality of battery stacks 200E may be each connected to a ground potential GN (e.g. which may be the same as a neutral point of 600E).

The plurality of AC outputs may be configured to produce a waveform to operate the electric motor. For example, each respective battery stack 200E may be controlled to generate a waveform corresponding to (e.g., input to) a different one of a plurality of coils of the AC motor connected via phase lines P1, P3, and P3, respectively. For example, there may be three battery stacks with battery cells used to produce three AC voltages (or currents), respectively. Each battery stack may be operated as an AC source (e.g., an AC current or AC voltage source) biased with a DC offset. The motor may see the phase to phase voltage, so keeping the DC offset equal on all battery stacks may results in a net AC voltage. The battery cells may be communicatively coupled with one another (e.g., via one or more controllers) and controlled to be synchronized. The battery cells may provide a multi-level voltage output that generates a time sequence of voltage steps. Each battery cell may have at least one parallel bypass switch and at least one series connecting switch that may be used for DC-AC conversion and cell balancing. Each battery cell may produce a different voltage level. Each battery stack 200E may produce a DC biased voltage that is referenced to a ground potential (GN), that may be controlled so that the bias may be equal for all of the battery stacks such that the inter stack voltages that feed the motor may be an AC voltage with a zero or negligible DC offset. The battery stacks may have a relatively low switching frequency (e.g., about 10 kHz) which may provide better efficiency and lower total harmonic distortion of the motor. A low switching frequency may result in less losses.

Reference is now made to Fig. 5B, which shows a power system 1000F. Power system 1000F is an example of a power system (such as power system 1000E) that may have a charge storage device 100F (which may be an example of storage device 100E) with a plurality of battery stacks 200F1, 200F2, 200F3 (which may be examples of battery stacks 200E1, 200E2, and 200E3, respectively), and a load 600F (which may be an example of load 600E). In the example of Fig. 5B the cell level converter circuitry 302 may include inductorless half bridge converter circuitry (e.g., cell level converter circuitry 302A as described above with respect to Fig. 3A) or any other cell level converter circuitry described herein.

Reference is now made to Fig. 5C, which shows a power system 1000G. Power system 1000G is an example of a power system (such as power system 1000E) that may have a charge storage device 100G (which may be an example of storage device 100E) with a plurality of battery stacks 200G1, 200G2, 200G3 (which may be examples of battery stacks 200E1, 200E2, and 200E3, respectively), one or more additional circuitry 400GA, 400GB, or 400GC, one or more power sources 500GA and 500GB, and a load 600G (which may be an example of load 600E). In the example of Fig. 5C the cell level converter circuitry 302 may include inductorless half bridge converter circuitry. Additional circuitry 400GC may be connected to a terminal of each battery stack 200G. Additional circuitry 400GC may be switching circuitry, for example, comprising one or more switches. Additional circuitry 400GC may be configured into different switch arrangements based on the operational mode of the battery stack 200G (e.g., discharge mode, AC charging mode [e.g., 1 phase, 3 phase, etc.], higher DC charging mode, lower DC charging mode, etc.). AC charging mode is an operational mode of the battery stack 200 where AC power from an AC power source is controlled to charge one or more battery cells 300. The battery stack may receive one or more phases of AC power from the AC power source. Higher DC charging mode is an operational mode of the battery stack 200 where relatively higher DC power (compared to the lower DC charging mode, e.g., about 800 Volts DC) from a DC power source is controlled to charge one or more battery cells 300. Lower DC charging mode is an operational mode of the battery stack 200 where relatively lower DC power (compared to the higher DC charging mode, e.g., about 400 Volts DC) from a DC power source is controlled to charge one or more battery cells 300. Additional circuitry 400GC may include switches SG1 and/or SG2. Switch SG1 may include three relay switches (e.g., a three pole switch or three single pole switches), for example, switchably connected between node CT1 and the outputs of battery stacks 200G1, 200G2, and 200G3, respectively. Switch SG2 may be switchably connected between node CT1 and additional circuitry 400GB. Additional circuitry 400GB may be rectifier circuitry (e.g., AC/DC converter circuitry for converting between AC power to DC power, and vice versa). Additional circuitry 400GB may include a plurality of switches. Additional circuitry 400GB may include on-board charging circuitry (OBC). Additional circuitry 400GB may be configured to convert AC voltage (and power) from power source 500GB to DC voltage (and power) to charge one or more electrochemical cells V of the plurality of battery stacks 200G. Power source 500GB may be an AC power source such as the grid, an AC generator, etc.). Additional circuitry 400GA may be connected to node CT1. Additional circuitry 400GA may be converter circuitry (e.g., a boost or buck converter circuitry). For example, additional circuitry 400GA may include an inductor L, a first switch Sa, and a second switch Sb. Additional circuitry 400GA may be configured to buck input voltage from power source 500GA to the plurality of battery stacks 200G. A terminal of DC power source 500GA may be connected to a terminal of additional circuitry 400GA via switch Sa. Power source 500GA may be a DC power source such as a DC generator, a battery, one or more photovoltaic (PV) modules, etc. For example DC power source may provide a relatively higher DC charging voltage, such as about 800 volts DC (for a relatively quicker charge of battery stacks 200G), or a relatively lower DC charging voltage, such as about 400 volts DC (for a relatively slower charge of battery stacks 200G). As mentioned above, additional circuitry 400GC may be controlled based on the operational mode of the battery stack 200G (e.g., discharge mode, AC charging mode, higher DC charging mode, lower DC charging mode, etc.). For example, when in a discharge mode, switch SG1 may be turned OFF to disconnect the one or more power sources 500GA, 500GB from the plurality of battery stacks 200E. When in an AC charging mode, switch SG1 may be turned ON and switch SG2 may be turned ON to connect additional circuitry 400GB and power source 500GB to the plurality of battery stacks 200G. When in the AC charging mode, additional circuitry may be disabled or configured to disconnect 500GA (e.g., by turning off switch Sa and/or Sb). Additional switches may be connected between each phase lines and the motor 600G to disconnect the motor 600G from the charge storage device 100G when in charging modes. As another example, if there are no additional switches or other way of disconnecting motor 600G from charge storage device 100G, then the voltage may be controlled to be the same or substantially the same for all of the different phases of the motor to prevent torque of the motor when charging (e.g., to provide zero torque charging). For example, the battery stacks 200G may be controlled so that there is substantially the same current in each battery stack 200G during charging, so that the flux of each coil substantially cancels each other out and there is zero (or substantially zero) torque charging (e.g., zero [or substantially zero] torque of the motor when charging the battery cells). When in a DC charging mode, switch SG1 may be turned ON and switch SG2 may be turned OFF to connect additional circuitry 400GA and power source 500GA to the plurality of battery stacks 200G.

In the example of Fig. 5C, load 600G may be a three phase electrical AC motor with three phase lines, and each one of the battery stacks 200G may be connected to a respective phase line of the AC motor. Load 600G may be a motor of an electric vehicle. Load 600G may be a permanent magnet induction motor (PMIM).

Reference is now made to Fig. 5D, which shows a battery stack 200H for a charge storage device 100H, and to Fig. 5E which shows a charge storage device 100H. Battery stack 200H may be part of charge storage device 100H. Charge storage device may have a plurality of battery stacks 200H1, 200H2, 200H3 each one similar to battery stack 200H. For example, the charge storage device 100H may have three battery stacks 200H. In the example of Fig. 5D the cell level converter circuitry 302 may include inductorless full bridge converter circuitry (e.g., cell level converter circuitry 302B as previously described).

Reference is now made to Fig. 5F, which shows an example graph of output voltage from a battery stack 200 of a charge storage device 100 (e.g., storage devices 100A, 100B, 100D, 100E, 100F, 100G, 100H). For example, the charge storage device 100B of Fig. 5B may produce a uni-polar (positive or negative) voltage output as shown in Fig. 5F. The uni-polar (positive or negative) voltage output may be produced by controlling the cell level converter circuitry 302 of each battery cell 300, which for example, may include inductorless half bridge converter circuitry or other converter circuitry.

Reference is now made to Fig. 5G, which shows an example graph of output voltage from a battery stack 200 of charge storage device 100. For example, the charge storage device 100H of Fig. 5E may produce a bi-polar (positive and negative) voltage output as shown in Fig. 5G. The bi-polar (positive or negative) voltage output (e.g., relative to a ground reference) may be produced by controlling the cell level converter circuitry 302 of each battery cell 300, which for example, may include inductorless full bridge converter circuitry or other converter circuitry.

Reference is now made to Fig. 5H, which shows a power system 1000I. Power system 1000I is an example of a power system that may have a charge storage device 100I (which for example could be charge storage device 100, 100A, 100B, 100D, 100E, 100F, 100G, 100H) with a plurality of battery stacks 200I (which for example could be any of the previously described battery stacks), additional circuitry 400I, power source 500I, and a load with a plurality of coils 700I1, 700I2, 700I3. In the example of Fig. 5H the load may be a three phase electrical AC motor with three phase lines, and each one of the battery stacks 200I may be connected to a respective coil 700I via a respective phase line of the AC motor. Additionally, the coils 700I1, 700I2, and 700I3 may be connected with a common terminal (e.g., a wye configuration), which is connected to circuitry 400I. Circuitry 400I may be switching circuitry, and may be configured into different switch arrangements based on the operational mode of the battery stack 200I (e.g., discharge mode, higher DC charging mode, lower DC charging mode, etc.) Additional circuitry 400I may include switch SI. Switch SI may be switchably connected between the coils 700I (e.g., between the common terminal) and power source 500I or a ground potential GN. Switch SI may be a single pole double throw (SPDT) relay switch. Power source 500I may be a DC power source such as a DC generator, a battery, one or more photovoltaic (PV) modules, etc. For example, DC power source 500I may provide a relatively higher DC charging voltage, such as about 800 volts DC (for a relatively quicker charge of battery stacks 200I), or a relatively lower DC charging voltage, such as about 400 volts DC (for a relatively slower charge of battery stacks 200I). Power source 500I may be directly connected to the ground potential. As mentioned above, additional circuitry 400I may be controlled based on the operational mode of the battery stack 200I (e.g., discharge mode, higher DC charging mode, lower DC charging mode, etc.). For example, when in a discharge mode, switch SI may be controlled to be in a first state to connect the power source 500I to the ground potential. When in a DC charging mode, switch SI may be controlled to be in a second state to connect power source 500I to the plurality of battery stacks 200I via the coils 700I of the motor. The amount of current flowing in each battery stack 200I during charging may be controlled so that substantially the same current value is flowing in each battery stack 200I during charging so that the flux produced by each coil 700I of the motor substantially cancels each other out and there is zero (or substantially zero) torque charging (e.g., zero [or substantially zero] torque of the motor when charging during charging mode)

Reference is now made to Fig. 6, which shows a power system 1000J. Power system 1000J is an example of a power system that may have a charge storage device 100J (which for example could be charge storage devices 100, 100A, 100B, 100D, 100E, 100F, 100G, 100H, 100I) with a battery stack 200J (which for example could be any of the previously described battery stacks), additional circuitry 400J (not expressly labeled, but including all circuitry not identified as 100J, 500J, or 7001), power source 500J, and a load with a plurality of coils 700J1, 700J2, 700J3. In the example of Fig. 6 the cell level converter circuitry 302 may include inductorless half bridge converter circuitry (e.g., cell level converter circuitry 302A as described above with respect to Fig. 3A) or any other cell level converter circuitry described herein. In the example of Fig. 6 the load may be a three phase electrical AC motor with three phase lines. The load may be a switched reluctance motor (SRM). The battery stacks 200J may be connected to the coils 700J and/or the power source 500J via additional circuitry 400J. Additional circuitry 400J may be switching circuitry, which may be configured into different switch arrangements based on the operational mode of the battery stack 200J (e.g., discharge mode, AC charging mode, DC charging mode, etc.). Additional circuitry 400J may include a plurality of diodes (e.g., DJ1, DJ2, DJ3, DJ4, DJ5, DJ6, DJ7) a plurality of switches (e.g., QJ1, QJ2, QJ3, QJ4, QJ5, QJ6, QJ7, SJ1A, SJ1B, SJ1C, SJ1D, SJ2). Switches QJ1, QJ2, QJ3, QJ4, QJ5, QJ6, QJ7 may be transistors. Switches SJ1A, SJ1B, SJ1C, SJ1D, SJ2 may be relays (e.g., electromechanical or solid state). Additional circuitry 400J may be configured to provide zero (or substantially zero) voltage in a zero voltage loop mode. Battery cells 300 may be configured for cellular bypass as described above with respect to Figs. 3A-3N.

Reference is now made to Fig. 7, which shows a battery stack 200K. Battery stack 200K may be part of charge storage device 100. Charge storage device 100 may have a plurality of battery stacks 200K each one similar to battery stack 200K (which, for example, may be any previously described battery stack). For example, the charge storage device 100 may have three battery stacks 200K. The load 600 may be a motor with a plurality of coils 700K. For example, the motor may have three coils 700K. For example, each battery stack 200K may be connected to a respective coil 700K. Each battery stack 200K may include a plurality of battery cells 300 (which, for example, may be any previously described battery cell). Each battery cell 300 may include an electrochemical cell V and cell level converter circuitry 302. The plurality of battery cells 300 of the battery stack 200K may be connected to each other in series. For example, for each battery cell 300, a terminal of cell level converter circuitry 302 of a given battery cell 300 may be connected to a terminal of a different cell level converter circuitry 302 of a different battery cell 300. For example, the battery cell 300 may include any of the cell level converter circuitry 302 shown in Fig. 3A to Fig. 3N.

For example, battery stack 200K may be connected (e.g., in a power system 1000) to a load such as to an SRM motor. The battery cells 300 may be configured to provide differential voltage based on the mode of operation of the battery stack 200K. For example, the battery cells 300 may be configured to provide a positive voltage (e.g., from terminal Va to terminal Vb), a relatively greater negative voltage, and a zero (or substantially zero) voltage depending on the mode of operation. Providing a zero (or substantially zero) voltage may provide a zero voltage loop mode, which may be particularly useful when the load is an SRM motor that may require or be optionally be operated in such a mode. Providing a relatively greater negative voltage may provide a discharge/recovery mode, which may be particularly useful when the load is an SRM motor that may require or optionally be operated in a discharge/recovery mode. In general, the SRM motor may benefit from changes between relatively different voltage values (e.g., between a relatively greater negative voltage, a zero (or substantially zero) voltage, a positive voltage, etc.) to operate the SRM in different modes.

Reference is now made to Fig. 8, which shows a power system 1000L. Power system 1000L is an example of a power system that may have a charge storage device 100L with a plurality of battery stacks 200L, additional circuitry 400L, power source 500L, and a load 600L. In the example of Fig. 8 the load 600L may be a three phase electrical AC motor with three phase lines L1, L2, L3, and each one of the battery stacks 200L1, 200L2, 200L3 may be connected to a respective coil via a respective phase line P1, P2, P3 of the AC motor. Additional circuitry 400L (not expressly labeled but including SL1, SL2, SL3, SL4, SL5 and SL6) may be connected to each stack 200L. Additional circuitry 400L may be switching circuitry. Additional circuitry 400L may be configured into different switch arrangements based on the operational mode of the battery stacks 200L of charge storage device 100L (e.g., discharge mode, DC charging mode, etc.). Additional circuitry may be configured to switchably connect and disconnect the plurality stacks 200L to each other in series. For example, additional circuitry 400L may be controlled to connect the plurality of battery stacks 200L to each other in series when the battery stacks 200L are in a charging mode of operation. Additional circuitry 400L may be controlled to switchably connect the series of battery stacks 200L to power source 500L and disconnect the plurality of battery stacks 200L from the load 600L when the battery stacks 200L are in the charging mode of operation. Additional circuitry 400L may be controlled to switchably disconnect the plurality of battery stacks 200L from being connected to each other in series when the battery stacks 200L are in a discharge mode of operation. Additional circuitry 400L may be controlled to connect the series of battery stacks 200L to the load 600L and disconnect the plurality of battery stacks 200L from the power source 500L when the battery stacks 200L are in the discharge mode of operation. Additional circuitry 400L may include a plurality of switches SL1, SL2, SL3, SL4, SL5, SL6. Switches SL may be single pole double throw (SPDT) switches. Each battery stack 200L may include a first switch SL connected to a first terminal of the battery stack 200L (e.g., a common terminal of switch SL1 connected to a positive terminal of 200L1) and a second switch SL connected to a second terminal of the battery stack 200L (e.g., a common terminal of switch SL4 connected to a negative terminal 200L1). Power source 500L may be a DC power source such as a DC generator, a battery, one or more photovoltaic (PV) modules, etc. For example DC power source may provide a relatively higher DC charging voltage, such as about 800 volts DC (for a relatively quicker charge of battery stacks 200L), or a relatively lower DC charging voltage, such as about 400 volts DC (for a relatively slower charge of battery stacks 200G). As mentioned above, additional circuitry 400L may be controlled based on the operational mode of the battery stacks 200L (e.g., discharge mode, higher DC charging mode, lower DC charging mode, etc.). For example, when in a discharge mode, switches SL may be controlled to be in a first state to connect the battery stacks 200L to a respective phase line P of the load 600L and disconnect the battery stacks 200L from the power source 500L. When in a DC charging mode, switches SL may be controlled to be in a second state to connect the battery stacks 200L to each other in series and the battery stacks 200L in series to the power source 500L.

Reference is now made to Fig. 9A, which shows a power system 1000M. Power system 1000M is an example of a power system that may have a charge storage device 100M with a plurality of battery stacks 200M, additional circuitry 400M, power source 500M, and a load with a plurality of coils 700M1, 700M2, 700M3. In the example of Fig. 9A the load may be a three phase electrical AC motor with three phase lines and each one of the battery stacks 200M may be connected to a respective coil 700M via a respective phase line of the AC motor. Additional circuitry 400M may be connected to each stack 200M. Additional circuitry 400M may be switching circuitry (e.g., comprising switches SM1, SM2, SM3, and SM4). Additional circuitry 400M may be configured into switch arrangements based on the operational mode of the battery stacks 200M of charge storage device 100M (e.g., discharge mode, AC charging mode, higher DC charging mode, lower DC charging mode, etc.). Additional circuitry 400M may be configured to switchably connect the plurality stacks 200M to each other in series. For example, additional circuitry 400M may be controlled to connect the plurality of battery stacks 200M to each other in series (via the coils 700M) when the battery stacks 200M are in a charging mode of operation. Additional circuitry 400M may be controlled to switchably connect the series of battery stacks 200M to the power source 500M when the battery stacks 200M are in the charging mode of operation. Additional circuitry 400M may be controlled to switchably disconnect the plurality of battery stacks 200M from being connected to each other in series when the battery stacks 200M are in a discharge mode of operation. Additional circuitry 400M may be controlled to disconnect the plurality of battery stacks 200M from the power source 500M when the battery stacks 200M are in the discharge mode of operation. When the plurality of battery stacks 200M are in the discharge mode of operation, each battery stack 200M may be in a closed loop configuration with a respective coil 700M. Additional circuitry 400M may include a plurality of switches SM1, SM2, SM3, SM4. Switches SM may be relays (e.g., electromechanical or solid state). Switches SM1, SM2, SM3 may be switchably connected between a terminal of a respective coil 700M1, 700M2, 700M3 and a terminal of a respective battery stack 200M1, 200M2, 200M3. Switches SM1, SM2, SM3 may be switchably connected to each other with at least one terminal of each switch SM1, SM2, SM3 connected to at least one terminal of another one of the switches SM1, SM2, SM3. Switch SM4 may be a central, shared switch switchably connected between a terminal of the power source 500M and a terminal of a coil 700M of the motor or a terminal of a battery stack 200M. Switch SM4 may be switchably connected to at least one other switch SM1, SM2, SM3 with at least one terminal of switch SM4 connected to at least one terminal of another one of the switches SM1, SM2, SM3. A terminal of each battery stack may be connected (e.g., directly) to a terminal of a respective coil 700M. Power source 500M may be a DC power source or an AC power source. As mentioned above, additional circuitry 400M may be controlled based on the operational mode of the battery stacks 200M (e.g., discharge mode, AC charging mode, higher DC charging mode, lower DC charging mode, etc.).

As shown in Fig. 9B, when in a discharge mode, switches SM1, SM2, SM3 may be controlled to be turned ON (e.g., closed) to connect the battery stacks 200M in a closed loop configuration with a respective coil 700M of the load, and switch SM4 may be controlled to be turned OFF to disconnect the battery stacks 200M from the power source 500M.

As shown in Fig. 9C, when in a charging mode, switches SM1, SM2, SM3 may be controlled to be turned OFF (e.g., opened). When these switches are open, intermediate nodes between each respective battery stack 200M/ coil 700M pair are disconnected from each other, resulting in the battery stack 200M/ coil 700M pairs being connected in series. Switch SM4 may be controlled to be turned ON to connect the series connection of battery stacks 200M and coils 700M across the terminals of power source 500M. The current flowing in the series of battery stacks 200M during charging may be substantially the same current value for all of the battery stacks 200M since they are connected to each other in series during charging. The flux that may be produced by each coil 700M of the motor may substantially cancel each other out and there may be zero (or substantially zero) torque charging (e.g., zero [or substantially zero] torque of the motor when charging during charging mode).

Reference is now made to Fig. 9D, which shows a power system 1000N. Power system 1000N is an example of a power system that may have a charge storage device 100N with a plurality of battery stacks 200N, additional circuitry 400N, power source 500N, and a load with a plurality of coils 700N1, 700N2, and 700N3. In the example of Fig. 9D the load 600N may be a three phase electrical AC motor with three phase lines and each one of the battery stacks 200N may be connected to a respective coil 700M via a respective phase line of the AC motor. Additional circuitry 400N may be connected to each stack 200N (as shown in Fig. 8 or as shown in Fig. 9A to Fig. 9C). Additional circuitry 400N may be switching circuitry. Additional circuitry 400N may be configured to switch arrangements based on the operational mode of the battery stacks 200N of charge storage device 100N (e.g., discharge mode, AC charging mode [e.g., 1 phase, 3 phase, etc.], higher DC charging mode, lower DC charging mode, etc.). Additional circuitry 400M may be configured to switchably connect the plurality stacks 200N to each other in series. For example, additional circuitry 400N may be controlled to connect the plurality of battery stacks 200N to each other in series (via the coils 700N) when the battery stacks 200N are in a charging mode of operation. Additional circuitry 400N may be controlled to switchably connect the series of battery stacks 200N to the power source 500N when the battery stacks 200N are in the charging mode of operation. Additional circuitry 400N may be controlled to switchably disconnect the plurality of battery stacks 200N from being connected to each other in series when the battery stacks 200N are in a discharge mode of operation. Additional circuitry 400N may be controlled to connect the series of battery stacks 200N to disconnect the plurality of battery stacks 200N from the power source 500N when the battery stacks 200N are in the discharge mode of operation. When the plurality of battery stacks 200N are in the discharge mode of operation, each battery stack 200N may be in a closed loop configuration with a respective coil 700N. Additional circuitry 400N may include a plurality of switches SN1, SN2, SN3, and SN4. Switches SN may be relays. Switches SN1, SN2, SN3 may be switchably connected between a terminal of a respective coil 700N1, 700N2, 700N3 and a terminal of a respective battery stack 200N1, 200N2, 200N3. Switches SN1, SN2, SN3 may be switchably connected to each other with at least one terminal of each switch SN1, SN2, SN3 connected to at least one terminal of another one of the switches SN1, SN2, SN3. Switch SN4 may be a central, shared switch switchably connected between a terminal of the power source 500N and a terminal of a coil 700N of the motor or a terminal of a battery stack 200N. Switch SN4 may be switchably connected to at least one other switch SN1, SN2, SN3 with at least one terminal of switch SN4 connected to at least one terminal of another one of the switches SN1, SN2, SN3. A terminal of each battery stack may be directly connected to a terminal of a respective coil 700N. Power source 500N may be an AC power source. Power source 500N may be a single phase AC power source. As mentioned above, additional circuitry 400N may be controlled based on the operational mode of the battery stacks 200N (e.g., discharge mode, AC charging mode, higher DC charging mode, lower DC charging mode, etc.). As shown in Fig. 9B, when in a discharge mode, switches SN1, SN2, SN3 may be controlled to be turned ON to connect the battery stacks 200N in a closed loop configuration with a respective coil 700N of the load and central, shared switch SN4 may be controlled to be turned OFF to disconnect the battery stacks 200N from the power source 500N. As shown in Fig. 9D, when in a charging mode, switches SN1, SN2, SN3 may be controlled to be turned OFF to connect the battery stacks 200N to each other in series via the coils 700N and central, shared switch SN4 may be controlled to be turned ON to connect the battery stacks 200N in series to the power source 500N. Additional circuitry 400N may be arranged to provide power factor correction (e.g., to increase a power factor and improve efficiency). The current flowing in the series of battery stacks 200N during charging may be substantially the same current value for all of the battery stacks 200N since they are connected to each other in series during charging. The flux that may be produced by each coil 700N of the motor may substantially cancel each other out and there may be zero (or substantially zero) torque charging (e.g., zero [or substantially zero] torque of the motor when charging during charging mode).

As shown in Fig. 9D, each battery cell 300 may include an electrochemical cell V and cell level converter circuitry 302. Cell level converter circuitry 302 may include inductorless full bridge circuitry (e.g., cell level converter circuitry 302B as shown in as shown in Fig. 3B for example). Cell level converter circuitry 302 may include a plurality of switches.

As shown in Fig. 9E, when charge storage device 100N is in an AC charging mode, a positive current I+ (from power source 500N being a single AC phase) may flow from the power source through one or more battery cells 300N of the charge storage device 100N (e.g., during a positive half cycle of the power source 500N). Control which switches ON and which switches OFF for power factor correction. May do power factor correction to reduce potential losses of the system.

As shown in Fig. 9F, when in the AC charging mode, a negative current I- (from power source 500N being a single AC phase) may flow from the power source through one or more battery cells 300N of the charge storage device 100N (e.g., during a negative half cycle of the power source 500N). Control which switches ON and which switches OFF for power factor correction. May do power factor correction to reduce potential losses of the system.

Reference is now made to Fig. 9G, which shows a power system 1000C. Power system 1000C is an example of a power system that may have a charge storage device 100C with a plurality of battery stacks 200C, additional circuitry 400C, power source 500C, and a load with a plurality of coils 700C1, 700C2, and 700C3. In the example of Fig. 9G the load may be a three phase electrical AC motor with three phase lines and each one of the battery stacks 200C may be connected to a respective coil 700C via a respective phase line of the AC motor. Additional circuitry 400Z (including switches SC1, SC2, SC3, and SC4) may be connected to each stack 200C (as shown in Fig. 9A to Fig. 9C). Additional circuitry 400C may be switching circuitry. Additional circuitry 400C may be configured into switch arrangements based on the operational mode of the battery stacks 200C of charge storage device 100C (e.g., discharge mode, AC charging mode [e.g., 1 phase, 3 phase, etc.], higher DC charging mode, lower DC charging mode, etc.). Additional circuitry 400C may be configured to switchably connect the plurality stacks 200C to each other in series. For example, additional circuitry 400C may be controlled to connect the plurality of battery stacks 200C to each other in series (via the coils 700C) when the battery stacks 200C are in a charging mode of operation. Additional circuitry 400C may be controlled to switchably connect the series of battery stacks 200C to the power source 500C when the battery stacks 200C are in the charging mode of operation. Additional circuitry 400C may be controlled to switchably disconnect the plurality of battery stacks 200C from being connected to each other in series when the battery stacks 200C are in a discharge mode of operation. Additional circuitry 400C may be controlled to connect the series of battery stacks 200C to disconnect the plurality of battery stacks 200C from the power source 500C when the battery stacks 200C are in the discharge mode of operation. When the plurality of battery stacks 200C are in the discharge mode of operation, each battery stack 200C may be in a closed loop configuration with a respective coil 700C. Additional circuitry 400C may include a plurality of switches SC1, SC2, SC3. Switches SC1, SC2, SC3 may be relays (e.g., electromechanical or solid state). Switches SC1, SC2, SC3 may be switchably connected between a terminal of a respective coil 700C1, 700C2, 700C3 and a terminal of a respective battery stack 200C1, 200C2, 200C3. Switches SC1, SC2, SC3 may be switchably connected to each other with at least one terminal of each switch SC1, SC2, SC3 connected to at least one terminal of another one of the switches SC1, SC2, SC3. Switching circuitry SC4 may be central, shared switching circuitry switchably connected between three terminals of the power source 500C and a terminal of a coil 700C of the motor or a terminal of a battery stack 200C. Switching circuitry SC4 may be switchably connected to at least one other switch SC1, SC2, SC3 with at least one terminal of switching circuitry SC4 connected to at least one terminal of another one of the switches SC1, SC2, SC3. Switching circuitry SC4 may be converter circuitry. Switching circuitry SC4 may be AC to DC rectifier circuitry. Switching circuitry SC4 may be a diode bridge arranged as a three phase diode rectifier. Switching circuitry SC4 may be arranged to convert a three phase AC input from power source 500Z to a DC output to charge one or more battery cells 300 of battery stacks 200C. Switching circuitry SC4 may include a plurality of switches or diodes. For example, switching circuitry SC4 may include six diodes. An additional switch (not illustrated) may be connected between switching circuitry SC4 and the charge storage device 100C to switchably connect and disconnect the switching circuitry SCZ4 to the charge storage device 100C. Additional switches (not illustrated) may be connected between switching circuitry SC4 and the power source 500C to switchably connect and disconnect the switching circuitry SC4 to the power source 500C. For example, the additional switches may be three switches switchably connected between three terminals of the power source 500C and three respective terminals of the switching circuitry SC4. The additional switches may be a triple relay switch or three separate relay switches (e.g., electromechanical or solid state). The additional switches may be connected to each respective phase line U, V, W of the power source 500C. A terminal of each battery stack 200C may be directly connected to a terminal of a respective coil 700C. Power source 500C may be an AC power source. Power source 500C may be a three phase AC power source with three phase lines U, V, W. As mentioned above, additional circuitry 400C may be controlled based on the operational mode of the battery stacks 200C (e.g., discharge mode, [3 phase] AC charging mode, higher DC charging mode, lower DC charging mode, etc.). The current flowing in the series of battery stacks 200C during charging may be substantially the same current value for all of the battery stacks 200C since they are connected to each other in series during charging. The flux that may be produced by each coil 700C of the motor may substantially cancel each other out and there may be zero (or substantially zero) torque charging (e.g., zero [or substantially zero] torque of the motor when charging during charging mode).

Reference is now made to Fig. 10A and Fig. 10B, which show a power system 1000P. Power system 1000P is an example of a power system that may have a charge storage device 100P with a plurality of battery stacks 200P, additional circuitry 400P (including switches SP1, SP2, and SP3), power source 500P, and a load with a plurality of coils 700P1, 700P2, 700P3. In the example of Fig. 10A and Fig. 10B the load 600P may be a three phase electrical AC motor with three phase lines and each one of the battery stacks 200P may be connected to at least one coil 700P via a respective phase line of the AC motor. Load 600P may have a plurality of configurations. Load 600P may be arranged with coils 700P in a star (or wye configuration) configuration as shown in Fig. 10A with terminal Vb of each battery stack 200P connected to a terminal of a respective coil 700P. In the star configuration terminal Va of battery stack 200P3 may be connected to a neutral terminal of the load 600P. Load 600P may be arranged with coils 700P in a delta configuration (or mesh configuration) as shown in Fig. 10B with terminal Vb of each battery stack 200P connected to terminals of at least two coils 700P. In the delta configuration the load 600P might not include a neutral terminal. Additional circuitry 400P may be connected to each stack 200P. Additional circuitry 400P may be switching circuitry. Additional circuitry 400P may be configured to switch arrangements based on the operational mode of the battery stacks 200P of charge storage device 100P (e.g., discharge mode, AC charging mode [e.g., 1 phase, 3 phase, etc.], higher DC charging mode, lower DC charging mode, star mode, delta mode etc.). Additional circuitry 400P may be configured to switchably connect the plurality of stacks 200P to the load 600P/ coils 700P in a star configuration when the battery stacks are in star mode (also referred to as "star motoring mode"). Additional circuitry 400P may be configured to switchably connect the plurality of stacks 200P to the load 600P/ coils 700P in a delta configuration when the battery stacks are in delta mode (also referred to as "delta motoring mode"). In the motoring modes of operation switches SP1 and SP2 may be controlled (e.g., by a controller) to connect a terminal Va of battery stack 200P 1 and a terminal Va of battery stack 200P2 to a terminal Va of battery stack 200P3 at a common return node TP. Additional circuitry 400P may be configured to switchably connect the plurality of battery stacks 200P to each other in a different arrangement for other modes of operation. For example, additional circuitry 400P may be controlled to connect the plurality of battery stacks 200P to each other in a different arrangement when the battery stacks 200P are in a charging mode of operation. Additional circuitry 400P may be controlled to switchably connect the series of battery stacks 200P to the power source 500P when the battery stacks 200P are in the charging mode of operation. Additional circuitry 400P may be controlled to switchably disconnect the plurality of battery stacks 200P from being connected to each other in series when the battery stacks 200P are in a discharge mode of operation (either star mode or delta mode). Additional circuitry 400P may include a plurality of switches SP1, SP2, SP3. Switches SP may be relays (e.g., electromechanical or solid state). Switch SP1 may be switchably connected between a terminal Va of battery stack 200P1 and either a terminal Vb of battery stack 200P2 or the common return node TP. Switch SP2 may be switchably connected between a terminal Va of battery stack 200P2 and either a terminal Vb of battery stack 200P3 or the common return node TP. Switch SP3 may be central, shared switch switchably connected between a terminal of the power source 500P and a terminal of at least one coil 700P of the motor and/or a terminal of a battery stack 200P1. As mentioned above, a terminal (e.g., terminal Vb) of each battery stack 200P (e.g., battery stacks 200P1, 200P2, 200P3) may be directly connected to a terminal of the load 600P (e.g., at least one terminal of coils 700P1, 700P2, 700P3). Power source 500P may be an AC power source or a DC power source. Switches SP1, SP2 may be configured to disconnect the battery stacks 200P1 and 200P2 from the common return node TP when in charging modes. Switch SP3 may be configured to connect the battery stacks 200P to the power source 500P when in charging modes. Switch SP1 may be configured to disconnect terminal Va of stack 200P1 from the common return node TP and connect terminal Va of stack 200P1 to terminal Vb of stack 200P2 when in charging modes. Switch SP1 may be configured to disconnect terminal Va of stack 200P1 from the common return node TP and connect terminal Va of stack 200P1 to terminal Vb of stack 200P2 when in charging modes. In charging modes when the terminals Va of stacks 200P1 and 200P2 are not connected to the common return node TP and are instead connected to the terminal Vb of a successive battery stack 200P2 and 200P3, respectively, the battery stacks may substantially be considered to be connected in a series type connection with one another. In charging modes current that flows to the motor might not affect the motor (e.g., if it is a DC current). In some examples, further switches may be connected between the battery stacks and the motor to completely disconnect the motor from the battery stacks in charging modes. In some examples, an additional switch may be connected between common return node and power source 500P to disconnect the power source from common return node TP during discharge modes. As mentioned above, additional circuitry 400P may be controlled based on the operational mode of the battery stacks 200P (e.g., discharge mode, AC charging mode, higher DC charging mode, lower DC charging mode, star mode, delta mode, etc.). The battery cells 300 of each battery stack 200P may be configure for cellular bypass.

The amount of voltage supplied to the motor 600P (and how many battery cells 300 are connected or bypassed) and whether the motor 600P is in delta mode or star mode may depend on the speed of the motor 600P. For example, if the motor 600P is operated at a relatively lower speed (a relatively lower rotations per minute) then the motor may be operated in star mode (as shown in Fig. 10A) and less voltage may be supplied as compared to delta mode. For example, if the motor 600P is operated at a relatively higher speed (a relatively higher rotations per minute) then the motor may be operated in delta mode (as shown in Fig. 10B) and more voltage may be supplied as compared to star mode. For example, if the motor 600P is in star mode then fewer battery cells 300 may be used to supply the relatively lower voltage (and relatively more battery cells may be bypassed). For example, if the motor 600P is in delta mode then relatively more battery cells 300 may be used to supply the relatively greater voltage (and relatively fewer battery cells may be bypassed). For example, the motor 600P may be controlled to go to star mode when operated at a relatively lower speed and less voltage is supplied to the motor, and more battery cells may be bypassed, so fewer battery cells may be used. For example, the motor 600P may be controlled to go to delta mode when operated at a relatively higher speed and more voltage is supplied to the motor, so more battery cells may be used, and fewer battery cells may be bypassed. For example, the same charge storage device 100P may support either a star motor or a delta motor or a motor that is capable of both star mode and delta mode.

As mentioned above, switches SP may also change from a motoring mode (star mode or delta mode) to charging mode (e.g., fast DC charging) by connecting all of the battery stacks 200P substantially in series (with terminal Va of stack 200P1 connected to terminal Vb of stack 200P2, and terminal Va of stack 200P2 connected to terminal Vb of stack 200P3, and with stacks 200P1 and 200P2 disconnected from common return node TP) to facilitate a relatively high DC voltage across the plurality of battery stacks 200P. In motoring mode all of the battery stacks 200P may share a common return (with terminal Va of stack 200P1 and terminal Va of stack 200P2 connected to terminal Va of stack 200P3 at the common return node TP). In motoring mode the battery stacks 200P may be disconnected from the power source 500P, e.g. by turning OFF the central, shared switch SP3.

Reference is now made to Fig. 11A, which shows a battery stack 200Q. Battery stack 200Q may be part of charge storage device 100. Charge storage device 100 may have a plurality of battery stacks 200Q each one similar to battery stack 200Q. For example, the charge storage device 100 may have three battery stacks 200Q. The load 600 may be a motor with a plurality of coils 700Q. For example, the motor may have three coils 700Q. For example, each battery stack 200Q may be connected to a respective coil 700Q. Each battery stack 200Q may include a plurality of battery cells 300F (e.g., battery cells 300F1, 300F2, ... , 300FN). Each battery cell 300F may include an electrochemical cell V and cell level converter circuitry 302 (e.g., cell level converter circuitry 302F as shown in Fig. 3F). The plurality of battery cells 300F of the battery stack 200Q may be connected to each other in series. For example, for each battery cell 300F, a terminal of cell level converter circuitry 302F of a given battery cell 300F may be connected to a terminal of a different cell level converter circuitry 302F of a different battery cell 300F.

As mentioned above, the load 600 may be an SRM motor. The battery cells 300F may be configured to provide differential voltage based on the mode of operation of the battery stack 200Q. For example, the battery cells 300F may be configured to provide a positive voltage, a relatively greater negative voltage, and a zero (or substantially zero) voltage depending on the mode of operation. For example, the battery cell 300F may be configured to output the relatively greater negative voltage when a first switch is turned ON and a second switch is turned OFF, and the pair of series connected transistors are both turned OFF. The battery cell 300F may be configured to output the positive voltage when the second switch is turned ON and the first switch is turned OFF, and the pair of series connected transistors are both turned OFF. The battery cell 300F may be configured to output zero (or substantially zero) volts when the pair of series connected transistors are both turned ON and the first switch is turned OFF, and the second switch is turned the OFF.

Reference is now made to Fig. 11B, which shows a battery stack 200R. Battery stack 200R may be part of charge storage device 100. Charge storage device 100 may have a plurality of battery stacks 200R each one similar to battery stack 200R. For example, the charge storage device 100 may have three battery stacks 200R. The load 600 may be a motor with a plurality of coils 700R. For example, the motor may have three coils 700R. For example, each battery stack 200R may be connected to a respective coil 700R. Each battery stack 200R may include a plurality of battery cells 300G (e.g., battery cells 300G1, 300G2, ... , 300GN). Each battery cell 300G may include an electrochemical cell V and cell level converter circuitry 302G (e.g., cell level converter circuitry 302G as shown in Fig. 3G). The plurality of battery cells 300G of the battery stack 200R may be connected to each other in series. For example, for each battery cell 300G, a terminal of cell level converter circuitry 302G of a given battery cell 300G may be connected to a terminal of a different cell level converter circuitry 302G of a different battery cell 300G.

As mentioned above, the load 600 may be an SRM motor. The battery cells 300G may be configured to provide differential voltage based on the mode of operation of the battery stack 200R. For example, the battery cells 300G may be configured to provide a positive voltage, a relatively greater negative voltage, and a zero (or substantially zero) voltage depending on the mode of operation. For example, the battery cell 300G may be configured to output the relatively greater negative voltage when a pair of switches of the plurality of switches are turned ON, and a pair of switches of the plurality of switches are turned OFF. The battery cell 300G may be configured to output the positive voltage when a pair of switches of the plurality of switches are turned ON, and a pair of switches of the plurality of switches are turned OFF. The battery cell 300G may be configured to output zero (or substantially zero) volts by turning ON a pair of switches of the plurality of switches, and turning OFF a pair of switches of the plurality of switches. The output may depend on which specific pairs of switches are turned ON and which are turned OFF.

Reference is now made to Fig. 11C, which shows a battery stack 200S. Battery stack 200S may be part of charge storage device 100. Charge storage device 100 may have a plurality of battery stacks 200S each one similar to battery stack 200S. For example, the charge storage device 100 may have three battery stacks 200S. The load 600 may be a motor with a plurality of coils 700S. For example, the motor may have six coils 700S. The six coils 700S may be separated into three pairs of coils (e.g., pair of coils 700S1, 700S2). For example, each battery stack 200S may be connected to a respective pair of coils 700S1, 700S2. Each battery stack 200S may include a plurality of battery cells 300H (e.g., battery cells 300H1, 300H2, ... , 300HN). Each battery cell 300H may include an electrochemical cell V and cell level converter circuitry 302H (e.g., cell level converter circuitry 302H as shown in Fig. 3H). The plurality of battery cells 300H of the battery stack 200S may be connected to each other with a plurality of series connections. For example, for each battery cell 300H, a plurality of terminals of cell level converter circuitry 302H of a given battery cell 300H may be connected to a plurality of terminals of a different cell level converter circuitry 302H of a different battery cell 300H (e.g., as described above with relation to Fig. 3H).

For example, the load 600 may be an SRM motor. The battery cells 300H may be configured to provide a differential voltage to each respective motor coil 700S based on the mode of operation of the battery stack 200S. For example, the battery cells 300H may be configured to provide a plurality of output voltages to a respective plurality of motor coils 700S. For example, the battery cells 300H may be configured to provide a positive voltage, a relatively greater negative voltage, and a zero (or substantially zero) voltage to a respective motor coil 700S depending on the mode of operation. For example, the battery cell 300H may be configured to output the relatively greater negative voltage, the positive voltage, or zero (or substantially zero) volts to the respective motor coil S depending on which switches are turned ON and which switches are turned OFF.

For example, battery cell 300H may be controlled (e.g., by a controller) to get different levels of output voltage. For example, each battery stack 200S of battery cells 300H may be associated with two coils/inductors 700S1, 700S2 of the motor 600. For example, the plurality of capacitors of the battery cell 300H may be arranged to lock in voltage levels, and each battery cell 300H may be controlled to produce different voltages (e.g., a plurality of voltage levels) that may be combined in different ways. Battery cell 300H may be controlled to produce a plurality of voltage levels for a de-magnetize mode of an SRM motor.

Reference is now made to Fig. 12A, which shows a pair of battery stacks 200T11, 200T12. Pair of battery stacks 200T11, 200T12 may also be referred to as a set of battery stacks 200T11, 200T12. Battery stacks 200T11, 200T12 may be part of charge storage device 100. Charge storage device 100 may have a plurality of pairs of battery stacks 200T11, 200T12 each one similar to pair of battery stacks 200T11, 200T12. For example, the charge storage device 100 may have three pairs of battery stacks 200T11, 200T12. The load 600 may be a motor with a plurality of coils 700T. For example, the motor may have three coils 700T. For example, each pair of battery stacks 200T11, 200T12 may be connected to a respective coil 700T. For example, at least one terminal of battery stack 200T11 may be connected to a first terminal of coil 700T1, and at least one terminal of battery stack 200T12 may be connected to a second terminal of coil 700T1. For example, at least one terminal of battery stack 200T11 may be connected directly to at least one terminal of battery stack 200T12. Each battery stack 200R may include a plurality of battery cells 300T, which may be any of the previously described battery cells illustrated in Figs. 3A-3N. Each battery cell 300T may include an electrochemical cell V and cell level converter circuitry 302T. The plurality of battery cells 300T of the battery stack 200T may be connected to each other in series. For example, for each battery cell 300T, a terminal of cell level converter circuitry 302T of a given battery cell 300T may be connected to a terminal of a different cell level converter circuitry 302T of a different battery cell 300T. In one example of charge storage device 100T, each battery stack 200T of the pair of battery stacks 200T11, 200T12 may have the same cell level converter circuitry 302 for each battery cell of a given battery stack for both battery stacks. For example, the battery cell 300T may include the inductorless half bridge cell level converter circuitry 302A shown in Fig. 3A, or any other cell level converter circuitry described herein.

For example, the load 600 may be an SRM motor. The pair of battery stacks 200T may be configured to provide differential voltage based on the mode of operation of the pair of battery stacks 200T. For example, the pair of battery stacks 200T may be configured to provide a positive voltage, a negative voltage, and a zero (or substantially zero) voltage depending on the mode of operation. For example, the pair of battery stacks 200T may be configured to output the differential voltage (e.g., negative voltage, positive voltage, or zero [or substantially zero] volts) by controlling a first battery stack 200T and a second battery stack 200T For example, if all of the parallel switches of the battery stack 200T11 are turned ON (e.g., closed) and all of the parallel switches of the battery stack 200T12 are turned ON (e.g., closed) then all of the electrochemical cells V of battery stack 200T11 and battery stack 200T12 may be bypassed and zero (or substantially zero) volts may be provided to the motor coil 700T1 (for example, the switches may have a relatively low drain-source on resistance [RDSon]). If all of the parallel switches of the battery stack 200T11 are turned ON (e.g., closed) but not all of the parallel switches of the battery stack 200T12 are turned ON (e.g., closed) then all of the electrochemical cells V of battery stack 200T11 may be bypassed and at least some of the electrochemical cells V of battery stack 200T12 may provide a negative voltage to the motor coil 700T1 (e.g., a voltage at a first polarity relative to the motor coil). If all of the parallel switches of the battery stack 200T12 are turned ON (e.g., closed) but not all of the parallel switches of the battery stack 200T11 are turned ON (e.g., closed) then all of the electrochemical cells V of battery stack 200T12 may be bypassed and at least some of the electrochemical cells V of battery stack 200T11 may provide a positive voltage to the motor coil 700T1 (e.g., a voltage at a second polarity relative to the motor coil). In some examples, the switches of the battery stacks 200T11 and 200T12 may be controlled (e.g., some of the switches of battery stack 200T11 are ON and are OFF, while some of the switches of battery stack 200T11 are ON and some are OFF) to control the magnitude of the voltage provided to the motor coil 700T1 (e.g., positive voltage or negative voltage).

Reference is now made to Fig. 12B, which shows a pair of battery stacks 200U11, 200U12. Pair of battery stacks 200U11, 200U12 may also be referred to as a set of battery stacks 200U11, 200U12. Battery stacks 200U11, 200U12 may be part of charge storage device 100. Charge storage device 100 may have a plurality of pairs of battery stacks 200U11, 200U12 each one similar to pair of battery stacks 200U11, 200U12. For example, the charge storage device 100 may have three pairs of battery stacks 200U11, 200U12. The load 600 may be a motor with a plurality of coils 700U. For example, the motor may have three coils 700U. For example, each pair of battery stacks 200U11, 200U12 may be connected to a respective coil 700U. For example, at least one terminal of battery stack 200U11 may be connected to a first terminal of coil 700U1, and at least one terminal of battery stack 200U12 may be connected to a second terminal of coil 700U1. For example, at least one terminal of battery stack 200U11 may be connected directly to at least one terminal of battery stack 200U12. Each battery stack 200U may include a plurality of battery cells 300U, which may be any of the previously described battery cells illustrated in Figs. 3A-3N. Each battery cell 300U may include an electrochemical cell V and cell level converter circuitry 302U. The plurality of battery cells 300U of the battery stack 200U may be connected to each other in series. For example, for each battery cell 300U, a terminal of cell level converter circuitry 302U of a given battery cell 300U may be connected to a terminal of a different cell level converter circuitry 302U of a different battery cell 300U. In the example of Fig. 12B the battery cell 300U may include any appropriate cell level converter circuitry 302U. For example, each battery stack 200U of the pair of battery stacks 200U11, 200U12 may have the same cell level converter circuitry 302 for each battery cell 300U of a given battery stack 200U, but may have battery cells 300U with different cell level converter circuitry 302U for each battery stack 200U. For example, for a first battery stack 200U11 the battery cell 300U1 may include the inductorless half bridge cell level converter circuitry 302A shown in Fig. 3A. For example, for a second battery stack 200U21 the battery cell 300U2 may include the inductorless full bridge cell level converter circuitry 302B shown in Fig. 3B.

For example, the load 600 may be an SRM motor. The pair of battery stacks 200U may be configured to provide differential voltage based on the mode of operation of the pair of battery stacks 200U. For example, the pair of battery stacks 200U may be configured to provide a positive voltage, a relatively greater negative voltage, and a zero (or substantially zero) voltage depending on the mode of operation. For example, the pair of battery stacks 200U may be configured to output the differential voltage (e.g., relatively greater negative voltage, the positive voltage, or zero [or substantially zero] volts) by controlling a first battery stack 200U and a second battery stack 200U. For example, the pair of battery stacks 200U may produce a relatively greater negative differential voltage since each individual battery stack 200U has battery cells with different cell level circuitry for that respective battery stack. For example, the right battery stack 200U12 with inductorless full bridges may be able to produce twice the amount of voltage that the left battery stack 200U11 with inductorless half bridges may be able to produce. So, for example, if the motor is an SRM motor, then the de-magnetizing voltage provided from the battery stack to the SRM motor may be twice as large. For example, if all of the parallel switches of the battery stack 200U11 are turned ON (e.g., closed) but not all of the switches of the battery stack 200T12 used to bypass the electrochemical cells V are turned ON (e.g., closed) then all of the electrochemical cells V of battery stack 200U11 may be bypassed and at least some of the electrochemical cells V of battery stack 200U12 may provide a relatively greater negative voltage to the motor coil 700T1 (e.g., a voltage at a first polarity relative to the motor coil).

Reference is now made to Fig. 13A, which shows a power system 1000V. Power system 1000V is an example of a power system that may have a charge storage device 100V with a plurality of battery stacks 200V, additional circuitry 400V, a plurality of power sources (e.g., power sources 500VA and 500VB), and a load with a plurality of coils (e.g., coils 700V11, 700V12, 700V21, 700V22, 700V31, 700V32). Power sources 500VA and 500VB may be external to an electric vehicle. In the example of Fig. 13A the load 600V may be a three phase electrical AC motor with three phase lines and three pairs of coils (six coils, e.g. first pair of coils 700V11 and 700V12, second pair of coils 700V21 and700V22, and third pair of coils 700V31 and 700V32). Each pair of coils may be connected to a phase line of the motor. Each one of the battery stacks 200V may have at least one terminal (e.g. a negative terminal, a positive terminal, first voltage terminal, etc.) connected to one terminal of a respective coil 700V to form a series circuit of a battery stack and coil. Each series circuit of a battery stack and coil may have at least one terminal connected to at least one terminal of a different series circuit of a battery stack and coil. For example, nodes U, V, W may each be located between a respective pair of coils in two respective series circuits. For example, each pair of coils may include a first coil having a first polarity and a second coil having a second polarity. For example, the first polarity may be different and opposite of the second polarity. For example, the first polarity may be a positive polarity and the second polarity may be a negative polarity. Additional circuitry 400V may be connected in the power system 1000V. Additional circuitry 400V may be switching circuitry. Additional circuitry 400V may be configured to switch arrangements based on the operational mode of the battery stacks 200V of charge storage device 100V (e.g., discharge mode, [3 phase/1 phase] AC charging mode, higher DC charging mode, lower DC charging mode, etc.). Additional circuitry 400V may be configured to switchably connect a plurality of battery stacks 200V to a first power source 500VA in a first higher voltage charging configuration or a second lower voltage charging configuration when the battery stacks 200V are in a DC charging mode. Additional circuitry 400V may be configured to switchably connect a plurality of battery stacks 200V to a second power source 500VB in an AC charging configuration when the battery stacks 200V are in an AC charging mode. Additional circuitry may also be configured to switchably connect a plurality of battery stacks 200V to the second power source 500VB in a third lower voltage charging configuration when the battery stacks 200V are in a DC charging mode. Additional circuitry 400V may be configured to switchably connect a plurality of battery stacks 200V to the load 600V/coils 700V when the battery stacks 200V are in discharge mode.

Additional circuitry 400V may be configured to switchably connect the plurality stacks 200V to each other in series when in a higher DC charging mode. For example, additional circuitry 400V may be controlled to connect the plurality of battery stacks 200V to each other in series when the battery stacks 200V are in a higher voltage charging mode of operation. Additional circuitry 400V may be controlled to switchably connect the series of battery stacks 200V to a higher voltage power source 500VA (e.g., about 800 volts DC) when the battery stacks 200V are in the DC charging mode of operation. For example, all of the battery stacks 200V may be connected in series when the battery stacks 200V are in a higher voltage charging mode of operation. For example, some of the battery cells 300V may be in cellular bypass mode when the battery stacks 200V are connected in series.

Additional circuitry 400V may be configured to switchably connect at least some of the plurality of stacks 200V to each other in series when in a lower DC charging mode. For example, additional circuitry 400V may be controlled to connect at least some of the plurality of battery stacks 200V to each other in a first series and some of the plurality of battery stacks 200V to each other in a second series when the battery stacks 200V are in a lower voltage charging mode of operation. Additional circuitry 400V may be controlled to switchably connect one of the series of battery stacks 200V at a time to a lower voltage power source 500VA, 500VB (e.g., about 400 volts DC) when the battery stacks 200V are in the DC charging mode of operation. Additional circuitry 400V may be controlled to switchably disconnect another one of the series of battery stacks 200V at a time from the lower voltage power source 500VA, 500VB (e.g., about 400 volts DC) when the battery stacks 200V from a different series are in the lower voltage DC charging mode of operation. For example, half of the battery stacks 200V may be connected in series to the power source 500VA, 500VB and half of the battery stacks 200V may be disconnected from the power source 500VA, 500VB at a time when the battery stacks 200V are in a lower voltage charging mode of operation (e.g., a first stage of charging). After the first half of battery stacks 200V are substantially charged, the groups may switch and the second half of battery stacks 200V may be connected to the power source 500V and the first half of battery stacks 200V may be disconnected from the power source 500V (e.g., a second stage of charging). For example, some of the battery cells 300V may be in cellular bypass mode when at least some of the battery stacks 200V are connected in series.

Additional circuitry 400V may be configured to switchably connect a plurality of battery stacks 200V to a second power source 500VB when the battery stacks 200V are in an AC charging mode of operation. Additional circuitry 400V may be configured to switchably connect a plurality of battery stacks 200V to second power source 500VB when the battery stacks 200V are in a lower voltage charging mode of operation if 500VB is a lower voltage (e.g., about 400 volt DC source).

Additional circuitry 400V may be controlled to switchably disconnect a plurality of battery stacks 200V from being connected to each other in series when the battery stacks 200V are in a discharge mode of operation. Additional circuitry 400V may be controlled to disconnect the battery stacks 200V from both power sources 500VA, 500VB when the battery stacks 200V are in the discharge mode of operation. When the plurality of battery stacks 200V are in the discharge mode of operation, each battery stack 200V may be in a closed loop configuration with at least one coil 700V.

Circuitry 400V may include a plurality of switches SV1, SV2, SV3. Switches SV may be relays (e.g., electromechanical or solid state). Switch SV1 may be switchably connected between a terminal of a first coil 700V22 (e.g., associated with a first battery stack 200V4/first pair of coils 700V2) and a terminal of a second coil 700V31 (e.g., associated with a second battery stack 200V5/second pair of coils 700V3). Switch SV2 may be switchably connected between a node Y connected to at least one terminal each of a first plurality of battery stacks 200V and a node X connected to at least one terminal each of a second plurality of battery stacks 200V. For example, switch SV2 may be switchably connected between a respective terminal of each of a first plurality of battery stacks 200V1, 200V2, 200V3, 200V4 (e.g., associated with two pairs of coils) and a respective terminal of each of a second plurality of battery stacks 200V5, 200V6 (e.g., associated with a different pair of coils). A terminal of first battery stack 200V4 may be associated with a first battery stack/first pair of coils and a terminal of second battery stack 200V5 may be associated with a second battery stack/second pair of coils. Switch SV3 may be switchably connected between a terminal of a third coil 700V12 (e.g., associated with a third battery stack 200V2/third pair of coils 700V1) and a terminal of a second coil 700V21 (e.g., associated with a fourth second battery stack 200V3/the first pair of coils 700V2).

A first terminal of power source 500VA may be connected to a first terminal of power source 500VB, a terminal of the third coil 700V12 (e.g., associated with the third battery stack 200V2/third pair of coils 700V1) and a terminal of a fifth coil 700V11 (e.g., associated with a fifth battery stack 200V1/the third pair of coils 700V1) at a first node U. A second terminal of power source 500VA may be connected to a terminal of the second switch SV2, a terminal of second battery stack 200V5 (e.g., associated with a second battery stack/second pair of coils 700V3), and a terminal of a sixth battery stack 200V6 (e.g., associated with a sixth battery stack/second pair of coils 700V3) at node X.

As mentioned above, a first terminal of power source 500VB may be connected to the first node U, which is connected to a terminal of the third coil 700V12 (e.g., associated with the third battery stack 200V2/third pair of coils 700V1) and a terminal of a fifth coil 700V11 (e.g., associated with a fifth battery stack 200V1/the third pair of coils 700V1). A second terminal of power source 500VB may be connected to a second node V, which is connected to a terminal of first coil 700V22 (e.g., associated with a first battery stack 200V4/first pair of coils 700V2) and a terminal of a/the second coil 700V21 (e.g., associated with a fourth second battery stack 200V3/the first pair of coils 700V2). A third terminal of power source 500VB may be connected to a third node W, which is connected to a terminal of a sixth coil 700V32 (e.g., associated with a sixth battery stack 200V6/second pair of coils 700V3) and a terminal of a second coil 700V31 (e.g., associated with a second battery stack 200V5/second pair of coils 700V3).

Switches SV1, SV3 may be connected between a pair of coils (a first terminal connected to a terminal of a first pair of coils [one of nodes U, V, or W] and a second terminal connected to a terminal of a second pair of coils [a different one of nodes U, V, or W]).

Switch SV2 may be connected between a first pair/plurality of battery stacks and a second pair/plurality of battery stacks (a first terminal connected to a terminal of a first pair/plurality of battery stacks [node Y] and a second terminal connected to a terminal of a second pair/plurality of battery stacks [node X]).

An additional switch (not illustrated) may be connected between power source 500VA and the charge storage device 100V to switchably connect and disconnect the power source 500VA to the charge storage device 100V. For example, an additional switch may be connected between power source 500VA and node U, and/or an additional switch may be connected between power source 500VA and node X. Additional switches (not illustrated) may be connected between power source 500VB and the charge storage device 100V to switchably connect and disconnect the power source 500VB to the charge storage device 100V. For example, the additional switches may be three switches switchably connected between three terminals of the power source 500VB and three respective terminals of the to the charge storage device 100V, e.g., connected to nodes U, V, W respectively. The additional switches may be a triple relay switch or three separate relay switches. The additional switches may be connected to each respective phase line U, V, W of the power source 500VB.

Power source 500VA may be a DC power source. For example, power source 500VA may be configured to supply a relatively higher DC voltage of about 800 volts DC, or a relatively lower DC voltage of about 400 volts DC.

Power source 500VB may be an AC power source or a DC power source. For example, power source 500VB may be a three phase AC power source. For example, power source 500VB may be configured to supply a relatively lower DC voltage of about 400 volts DC.

As mentioned above, additional circuitry 400V may be controlled based on the operational mode of the battery stacks 200V (e.g., discharge mode, AC charging mode, higher DC charging mode, lower DC charging mode, etc.). The current flowing in the series of battery stacks 200V during charging may be substantially the same current value for all of the battery stacks 200V since they are connected to each other in series during charging. [The flux that may be produced by each coil 700V of the motor may substantially cancel each other out and there may be zero (or substantially zero) torque charging (e.g., zero [or substantially zero] torque of the motor when charging during charging mode).

Reference is now made to Fig. 13B, which shows an example chart of different modes of the charge storage device 100V. One or more switches S of the cell level converter circuitry 302V may be controlled to arrange the charge storage device 100V in different arrangements depending on the mode of operation of the charge storage device 100V. For example, in the discharge arrangement, switch SV2 may be switched ON. For example, the states of the other switches SV1, SV3 may not matter in discharge mode. In the AC charging arrangement, switch SV2 may be switched ON, switch SV1 may be switched OFF, and switch SV3 may be switched OFF. In the lower voltage DC charging arrangement, switch SV1 may be switched ON, switch SV3 may be switched ON, and switch SV2 may be switched ON. In the higher voltage DC charging arrangement, switch SV1 may be switched ON, switch SV3 may be switched OFF, and switch SV2 may be switched OFF.

Reference is now made to Fig. 13C, which shows a battery stack 200V for a charge storage device 100V. Battery stack 200V may be part of charge storage device 100V. Charge storage device 100V may have a plurality of battery stacks 200V each one similar to battery stack 200V. For example, the charge storage device 100V may have six battery stacks 200V. The load 600V may be a motor with a plurality of coils 700V. For example, the motor may have six coils 700V separated into three pairs of coils 700V. For example, each battery stack 200V may be connected to a respective coil 700V. Each battery stack 200V may include a plurality of battery cells 300V. Each battery cell 300V may include an electrochemical cell V and cell level converter circuitry 302V. The plurality of battery cells 300V of the battery stack 200V may be connected to each other in series. For example, for each battery cell 300V, a terminal of cell level converter circuitry 302V of a given battery cell 300V may be connected to a terminal of a different cell level converter circuitry 302V of a different battery cell 300V. In the example of Fig. 13B the battery cell 300V may include any appropriate cell level converter circuitry 302V. For example, the battery cell 300V may include any of the cell level converter circuitry 302 shown in Fig. 3A to Fig. 3N. For example, the battery cell 300V may include the inductorless full bridge cell level converter circuitry 302B shown in Fig. 3B.

Reference is now made to Fig. 14A, which shows a battery module 1400. Battery module 1400 may be part of charge storage device 100. Charge storage device 100 may have a plurality of battery modules 1400 each one similar to battery module 1400. For example, the charge storage device 100 may have three battery modules 1400. The load 600 may be a motor with a plurality of coils 700. For example, the motor may have three coils 700. For example, each battery module 1400 may be connected to a respective coil 700. Each battery module 1400 may include a plurality of battery stacks 200W (e.g., 200WA1, 200WB1, ... 200WN1). Each battery module 1400 may include a plurality of switches SW. For example, a pair of switches SW may be connected to each battery stack 200W. The pair of switches SW may include a series switch with a first terminal of the series switch connected to a first terminal of a given battery stack 200W (e.g., switch SWA11 connected in series with battery stack 200WA1, switch SWB11 connected in series with battery stack 200WB1, ..., switch SWN11 connected in series with battery stack 200WN1), and a parallel switch with a first terminal of the parallel switch connected to a second terminal of the given battery stack 200W and a second terminal of the parallel switch connected to a second terminal of the respective series switch (e.g., switch SWA12 connected in parallel with the series connection of battery stack 200WA1 and switch SWA11, switch SWB12 connected in parallel with the series connection of battery stack 200WB1 and switch SWB11, ..., switch SWN12 connected in parallel with the series connection of battery stack 200WN1 and switch SWN11). The plurality of battery stacks 200W of the battery module 1400 may be connected to each other in series. The plurality of battery stacks 200W of the battery module 1400 may be connected to each other via one or more of the switches SW (e.g., switches SWA11, SWB11, ...., SWN11). Each battery stack 200W may be arranged as any battery stack described herein, and may include a plurality of battery cells 300V. Each battery cell 300V may include an electrochemical cell V and cell level converter circuitry 302V. The plurality of battery cells 300V of the battery stack 200V may be connected to each other in series. For example, for each battery cell 300V, a terminal of cell level converter circuitry 302V of a given battery cell 300V may be connected to a terminal of a different cell level converter circuitry 302V of a different battery cell 300V. In the example of Fig. 14A the battery cell 300V may include any cell level converter circuitry 302 described herein. For example, the battery cell 300V may include any of the cell level converter circuitry 302 shown in Fig. 3A to Fig. 3N. For example, the battery cell 300V may include the inductorless half bridge cell level converter circuitry 302A shown in Fig. 3A. Battery module 1400 may be configured to bypass one or more battery stacks 200, in a similar fashion as how battery stacks 200 may be configured to bypass one or more battery cells 300. For example, depending on the mode of operation of the charge storage device 100, one or more switches SW (e.g., switches SWA12, SWB12, ...., SWN12) may be controlled to bypass the given battery stacks 200 of the battery module 1400.

Reference is now made to Fig. 14B, which shows a battery module 1402. Battery module 1402 may be part of charge storage device 100. Charge storage device 100 may have a plurality of battery modules 1402 each one being similar. For example, the charge storage device 100 may have three battery modules 1402. The load 600 may be a motor with a plurality of coils 700. For example, the motor may have three coils 700. For example, each battery module 1402 may be connected to a respective coil 700. Each battery module 1402 may include a plurality of battery modules 1400X (e.g., battery modules 1400XA1, 1400XB1, ..., 1400XN1, which may each be a module 1400 as described above with respect to FIG. 14A). Each battery module 1402 may include a plurality of switches SX. For example, a pair of switches SX may be connected to each battery module 1400X. The pair of switches SX may include a series switch with a first terminal of the series switch connected to a first terminal of a given battery module 1400X (e.g., switch SXA111 connected in series with battery module 1400XA1, switch SXB111 connected in series with battery module 1400XB1, ..., switch SXN11 connected in series with battery module 1400XN1), and a parallel switch with a first terminal of the parallel switch connected to a second terminal of the given battery module 1400X and a second terminal of the parallel switch connected to a second terminal of the respective series switch (e.g., switch SXA112 connected in parallel with the series connection of battery module 1400XA1 and switch SXA111, switch SXB112 connected in parallel with the series connection of battery module 1400XB1 and switch SXB111, ..., switch SXN112 connected in parallel with the series connection of battery module 1400XN1 and switch SXN111). The plurality of battery modules 1400X of the battery module 1402 may be connected to each other in series. The plurality of battery modules 1400X of the battery module 1402 may be connected to each other via one or more of the switches SX (e.g. switches SXA111, SXB111,...SXN111). Each battery module 1400X may include a plurality of battery stacks 200W that may be arranged as any battery stack described herein, which may include may include a plurality of any of the battery cells described herein. As described above, the plurality of battery stacks 200W of the battery module 1400X may be connected to each other in series (e.g., via one or more switches SW). As described above, each battery cell 300 may include an electrochemical cell V and cell level converter circuitry 302. The plurality of battery cells 300 of the battery stack 200 may be connected to each other in series. For example, for each battery cell 300, a terminal of cell level converter circuitry 302 of a given battery cell 300 may be connected to a terminal of a different cell level converter circuitry 302 of a different battery cell 300. In the example of Fig. 14B the battery cell 300 may include any cell level converter circuitry 302 described herein. For example, the battery cell 300 may include any of the cell level converter circuitry 302 shown in Fig. 3A to Fig. 3N. For example, the battery cell 300 may include the inductorless half bridge cell level converter circuitry 302A shown in Fig. 3A. Battery module 1402 may be configured to bypass one or more battery modules 1400, in a similar fashion as how battery module 1400 may be configured to bypass one or more battery stacks 200, and how battery stacks 200 may be configured to bypass one or more battery cells 300. For example, depending on the mode of operation of the charge storage device 100, one or more switches SX (e.g., switches SXA112, SXB112,...SXN112) may be controlled to bypass the given battery modules 1400 of the battery module 1402.

In some examples there may be modules with additional levels (e.g., one or more battery modules built from a plurality of battery modules 1402 and a plurality of switches S, similar to the style described above for the battery module 1400 and the battery module 1402, and so on [e.g., one or more battery modules built from a plurality of those battery modules and a plurality of switches, etc., etc.]).

Reference is now made to Fig. 15A, which shows a battery stack 200Y. Battery stack 200Y may be part of charge storage device 100. Charge storage device 100 may have a plurality of battery stacks 200Y each one similar to battery stack 200Y. For example, the charge storage device 100 may have three battery stacks 200Y. The load 600 may be a motor with a plurality of coils 700. For example, the motor may have three coils 700. For example, each battery stack 200Y may be connected to a respective coil 700 (e.g., as shown in Figs. 4 - 5E and Figs. 5H - 13A for example). Each battery stack 200Y may include a plurality of battery cells 300Y. Each battery cell 300Y may include an electrochemical cell V and cell level converter circuitry 302Y. The plurality of battery cells 300Y of the battery stack 200Y may be connected to each other in series. For example, for each battery cell 300Y, a terminal of cell level converter circuitry 302Y of a given battery cell 300Y may be connected to a terminal of a different cell level converter circuitry 302Y of a different battery cell 300Y. Each battery cell 300Y may include communication circuitry 1504Y and controller circuitry 1506Y. The plurality of communication circuitries 1504Y of the battery stack 200Y may be connected to each other (e.g., with series or parallel data/power bus). For example, for each battery cell 300Y, a terminal of the communication circuitry 1504Y of a given battery cell 300Y may be connected to a terminal of a different communication circuitry 1504Y of a different battery cell 300Y. The plurality of communication circuitries 1504Y of the battery stack 200Y may be connected to each other using a plurality of communication wires 1508Y. For example, the communication wires 1508Y may be a twisted pair of communication wires according to recommended standard 485 (RS485). For example, the communication wires may be arranged as a daisy chained parallel bus. For example, a loop between the communication circuitries 1504Y of the battery stack 200Y may be closed by connecting additional communication wires 1508 between communication circuitry 1504Y1 and communication circuitry 1504YN or power source 1518Y. Closing the loop may increase reliability of communications between the communication circuitries 1504Y of the battery stack 200Y. At least one communication wire 1508Y may be connected to a power source 1518Y for the communication circuitries 1504Y. The power source 1518Y may be any power source (e.g., a 5V DC power source, a 10V DC power source, a PV power source, etc.). In each cell 300Y, the controller circuitry 1506Y may be configured to control one or more switches. The cell level converter circuitry 302Y may include first cell level converter circuitry 1500Y and second cell level converter circuitry 1502Y. In the example of Fig. 15A the first cell level converter circuitry 1500Y and second cell level converter circuitry 1502Y may each include any cell level converter circuitry 302 described herein (e.g., cell level converter circuitry 302 shown in Fig. 3A to Fig. 3N, converter circuitry, bypass circuitry, bi-directional power converter circuitry, half-bridge power converter circuitry, full-bridge power converter circuitry, DC-DC power converter circuitry, DC-AC power converter circuitry, boost power converter circuitry, buck power converter circuitry, buck-boost circuitry, buck plus boost power converter circuitry, cascaded buck and boost power converter circuitry, cascaded boost and buck power converter circuitry, etc.). For example, the first cell level converter circuitry 1500Y may include the inductorless half bridge cell level converter circuitry 302A shown in Fig. 3A. For example, the second cell level converter circuitry 1502Y may include boost power converter circuitry including a plurality of switches, an inductor LY and a capacitor CY. The locations of the first cell level converter circuitry 1500Y and the second cell level converter circuitry 1502Y within the battery cell 300Y may be changed. For example, the first cell level converter circuitry 1500Y1 may be connected in between the electrochemical cell V and the second cell level converter circuitry 1502Y. For example, the first cell level converter circuitry 1500Y may be arranged to perform cellular bypass as described above. Including individual, cell level boost converter circuitry with an inductor in each battery cell may allow additional control and freedom to operating the battery cell 300Y. For example, having cell level boost converter circuitry with an inductor may provide more control of the battery cell 300Y when charging and discharging the battery cell. For example, battery cell 300Y may be configured for cellular bypass during a charging mode of the battery stack 200Y based on a determination that the electrochemical cell V is above a voltage threshold. For example, in charge storage devices that have a central, shared boost converter circuitry with an inductor the battery stack may produce a relatively lower voltage (e.g., about 120 volts DC) and the central, shared boost converter circuitry may step up the voltage to a relatively higher voltage (e.g., about 400 volts DC). In comparison, for example, a battery stack 200Y with battery cells 300Y having cell level boost converter circuitry 1502Y with an inductor LY may allow battery stack 200Y to produce a relatively higher voltage (e.g., about 400 volts DC), since each individual battery cell 300Y may be configured to step up the voltage of the electrochemical cell V using the cell level boost converter circuitry 1502Y.

Reference is now made to Fig. 15B, which shows details of battery cell 300YB, which may be an example of 300Y illustrated in Fig. 15A and include control and communication circuitry that may be included in any of the battery cells described herein. Battery cell 300YB may be part of battery stack 200Y. Battery cell 300YB may include an electrochemical cell V and cell level converter circuitry 302YB. Cell level converter circuitry 302YB may include first cell level converter circuitry 1500YB and second cell level converter circuitry 1502YB, which are examples of 1500Y and 1502Y as previously described with respect to Fig. 15A.

First cell level converter circuitry 1500YB may include a plurality of switches Q (e.g., arranged as an inductorless half bridge circuitry as previously described). The plurality of switches may include a series switch QS and a pair of parallel switches QP1, QP2. In some examples the plurality of switches Q may include a pair of series switches QS, QS2 including a second series switch QS2 connected in series with the series switch QS. Each switch Q may include a diode such as an integral diode of the transistor. In some examples, an external diode may be connected. The diode may be arranged as a bypass diode and/or a blocking diode. Including a plurality of parallel switches QP1, QP2 may increase reliability of the battery cell 300Y, since in case one of the switches QP1, QP2 fails or is otherwise inoperable there may be another backup switch QP1, QP2 that is still operable.

Second cell level converter circuitry 1502YB may include bi-directional boost circuitry. Second cell level converter circuitry 1502YB may include a plurality of switches QG, an inductor LY, and a capacitor CY. The plurality of switches may include a series switch QG2 and a parallel switch QG1. Each switch QG may include a diode (e.g., an integral body diode of the transistor or an external diode). In some examples the plurality of switches QG may include a pair of series switches QG including a second series switch QG22 connected in series with the series switch QG2.

Battery cell 300B may include a plurality of connection terminals Va and Vb at nodes TY1 and TY2, respectively, for providing output to discharge the electrochemical cell V or input to charge the electrochemical cell V. Cell level converter circuitry 302Y may include bi-directional converter circuitry configured to boost and/or buck voltage related to electrochemical cell V. Cell level converter circuitry 302Y may include bypass circuitry configured to bypass electrochemical cell V.

Each battery cell 300Y may include control and/or communication circuitry, e.g., communication circuitry 1504YB, controller circuitry 1506YB, driver circuitry 1510YB, auxiliary power circuitry 1512YB, pulse harvesting circuitry 1514YB, and/or resistors RYB1, RYB2. The communication circuitry 1504YB may be connected to another communication circuitry 1504Y of the battery stack 200Y, as described above (e.g., with one or more communication wires 1508YB). In some examples, the communication circuitry 1504YB may be connected to another communication circuitry 1504Y of the battery stack 200Y using power-line communication (PLC) (e.g., with one or more power wires 1520 shown in Fig. 15C for example). The controller circuitry 1506 (e.g., a microcontroller, embedded controller, microprocessor, FPGA, etc.) may be configured to control one or more switches of the battery cell 300Y. The controller circuitry 1506 may be connected to the driver circuitry 1510YB, the communication circuitry 1504YB, and the auxiliary power circuitry 1512YB. The driver circuitry 1510YB may be connected to the control (e.g., gate) terminal of one or more switches of the battery cell 300YB. For example, the driver circuitry 1510YB may be connected to the control (e.g., gate) terminal of switches QG1, QG2, QS, QP1, and QP2. The driver circuitry 1510YB may also be referred to as a "driver" "gate driver" or "gate driver circuitry". The controller circuitry 1506 may be configured to control the state of one or more switches of the battery cell 300Y by controlling the driver circuitry 1510YB to control the state of the one or more switches. For example, series switch(es) QS may be arranged in a normally OFF state, and parallel switch(es) QP may be arranged in a normally ON state. Arranging series switch(es) QS in a normally OFF state, and parallel switch(es) QP in a normally ON state may increase reliability of the battery cell 300Y, since in case of a failure the electrochemical cell V may be blocked from discharge by the series switch(es) QS being OFF and may be bypassed by the parallel switch(es) QP being ON. For example, a default logic control of driver circuitry may be to control switch QS in a normally OFF state and switch QP in a normally ON state, e.g., when the controller circuitry 1506 does not have sufficient power to provide control signals. In some examples, controller 1506YB may be configured to control the state of one or more switches of the battery cell 300Y without driver circuitry 1510YB. In some examples, controller 1506YB may be configured to control the state of one or more switches of a different battery cell 300.

Auxiliary power circuitry 1512YB may be connected to communication circuitry 1504YB, controller circuitry 1506YB, driver circuitry 1510YB, pulse harvesting circuitry 1514YB, and/or VCELL. Auxiliary power circuitry 1512YB may be a dual feed auxiliary power supply. Auxiliary power circuitry 1512YB may receive power harvested from communications signals via circuit 1514YB, or from the VCELL input from the electrochemical cell V. Power received by auxiliary power circuitry 1512Y may be converted or regulated to power the control and communication circuitry in battery cell 300Y. Auxiliary power circuitry 1512YB may also be referred to as a backup power circuit. In some examples, auxiliary power circuitry 1512YB may be connected to both VCELL and pulse harvesting circuitry 1514YB, which may increase reliability since elements of the battery cell may receive power from either VCELL or from pulse harvesting. This may increase reliability since there may be a backup power supply in case the electrochemical cell fails. In such a case backup power may still be provided to the controller 1506YB or at least the driver 1510YB. Backup/auxiliary power may be harvested from the communication lines, e.g., from a DC voltage across the communication lines, or from communication pulses that are filtered and converted into a DC voltage. For example, in a first mode of operation the power may be provide from the electrochemical cell, and in a second mode of operation the power may be provided from harvesting the communication lines.

Pulse harvesting circuitry 1514YB may be connected between auxiliary power circuitry 1512YB and communication wires 1508YB. For example, the communication wires 1508YB may be a twisted pair of communication wires, e.g., according to recommended standard 485 (RS485). Pulse harvesting circuitry 1514YB may be connected to each communication wire 1508YB directly or via a capacitor and a resistor RYB. Pulse harvesting circuitry 1514YB may be configured to harvest power from the communication wires 1508YB. As mentioned above, harvesting power, e.g., backup power, from the communication lines may provide increased reliability. Communication circuitry 1504YB may be connected to each communication wire 1508YB directly or via the resistor RYB. Resistors RYB1, RYB2 may provide increased reliability since they may be arranged to protect circuitry of the battery cell 300Y. For example, if the communication line power fails (e.g., gets shorted) there may be impedance protection from the resistors RYB connected between the communication lines and the pulse harvesting circuitry 1514YB and/or communication circuitry 1504YB.

Reference is now made to Fig. 15C, which shows details of battery cell 300YC, which may be an example of 300Y illustrated in Fig. 15A and include control and communication circuitry that may be included in any of the battery cells described herein. Battery cell 300YC may be part of battery stack 200Y. Battery cell 300YC may include an electrochemical cell V and cell level converter circuitry 302YC. Cell level converter circuitry 302YC may include first cell level converter circuitry 1500YC and second cell level converter circuitry 1502YC, which are examples of 1500Y and 1502Y as previously described with respect to Fig. 15A.

First cell level converter circuitry 1500YB may be similar to as previously described with respect to Fig. 15B.

Second cell level converter circuitry 1502YC may include bi-directional boost circuitry. Second cell level converter circuitry 1502YC may include a plurality of switches QG, a plurality of inductors LY1 and LY2, and a capacitor CY. The plurality of switches may include a first series switch QG2, a first parallel switch QG1, a second series switch QG4, and a second parallel switch QG3. Inductor LY1 and switches QG1 and QG2 may form a first boost converter branch between electrochemical cell V and capacitor CY. Inductor LY2 and switches QG3 and QG4 may form a second boost converter branch between electrochemical cell V and capacitor CY. Each switch QG may include a diode (e.g., an integral body diode of the transistor or an external diode). In some examples the plurality of switches QG may include a pair of series switches QG in place of one or more of series switches QG2 and/or QG4.

Including a plurality of boost converter circuitries may increase reliability of the battery cell 300YC, since in case one of the boost converter circuitries fails or is otherwise inoperable there may be another backup boost converter circuitry that is still operable.

In the example of Fig. 15C driver circuitry 1510 may be a single driver circuitry 1510 or separated into a plurality of driver circuitries 1510YB1, 1510YB2, etc.

In the example of Fig. 15C pulses harvesting circuitry 1514 may include isolated DC-DC transformer circuitry 1516YC and current limiter circuitry 1518YC.

In the example of Fig. 15C one or more power wires 1520 may be connected to each battery cell 300YC. Power wires 1520 may be connected in parallel to communication wires 1508YB. Power wires 1520 may be connected to communication circuitry 1504YB and auxiliary power circuitry 1512YB (e.g., via pulse harvesting circuitry 1514). Power wires 1520 may be used for providing power to one or more elements of the battery cell 300YC. Power wires 1520 may be used for sending/receiving communication signals (e.g., using PLC for example).

Reference is now made to Fig. 16A, which shows a charge storage device 100ZA. Charge storage device 100ZA may be part of a power system (e.g., power system 1000 shown in Fig. 2A). Charge storage device 100ZA may have a plurality of battery stacks 200ZA. For example, charge storage device 100ZA may have six battery stacks 200ZA connected to a load (e.g., load 600). As shown in Fig. 16A, t load 600 may be a motor with a plurality of coils 700Z1, 700Z2, and 700Z3 (collectively referred to herein as 700Z). A pair of battery stacks 200ZA may be connected to a respective coil 700Z. As shown in Fig. 16A, a first battery stack 200ZA may be connected to a first terminal of a respective coil 700Z, and a second battery stack 200ZA may be connected to a second terminal of the respective coil 700Z for each of the coils 700 of the motor. As depicted, battery stack 200ZA11 may be connected to a first terminal of a first coil 700Z1, and battery stack 200ZA12 may be connected to a second terminal of the first coil 700Z1. Battery stack 200ZA21 may be connected to a first terminal of a second coil 700Z2, and battery stack 200ZA22 may be connected to a second terminal of the second coil 700Z2. Battery stack 200ZA31 may be connected to a first terminal of a third coil 700Z3, and battery stack 200ZA32 may be connected to a second terminal of the third coil 700Z3.

A first stack voltage VA may be generated by a first battery stack 200ZA of the pair of battery stacks 200ZA, and a second stack voltage VB may be generated by a second battery stack 200ZA of the pair of battery stacks 200ZA. The coil voltage VAB across a respective coil 700Z may be the difference between the first stack voltage VA generated by the first battery stack 200ZA and the second stack voltage VB generated by the second battery stack 200ZA. The coil voltage VA1B1 across a first coil 700Z1 may be the difference between the stack voltage VA1 generated by battery stack 200ZA11 and the stack voltage VB1 generated by the battery stack 200ZA12. The coil voltage VA2B2 across a second coil 700Z2 may be the difference between the stack voltage VA2 generated by battery stack 200ZA21 and the stack voltage VB2 generated by the battery stack 200ZA22. The coil voltage VA3B3 across a third coil 700Z3 may be the difference between the stack voltage VA3 generated by battery stack 200ZA31 and the stack voltage VB3 generated by the battery stack 200ZA32. The different voltages may be generated at different phases and/or different polarities from one another. For example, the stack voltages VA and stack voltages VB of each pair of battery stacks 200ZA may be generated with a 180° phase difference between them. The coil voltages VAB across the respective coils 700Z may be generated with a 120° phase difference between them. The coil voltages VAB across the plurality of coils 700Z may be generated to be three-phase AC voltage or equivalent to three-phase AC voltage (shown, for example, in Fig. 18 and described in greater detail below). One or more of the generated voltages VA, VB, VAB may be compared to an AC voltage reference.

The first stack voltage VA generated by a first battery stack 200ZA of the pair of battery stacks 200ZA may be composed of one or more cell voltages VAA produced by one or more battery cells 300 of the first battery stack 200ZA. As shown in Fig. 16A, a first battery cell 300-11 may produce a first cell voltage VAA11, a second battery cell 300-12 may produce a second cell voltage VAA12, a third battery cell 300-13 may produce a third cell voltage VAA13, etc. The first stack voltage VA may be a total voltage that is the sum of the one or more cell voltages VAA of the battery stack 200ZA. Each battery cell voltage VAA may be generated to be a phase of AC voltage or equivalent to a phase of AC voltage. Each battery cell voltage VAA may be generated to be a phase of AC voltage or equivalent to a phase of AC voltage with a DC offset voltage, also referred to herein as a DC component or a DC offset. The total stack voltage VA may be generated to be a phase of AC voltage or equivalent to a phase of AC voltage. The total stack voltage VA may be generated to be a phase of AC voltage or equivalent to a phase of AC voltage with a DC offset. One or more of the generated cell voltages VAA may be compared to an AC voltage reference. Battery cells 300 may include bypass circuitry and one or more of the battery cells 300 may be bypassed during generation of the cell voltages VAA. For example, battery cells 300-13 and 300-14 may be bypassed, and the first stack voltage VA may be a sum of the remaining un-bypassed battery cells 300-11, 300-12 ... 300-XN.

The second stack voltage VB generated by a second battery stack 200ZA of the pair of battery stacks 200ZA may be composed of one or more cell voltages VBB produced by one or more battery cells 300 of the second battery stack 200ZA. As shown, a first battery cell 300-21 may produce a first cell voltage VBB11, a second battery cell 300-22 may produce a second cell voltage VBB12, a third battery cell 300-23 may produce a third cell voltage VBB13, etc. The second stack voltage VB may be a total voltage that is the sum of the one or more cell voltages VBB of the battery stack 200ZA. Each battery cell voltage VBB may be generated to be a phase of AC voltage or equivalent to a phase of AC voltage. Each battery cell voltage VBB may be generated to be a phase of AC voltage or equivalent to a phase of AC voltage with a DC offset. The total stack voltage VB may be generated to be a phase of AC voltage or equivalent to a phase of AC voltage. The total stack voltage VB may be generated to be a phase of AC voltage or equivalent to a phase of AC voltage with a DC offset. One or more of the generated cell voltages VBB may be compared to an AC voltage reference. Battery cells 300 may include bypass circuitry and one or more of the battery cells 300 may be bypassed during generation of the cell voltages VBB. For example, battery cells 300-22 and 300-23 may be bypassed, and the first stack voltage VB may be a sum of the remaining un-bypassed battery cells 300-21, 300-24 ... 300-YN.

Battery cells 300 may be any appropriate battery cells 300 and, in some embodiments, may include bypass circuitry. Furthermore, each battery stack 200 may include a plurality of battery cells 300. Aditionally, each battery cell 300 may include an electrochemical cell V and cell level converter circuitry 302. The plurality of battery cells 300 of the battery stack 200 may be connected to each other in series. For example, for each battery cell 300, a terminal of cell level converter circuitry 302 of a given battery cell 300 may be connected to a terminal of a different cell level converter circuitry 302 of a different battery cell 300. Each battery cell 300 may include communication circuitry and controller circuitry.

Reference is now made to Fig. 16B, which shows a charge storage device 100ZB. Charge storage device 100ZB may be part of a power system (e.g., power system 1000). Charge storage device 100ZB may have a plurality of battery stacks 200ZB such as the two battery stacks 200ZB shown in Fig. 16B. A load (e.g., load 600) may be a motor with a plurality of coils 700Z1, 700Z2, 700Z3 (collectively referred to herein as 700Z). Moreover, each battery stack may be connected to multiple coils 700Z. As shown in Fig. 16B, a first battery stack 200ZB may be connected to a first terminal of a first coil 700Z and a first terminal of a second coil 700Z, and a second battery stack 200ZB may be connected to a second terminal of the first coil 700Z and a second terminal of the second coil. Additionally, battery stack 200ZB11 may be connected to a first terminal of a first coil 700Z1, a first terminal of a second coil 700Z2, and a first terminal of a third coil 700Z3. Battery stack 200ZB12 may be connected to a second terminal of the first coil 700Z1, a second terminal of the second coil 700Z2, and a second terminal of the third coil 700Z3. Compared to charge storage device 100ZA of Fig. 16A which shows six battery stacks 200ZA connected to three coils 700Z, charge storage device 100ZB may have two battery stacks 200ZB connected to three coils 700Z.

Each battery stack 200ZB11 may have one or more battery cells 300Z that each have a plurality of connection terminals Va, Vb. Additionally, the battery cells 300Z depicted in Fig. 16B may be implemented using battery cells discussed above (e.g., battery cells 300Z shown in Fig. 3O, battery cells 300ZB shown in Fig. 3P, battery cells 300ZC shown in Fig. 3Q, battery cells 300ZD shown in Fig. 3R, battery cells 300ZE shown in Fig. 3S, etc.). At least one of the battery cells 300Z may have a plurality of connection terminals Va that are connected to a plurality of coils 700Z. At least one of the battery cells 300Z may have a plurality of connection terminals Vb that are connected to a plurality of connection terminals Vb of a different battery stack 200ZB. For example, connection terminals Va1, Va2, and Va3 of battery cell 300ZB11 of battery stack 200ZB11 may be connected to first terminals of coils 700Z1, 700Z2, and 700Z3 respectively. Connection terminals Va1, Va2, and Va3 of battery cell 300ZB21 of battery stack 200ZB12 may be connected to second terminals of coils 700Z1, 700Z2, and 700Z3 respectively. Connection terminals Vb1, Vb2, and Vb3 of battery cell 300ZBXN of battery stack 200ZB11 may be connected to connection terminals Vb1, Vb2, and Vb3 of battery cell 300ZBYN of battery stack 200ZB12 respectively.

As shown in Fig. 16B, a first plurality of stack voltages VA1, VA2, V3 may be generated by a first battery stack 200ZB of the pair of battery stacks 200ZB, and a second plurality of stack voltages VB1, VB2, VB3 may be generated by a second battery stack 200ZB of the pair of battery stacks 200ZB. For example, a first stack voltage VA1 may be generated between connection terminal Va1 of battery cell 300ZB11 and connection terminal Vb1 of battery cell 300ZBXN. A second stack voltage VA2 may be generated between connection terminal Va2 of battery cell 300ZB11 and connection terminal Vb2 of battery cell 300ZBXN. A third stack voltage VA3 may be generated between connection terminal Va3 of battery cell 300ZB11 and connection terminal Vb3 of battery cell 300ZBXN. A fourth stack voltage VB1 may be generated between connection terminal Va1 of battery cell 300ZB21 and connection terminal Vb1 of battery cell 300ZBYN. A fifth stack voltage VB2 may be generated between connection terminal Va2 of battery cell 300ZB21 and connection terminal Vb2 of battery cell 300ZBYN. A sixth stack voltage VB3 may be generated between connection terminal Va3 of battery cell 300ZB21 and connection terminal Vb3 of battery cell 300ZBYN. Battery cells 300ZB may include bypass circuitry and one or more of the battery cells 300ZB may be bypassed during generation of the stack voltages VA, VB.

The coil voltage across a respective coil 700Z may be the difference between a first stack voltage VA generated by the first battery stack 200ZB and a second stack voltage VB generated by the second battery stack 200ZB. For example, as shown in Fig. 16B, the coil voltage VA1B1 across a first coil 700Z1 may be the difference between the stack voltage VA1 generated by battery stack 200ZB11 and the stack voltage VB 1 generated by the battery stack 200ZB12. The coil voltage VA2B2 across a second coil 700Z2 may be the difference between the stack voltage VA2 generated by battery stack 200ZB11 and the stack voltage VB2 generated by the battery stack 200ZB12. The coil voltage VA3B3 across a third coil 700Z3 may be the difference between the stack voltage VA3 generated by battery stack 200ZB11 and the stack voltage VB3 generated by the battery stack 200ZB12.

The different stack voltages may be generated at different phases and/or different polarities from one another. For example, stack voltage VA1 and stack voltage VB1 may be generated with a 180° phase difference between them. Stack voltage VA2 and stack voltage VB2 may be generated with a 180° phase difference between them. Stack voltage VA3 and stack voltage VB3 may be generated with a 180° phase difference between them.

The respective coil voltages VAB across the respective coils 700Z may be generated with a 120° phase difference between them. The coil voltages VAB across the plurality of coils 700Z may be generated as three-phase AC voltage or equivalent to three-phase AC voltage (shown, for example, in Fig. 18 and described in greater detail below). One or more of the generated voltages VA, VB, VAB may be compared to an AC voltage reference.

Each first stack voltage VA generated by a first battery stack 200ZB of the pair of battery stacks 200ZB may be composed of one or more cell voltages VAA produced by one or more battery cells 300 of the first battery stack 200ZB. Each battery cell 300ZB may be configured to produce a plurality of cell voltages VAA. For example, a first battery cell 300ZB11 may produce a first plurality of cell voltages VAA. The first battery cell 300ZB11 may produce a first cell voltage VAA11-1, a second cell voltage VAA11-2, and a third cell voltage VAA11-3. The first cell voltage VAA11-1 may be produced between a first connection terminal Va1 of battery cell 300ZB11 and a second connection terminal Vb1 of battery cell 300ZB11. The second cell voltage VAA11-2 may be produced between a third connection terminal Va2 of battery cell 300ZB11 and a fourth connection terminal Vb2 of battery cell 300ZB11. The third cell voltage VAA11-3 may be produced between a fifth connection terminal Va3 of battery cell 300ZB11 and a sixth connection terminal Vb3 of battery cell 300ZB11, etc. A second battery cell 300ZB12 may produce a second plurality of cell voltages VAA. The second battery cell 300ZB12 may produce a first cell voltage VAA12-1, a second cell voltage VAA12-2, and a third cell voltage VAA12-3. The first cell voltage VAA12-1 may be produced between a first connection terminal Va1 of battery cell 300ZB12 and a second connection terminal Vb1 of battery cell 300ZB12. The second cell voltage VAA12-2 may be produced between a third connection terminal Va2 of battery cell 300ZB12 and a fourth connection terminal Vb2 of battery cell 300ZB12. The third cell voltage VAA12-3 may be produced between a fifth connection terminal Va3 of battery cell 300ZB12 and a sixth connection terminal Vb3 of battery cell 300ZB12, etc. A third battery cell 300ZB13 may produce a third plurality of cell voltages VAA, etc.

As mentioned above, each first stack 200ZB may produce a plurality of stack voltages VA. For example, battery stack 200ZB11 may produce three stack voltages VA1, VA2, and VA3. The first stack voltage VA1 may be a total voltage that is the sum of the one or more cell voltages VAA from the plurality of first cell voltages VAA of the first battery stack 200ZB11. For example, stack voltage VA1 may be the sum of first cell voltages VAA11-1, VAA12-1, VAA13-1, etc. The second stack voltage VA2 may be a total voltage that is the sum of the one or more cell voltages VAA from the plurality of second cell voltages VAA of the first battery stack 200ZB11. For example, stack voltage VA2 may be the sum of second cell voltages VAA11-2, VAA12-2, VAA13-2, etc. The third stack voltage VA3 may be a total voltage that is the sum of the one or more cell voltages VAA from the plurality of third cell voltages VAA of the first battery stack 200ZB11. For example, stack voltage VA3 may be the sum of third cell voltages VAA11-3, VAA12-3, VAA13-3, etc. Each battery cell voltage VAA may be generated to be a phase of AC voltage or equivalent to a phase of AC voltage. Each battery cell voltage VAA may be generated to be a phase of AC voltage or equivalent to a phase of AC voltage with a DC offset. Each total stack voltage VA may be generated to be a phase of AC voltage or equivalent to a phase of AC voltage. The total stack voltage VA may be generated to be a phase of AC voltage or equivalent to a phase of AC voltage with a DC offset. One or more of the generated cell voltages VAA may be compared to an AC voltage reference. Battery cells 300ZB may include a plurality of bypass circuitry and one or more of the pairs of connection terminals Va, Vb of battery cells 300ZB may be bypassed during generation of the cell voltages VAA. For example, connection terminals Va1 and Vb1 of battery cells 300ZB13 and 300ZB14 may be bypassed, and the first stack voltage VA1 may be a sum of the remaining un-bypassed connection terminals Va1 and Vb1 of battery cells 300ZB11, 300ZB12 ... 300ZBXN. As another example, connection terminals Va2 and Vb2 of battery cells 300ZB12 and 300ZB14 may be bypassed, and the second stack voltage VA2 may be a sum of the remaining un-bypassed connection terminals Va2 and Vb2 of battery cells 300ZB11, 300ZB13 ... 300ZBXN. As another example, connection terminals Va3 and Vb3 of battery cells 300ZB11 and 300ZB14 may be bypassed, and the third stack voltage VA3 may be a sum of the remaining un-bypassed connection terminals Va3 and Vb3 of battery cells 300ZB12, 300ZB13 ... 300ZBXN.

Each second stack voltage VB generated by a second battery stack 200ZB of the pair of battery stacks 200ZB may be composed of one or more cell voltages VBB produced by one or more battery cells 300 of the second battery stack 200ZB. Each battery cell 300ZB may be configured to produce a plurality of cell voltages VBB. For example, a first battery cell 300ZB21 may produce a first plurality of cell voltages VBB. The first battery cell 300ZB21 may produce a first cell voltage VBB11-1, a second cell voltage VBB11-2, and a third cell voltage VBB11-3. The first cell voltage VBB11-1 may be produced between a first connection terminal Va1 of battery cell 300ZB21 and a second connection terminal Vb1 of battery cell 300ZB21. The second cell voltage VBB11-2 may be produced between a third connection terminal Va2 of battery cell 300ZB21 and a fourth connection terminal Vb2 of battery cell 300ZB21. The third cell voltage VBB11-3 may be produced between a fifth connection terminal Va3 of battery cell 300ZB21 and a sixth connection terminal Vb3 of battery cell 300ZB21, etc. A second battery cell 300ZB22 may produce a second plurality of cell voltages VBB. The second battery cell 300ZB22 may produce a first cell voltage VBB12-1, a second cell voltage VBB12-2, and a third cell voltage VBB12-3. The first cell voltage VBB12-1 may be produced between a first connection terminal Va1 of battery cell 300ZB22 and a second connection terminal Vb1 of battery cell 300ZB22. The second cell voltage VBB12-2 may be produced between a third connection terminal Va2 of battery cell 300ZB22 and a fourth connection terminal Vb2 of battery cell 300ZB22. The third cell voltage VBB12-3 may be produced between a fifth connection terminal Va3 of battery cell 300ZB22 and a sixth connection terminal Vb3 of battery cell 300ZB22, etc. A third battery cell 300ZB23 may produce a third plurality of cell voltages VBB, etc.

As mentioned above, each second stack 200ZB may produce a plurality of stack voltages VB. For example, battery stack 200ZB12 may produce three stack voltages VB1, VB2, and VB3. The first stack voltage VB1 may be a total voltage that is the sum of the one or more cell voltages VBB from the plurality of first cell voltages VBB of the second battery stack 200ZB12. For example, stack voltage VB1 may be the sum of first cell voltages VBB11-1, VBB12-1, VBB13-1, etc. The second stack voltage VB2 may be a total voltage that is the sum of the one or more cell voltages VBB from the plurality of second cell voltages VBB of the second battery stack 200ZB12. For example, stack voltage VB2 may be the sum of second cell voltages VBB11-2, VBB12-2, VBB13-2, etc. The third stack voltage VB3 may be a total voltage that is the sum of the one or more cell voltages VBB from the plurality of third cell voltages VBB of the second battery stack 200ZB12. For example, stack voltage VB3 may be the sum of third cell voltages VBB11-3, VBB12-3, VBB13-3, etc. Each battery cell voltage VBB may be generated to be a phase of AC voltage or equivalent to a phase of AC voltage. Each battery cell voltage VBB may be generated to be a phase of AC voltage or equivalent to a phase of AC voltage with a DC offset. Each total stack voltage VB may be generated to be a phase of AC voltage or equivalent to a phase of AC voltage. The total stack voltage VB may be generated to be a phase of AC voltage or equivalent to a phase of AC voltage with a DC offset. One or more of the generated cell voltages VBB may be compared to an AC voltage reference. Battery cells 300ZB may include a plurality of bypass circuitry and one or more of the pairs of connection terminals Va, Vb of battery cells 300ZB may be bypassed during generation of the cell voltages VBB. For example, connection terminals Va1 and Vb1 of battery cells 300ZB23 and 300ZB24 may be bypassed, and the first stack voltage VB1 may be a sum of the remaining un-bypassed connection terminals Va1 and Vb1 of battery cells 300ZB21, 300ZB22 ... 300ZBYN. As another example, connection terminals Va2 and Vb2 of battery cells 300ZB22 and 300ZB24 may be bypassed, and the second stack voltage VB2 may be a sum of the remaining un-bypassed connection terminals Va2 and Vb2 of battery cells 300ZB21, 300ZB23 ... 300ZBYN. As another example, connection terminals Va3 and Vb3 of battery cells 300ZB21 and 300ZB24 may be bypassed, and the third stack voltage VB3 may be a sum of the remaining un-bypassed connection terminals Va3 and Vb3 of battery cells 300ZB22, 300ZB23 ... 300ZBYN.

Reference is now made to Fig. 16C, which shows a charge storage device 100ZC. Charge storage device 100ZC may be part of a power system such as power system 1000. Charge storage device 100ZC may have a single battery stack 200ZC. The battery stack 200ZC may have a plurality of battery cells 200E. For example, battery stack 200ZC may have two battery cells 300ZE (as shown in Fig. 16D). The load 600 may be a motor with a plurality of coils 700Z. For example, the motor may have three coils 700Z1, 700Z2, 700Z3. The battery stack may be connected to a plurality of coils 700Z. For example, a first battery cell 300ZE1 may be connected to a first terminal of a first coil 700Z and a first terminal of a second coil 700Z, and a second battery cell 300ZEN may be connected to a second terminal of the first coil 700Z and a second terminal of the second coil. For example, battery stack 200ZC may be connected to a first terminal of a first coil 700Z1, a first terminal of a second coil 700Z2, and a first terminal of a third coil 700Z3. Battery stack 200ZC may also be connected to a second terminal of the first coil 700Z1, a second terminal of the second coil 700Z2, and a second terminal of the third coil 700Z3. Compared to charge storage device 100ZA of Fig. 16A which shows six battery stacks 200ZA connected to three coils 700Z, and charge storage device 100ZB which shows two battery stacks 200ZB connected to three coils 700Z, charge storage device 100ZC may have a single battery stack 200ZC connected to three coils 700Z.

The battery stack 200ZC may have one or more battery cells 300ZE that each have a plurality of connection terminals Va, Vb. The battery cells 300ZE may comprise any of the battery cells described above (e.g.,battery cells 300Z shown in Fig. 3O, battery cells 300ZE shown in Fig. 3S, etc.). At least one of the battery cells 300ZE may have a plurality of connection terminals Va that are connected to a plurality of coils 700Z. At least one other of the battery cells 300ZE may have a plurality of connection terminals Vb that are connected to different terminals of the plurality of coils 700Z. For example, connection terminals Va1, Va2, and Va3 of battery cell 300ZE1 of battery stack 200ZC may be connected to first terminals of coils 700Z1, 700Z2, and 700Z3 respectively. Connection terminals Vb1, Vb2, and Vb3 of battery cell 300ZEN of battery stack 200ZC may be connected to second terminals of coils 700Z1, 700Z2, and 700Z3 respectively.

A plurality of stack voltages VA1B1, VA2B3, VA3B3 may be generated by the battery stack 200ZC. For example, a first stack voltage VA1B1 may be generated between connection terminal Va1 of battery cell 300ZE1 and connection terminal Vb1 of battery cell 300ZEN. A second stack voltage VA2B2 may be generated between connection terminal Va2 of battery cell 300ZE1 and connection terminal Vb2 of battery cell 300ZEN. A third stack voltage VA3B3 maybe generated between connection terminal Va3 of battery cell 300ZE1 and connection terminal Vb3 of battery cell 300ZEN. Battery cells 300ZE may include bypass circuitry and one or more of the battery cells 300ZE may be bypassed during generation of the stack voltages VAB.

The respective coil voltages VAB across the respective coils 700Z may be generated with a 120° phase difference between them. The coil voltages VAB across the plurality of coils 700Z may be generated as three-phase AC voltage or equivalent to three-phase AC voltage (shown, for example, in Fig. 18 and described in greater detail below). One or more of the generated voltages VAB may be compared to an AC voltage reference.

Each stack voltage VAB generated by battery stack 200ZC may be composed of one or more cell voltages produced by one or more battery cells 300. Each battery cell 300ZE may be configured to produce a plurality of cell voltages. For example, a first battery cell 300ZE1 may produce a first plurality of cell voltages, a second battery cell 300ZE2 may produce a second plurality of cell voltages, a third battery cell 300ZE3 may produce a third plurality of cell voltages, etc.

For example, battery stack 200ZC may produce three stack voltages VA1B1, VA2B2, and VA3B3. The first stack voltage VA1B1 may be a total voltage that is the sum of the one or more cell voltages from a plurality of first cell voltages, the second stack voltage VA2B2 may be a total voltage that is the sum of the one or more cell voltages from a plurality of second cell voltages, the third stack voltage VA3B3 may be a total voltage that is the sum of the one or more cell voltages V from a plurality of third cell voltages, etc. Each battery cell voltage V may be generated to be a phase of AC voltage or equivalent to a phase of AC voltage. Each total stack voltage VA may be generated to be a phase of AC voltage or equivalent to a phase of AC voltage. One or more of the generated cell voltages may be compared to an AC voltage reference. Battery cells 300ZE may include a plurality of bypass circuitry and one or more of the pairs of connection terminals Va, Vb of battery cells 300ZE may be bypassed during generation of the cell voltages. For example, connection terminals Va1 and Vb1 of battery cells 300ZE3 may be bypassed, and the first stack voltage VA1B1 may be a sum of the remaining un-bypassed connection terminals Va1 and Vb1 of battery cells 300ZE1, 300ZE2, 300ZE4 ... 300ZEN.

Reference is now made to Fig. 16D, which shows a charge storage device 100ZD. Charge storage device 100ZD may be part of a power system such as power system 1000. Charge storage device 100ZD may have a single battery stack 200ZD. Charge storage device 100ZD may be an example of charge storage device 100ZC having only two battery cells 300ZE1, 300ZE2. The load 600 may be a motor with a plurality of coils 700Z. For example, the motor may have three coils 700Z1, 700Z2, 700Z3. The battery stack 200ZD may be connected to a plurality of coils 700Z. For example, the first battery cell 300ZE1 may be connected to a first terminal of a first coil 700Z and a first terminal of a second coil 700Z, and the second battery cell 300ZE2 may be connected to a second terminal of the first coil 700Z and a second terminal of the second coil. For example, battery stack 200ZD may be connected to a first terminal of a first coil 700Z1, a first terminal of a second coil 700Z2, and a first terminal of a third coil 700Z3. Battery stack 200ZD may also be connected to a second terminal of the first coil 700Z1, a second terminal of the second coil 700Z2, and a second terminal of the third coil 700Z3. Compared to charge storage device 100ZA of Fig. 16A which shows six battery stacks 200ZA connected to three coils 700Z, and charge storage device 100ZB which shows two battery stacks 200ZB connected to three coils 700Z, charge storage device 100ZD may have a single battery stack 200ZD connected to three coils 700Z.

The battery stack 200ZD may have one or more battery cells 300ZE1, 300ZE2 that each have a plurality of connection terminals Va, Vb. For example, the battery cells 300ZE1, 300ZE2 may be the battery cells 300Z shown in Fig. 3O, the battery cells 300ZE shown in Fig. 3S, etc. At least one of the battery cells 300ZE1, 300ZE2 may have a plurality of connection terminals Va that are connected to a plurality of coils 700Z. At least one other of the battery cells 300ZE1, 300ZE2 may have a plurality of connection terminals Vb that are connected to different terminals of the plurality of coils 700Z. For example, connection terminals Va1, Va2, and Va3 of battery cell 300ZE1 of battery stack 200ZD may be connected to first terminals of coils 700Z1, 700Z2, and 700Z3 respectively. Connection terminals Vb1, Vb2, and Vb3 of battery cell 300ZE2 of battery stack 200ZD may be connected to second terminals of coils 700Z1, 700Z2, and 700Z3 respectively.

A plurality of stack voltages VA1B1, VA2B3, VA3B3 may be generated by the battery stack 200ZD. For example, a first stack voltage VA1B1 may be generated between connection terminal Va1 of battery cell 300ZE1 and connection terminal Vb1 of battery cell 300ZE2. A second stack voltage VA2B2 may be generated between connection terminal Va2 of battery cell 300ZE1 and connection terminal Vb2 of battery cell 300ZE2. A third stack voltage VA3B3 may be generated between connection terminal Va3 of battery cell 300ZE1 and connection terminal Vb3 of battery cell 300ZE2. Battery cells 300ZE may include bypass circuitry and one or more of the battery cells 300ZE may be bypassed during generation of the stack voltages VAB.

The respective coil voltages VAB across the respective coils 700Z may be generated with a 120° phase difference between them. The coil voltages VAB across the plurality of coils 700Z may be generated as three-phase AC voltage or equivalent to three-phase AC voltage (shown, for example, in Fig. 18 and described in greater detail below). One or more of the generated voltages VAB may be compared to an AC voltage reference.

Each stack voltage VAB generated by battery stack 200ZD may be composed of one or more cell voltages produced by one or more battery cells 300. Each battery cell 300ZE1, 300ZE2 may be configured to produce a plurality of cell voltages. For example, first battery cell 300ZE1 may produce a first plurality of cell voltages, and second battery cell 300ZE2 may produce a second plurality of cell voltages.

For example, battery stack 200ZD may produce three stack voltages VA1B1, VA2B2, and VA3B3. The first stack voltage VA1B1 may be a total voltage that is the sum of the one or more cell voltages from a plurality of first cell voltages, the second stack voltage VA2B2 may be a total voltage that is the sum of the one or more cell voltages from a plurality of second cell voltages, the third stack voltage VA3B3 may be a total voltage that is the sum of the one or more cell voltages V from a plurality of third cell voltages, etc. Each battery cell voltage V may be generated to be a phase of AC voltage or equivalent to a phase of AC voltage. Each total stack voltage VA may be generated to be a phase of AC voltage or equivalent to a phase of AC voltage. One or more of the generated cell voltages may be compared to an AC voltage reference. Battery cells 300ZE1, 300ZE2 may include a plurality of bypass circuitry and one or more of the pairs of connection terminals Va, Vb of battery cells 300ZE1, 300ZE2 may be bypassed during generation of the cell voltages. For example, connection terminals Va1 and Vb1 of battery cells 300ZE2 may be bypassed, and the second stack voltage VA2B2 may produced from connection terminals Va2 and Vb2 of battery cell 300ZE1.

Reference is now made to Fig. 16E, which shows an example of a single battery stack 200ZE. Single battery stack 200ZE may be part of a charge storage device such as charge storage device 100ZC or charge storage device 100ZD. The battery cells 300ZE of battery stack 200ZE are those shown in Fig. 3S with full bridge circuitry.

Reference is now made to Fig. 16F, which shows a charge storage device 100ZF. Charge storage device 100ZF may be part of a power system such as power system 1000. Each battery cell 300ZF of charge storage device 100ZF may include six converter circuitry and have a total of six pairs of connection terminals Va, Vb. Charge storage device 100ZF may be connected to a six phase EV motor having six coils 700Z1, 700Z2, 700Z3, 700Z4, 700Z5, and 700Z6. The battery cells 300ZF of battery stack 200ZF may be any appropriate battery cells 300 (for example, battery cells 300ZE shown in Fig. 3S with transformer circuitry and full bridge circuitry).

Reference is now made to Fig. 17, which shows an example graph of stack voltage VA1 from a first battery stack 200 of a charge storage device 100 (e.g., storage devices 100ZA, 100ZB, 100ZC, 100ZF, etc.) or a cell voltage VAA from a battery cell 300 in the first battery stack 200 (e.g., battery cells 300, 300Z, 300ZB, 300ZC), an example graph of stack voltage VB1 from a second battery stack 200 of the charge storage device 100 or a cell voltage VBB from a battery cell 300 in the second battery stack 200, and an example graph of coil voltage VA1B1 across a coil 700 connected between the first battery stack 200 and the second battery stack 200 of the charge storage device 100, or across a coil 700 connected between two ends of a single battery stack 200 of the charge storage device 100.

As shown in Fig. 17, battery stack 200ZA11 of the charge storage device 100ZA of Fig. 16A may produce the stack voltage VA1. Battery stack 200ZA12 of the charge storage device 100ZA of Fig. 16A may produce the stack voltage VB1 as shown in Fig. 17. Battery stack 200ZA11 together with battery stack 200ZA12 of the charge storage device 100ZA of Fig. 16A may produce the voltage VA1B1 as shown in Fig. 17. Voltage VA1B1 may be generated across the coil 700Z1. Voltage VA1B1 may be the difference between voltage VA1 and voltage VB1. As shown in Fig. 18, the charge storage device 100 may produce additional voltages VA2B2, VA3B3 across other respective coils 700Z2, 700Z3. Charge storage device 100 may be configured to produce a plurality of voltages across a plurality of coils 700 using a plurality of battery stacks 200. There may be a 120° phase difference between coil voltage VA1B1 and coil voltage VA2B2. There may be a 240° phase difference between coil voltage VA1B1 and coil voltage VA3B3.

As another example, battery stack 200ZB11 of the charge storage device 100ZB of Fig. 16B may produce the stack voltage VA1 as shown in Fig. 17. Battery stack 200ZB12 of the charge storage device 100ZB of Fig. 16B may produce the stack voltage VB1 as shown in Fig. 17. Battery stack 200ZB11 together with battery stack 200ZB12 of the charge storage device 100ZB of Fig. 16B may produce the voltage VA1B1 as shown in Fig. 17. Voltage VA1B1 may be generated across the coil 700Z1. Voltage VA1B1 may be the difference between voltage VA1 and voltage VB1. As shown in Fig. 18, the charge storage device 100 may produce additional voltages VA2B2, VA3B3 across other respective coils 700Z2, 700Z3. Charge storage device 100 may be configured to produce a plurality of voltages across a plurality of coils 700 using a pair of battery stacks 200.

For example, battery stack 200ZB11 of the charge storage device 100ZB of Fig. 16B may produce the stack voltage VA1 as shown in Fig. 17 as a sum of cell voltages VAA. For example, each battery cell 300ZB may produce a first cell voltage of a plurality of cell voltages that is equivalent to an AC sine wave with a DC offset as shown in Fig. 17. The combination of one or more cell voltages VAA may produce a stack voltage VA, that is relatively greater compared to a cell voltage VAA, and that is equivalent to an AC sine wave with a DC offset. Battery stack 200ZB11 of the charge storage device 100ZB of Fig. 16B may also produce a stack voltage VA2 that is similar to stack voltage VA1. There may be a 120° phase difference between stack voltage VA1 and stack voltage VA2. Battery stack 200ZB11 of the charge storage device 100ZB of Fig. 16B may also produce a stack voltage VA3 that is similar to stack voltage VA1. There may be a 240° phase difference between stack voltage VA1 and stack voltage VA3.

For example, battery stack 200ZA12 of the charge storage device 100ZA of Fig. 16A may produce the stack voltage VB1 as shown in Fig. 17 as a sum of cell voltages VBB. For example, each battery cell 300 may produce voltage that is equivalent to an AC sine wave with a DC offset as shown in Fig. 17. The combination of one or more cell voltages VBB may produce a stack voltage VB, that is relatively greater compared to a cell voltage VBB, and that is equivalent to an AC sine wave with a DC offset. Battery stack 200ZA22 of the charge storage device 100ZA of Fig. 16A may produce a stack voltage VB2 that is similar to stack voltage VB1. There may be a 120° phase difference between stack voltage VB 1 and stack voltage VB2. Battery stack 200ZA32 of the charge storage device 100ZA of Fig. 16A may produce a stack voltage VB3 that is similar to stack voltage VB1. There may be a 240° phase difference between stack voltage VB1 and stack voltage VB3. There may be a 180° phase difference between stack voltage VA1 and stack voltage VB1, a 180° phase difference between stack voltage VA2 and stack voltage VB2, and a 180° phase difference between stack voltage VA3 and stack voltage VB3.

For example, battery stack 200ZB12 of the charge storage device 100ZB of Fig. 16B may produce the stack voltage VB1 as shown in Fig. 17 as a sum of cell voltages VBB. For example, each battery cell 300ZB may produce a first cell voltage of a plurality of cell voltages that is equivalent to an AC sine wave with a DC offset as shown in Fig. 17. The combination of one or more cell voltages VBB may produce a stack voltage VB, that is relatively greater compared to a cell voltage VBB, and that is equivalent to an AC sine wave with a DC offset. Battery stack 200ZB12 of the charge storage device 100ZB of Fig. 16B may also produce a stack voltage VB2 that is similar to stack voltage VB 1. There may be a 120° phase difference between stack voltage VB 1 and stack voltage VB2. Battery stack 200ZB12 of the charge storage device 100ZB of Fig. 16B may also produce a stack voltage VB3 that is similar to stack voltage VB1. There may be a 240° phase difference between stack voltage VB 1 and stack voltage VB3. There may be a 180° phase difference between stack voltage VA1 and stack voltage VB1, a 180° phase difference between stack voltage VA2 and stack voltage VB2, and a 180° phase difference between stack voltage VA3 and stack voltage VB3.

In some instances, stack voltage VA1, VA2, VA3 or cell voltage VAA may be generated to be similar to an AC sine wave with a DC offset of VDC, an amplitude of Vpeak, and a peak-to-peak voltage (Vpp) of 2*Vpeak. For example, if an electrochemical cell V of a battery cell 300 produces about 3 volts to about 5 volts, the converter circuitry of the battery cell 300 may convert the voltage of the electrochemical cell V to a greater voltage. Additionally, the converter circuitry of the battery cell 300 may convert the voltage of the electrochemical cell V to a wave voltage having a DC offset of about 10 volts (VDC = about 10 volts), an amplitude of about 6 volts (Vpeak = about 6 volts), and a peak-to-peak voltage of about 12 volts (Vpp = about 12 volts). For example, if the electrochemical cell V of a battery cell 300 produces about 4 volts (Vcell = about 4 volts) and the DC offset is about 10 volts, the amplitude is about 6 volts, and the peak-to-peak voltage is about 12 volts, then the maximum voltage (VDC+Vpeak) may be about 16 volts (VDC + Vpeak = about 10 volts + about 6 volts = about 16 volts) and the minimum voltage (VDC-Vpeak) may be about 4 volts (VDC - Vpeak = about 10 volts - about 6 volts = about 4 volts). The minimum voltage (VDC-Vpeak) may be voltage produced by the electrochemical cell V of the battery cell 300 (about 4 volts). Boost converter circuitry may be used to convert the electrochemical cell V of the battery cell 300 to a wave voltage having a DC offset. According to some embodiments, isolated boost converter circuitry as shown in Fig. 3P to Fig. 3S, or any other boost converter circuitry may be used. Similarly, stack voltage VB1, VB2, VB3 or cell voltage VBB may be generated to be similar to an AC sine wave with a DC offset of VDC, an amplitude of Vpeak, and a peak-to-peak voltage (Vpp) of 2^{∗}Vpeak. Stack voltage VB1 may be generated with a 180° phase difference between stack voltage VB1 and stack voltage VA1. When stack voltage VA1 and stack voltage VB 1 are combined to produce a coil voltage VAB across a coil 700 of the motor, an AC sine wave without a DC offset may be produced.

By combining stack voltage VA1 and stack voltage VB1 the coil VA1B1 may have no DC offset, an amplitude of about 2*Vpeak, and a peak-to-peak voltage (Vpp) of about 4*Vpeak For example, at time t1, the combination of stack voltage VA1 and stack voltage VB1 produces a coil voltage of: VA1B1 = VDC + Vpeak - (VDC - Vpeak) = VDC + Vpeak - VDC + Vpeak = 2 Vpeak. At time t2, the combination of stack voltage VA1 and stack voltage VB1 produces a coil voltage of: VA1B1 = VDC - VDC = about 0, with no DC offset. At time t3, the combination of stack voltage VA1 and stack voltage VB1 produces a coil voltage of: VA1B1 = VDC - Vpeak - (VDC + Vpeak) = VDC - Vpeak - VDC - Vpeak = - 2 Vpeak. At time t4, the combination of stack voltage VA1 and stack voltage VB1 produces a coil voltage of: VA1B1 = VDC - VDC = about 0, with no DC offset. For example, if Vpeak is about 6 volts than the amplitude of the coil voltage VA1B1 may be about 2*Vpeak = about 2*6volts = about 12 volts, and the peak-to-peak voltage may be about 4*Vpeak = about 4*6 volts = about 24 volts. For example, if the stack voltage VA1 has a peak voltage of about 200 Volts and the stack voltage VA2 has a peak voltage of about 200 Volts, then the coil voltage VA1B1 may have a peak voltage of about 400 volts. For example, the stack voltage VA1 of about 200 volts may be produced by about 33 battery cells 300 in the battery stack 200 each producing a peak voltage of about 6 volts, about 33 battery cells * about 6 volts = about 200 volts. In the example of Fig. 16A, if there are 6 battery stacks 200ZA of about 33 battery cells 300 each, then that may be a total of about 198 battery cells. In the example of Fig. 16B, if there are 2 battery stacks 200ZB of about 33 battery cells 300ZB each, then that may be a total of about 66 battery cells.

As another example, battery stack 200ZC of the charge storage device 100ZC of Fig. 16C, battery stack 200ZD of the charge storage device 100ZD of Fig. 16D, battery stack 200ZE of the charge storage device 100ZE of Fig. 16E, or battery stack 200ZF of the charge storage device 100ZF of Fig. 16CF may produce the stack voltage VA1B1 as shown in Fig. 17 as a sum of cell voltages. For example, each battery cell 300 may produce voltage that is an AC sine wave or equivalent to an AC sine wave with substantially no DC offset. The combination of one or more cell voltages may produce a stack voltage, that is relatively greater compared to a cell voltage. Each battery cell may produce a plurality of voltages and the charge storage device may have a plurality of stack voltages. Each battery cell may produce a cell voltage that is similar to coil voltage VA1B1. Each battery stack may produce a stack voltage that is similar to coil voltage VA1B1. Each battery cell may produce additional cell voltages that are similar to coil voltage VA1B1, but may have a different phase than coil voltage VA1B1. Each battery stack may produce additional stack voltages that are similar to coil voltage VA1B1, but may have a different phase than coil voltage VA1B1. For example, there may be a 120° phase difference between a first stack voltage VA1B1 and a second stack voltage VA2B2. There may be a 240° phase difference between the first stack voltage VA1B1 and a third stack voltage VA3B3, etc. In examples where the battery stack 200 of the charge storage device 100 produces voltage for more than three loads (e.g., an EV motor with six coils, nine coils, etc.) then there may be a different phase difference between the stack voltages. For instance, if the battery stack 200 of the charge storage device 100 produces voltage for six coils then there may be about a 60° phase difference between the different voltages. For example, the following phase differences may be observed:
- about a 60° phase difference between a first coil voltage and a second coil voltage,
- about a 120° phase difference between the first coil voltage and a third coil voltage,
- about a 180° phase difference between the first coil voltage and a fourth coil voltage,
- about a 210° phase difference between the first coil voltage and a fifth coil voltage, and
- about a 240° phase difference between the first coil voltage and a sixth coil voltage.
Similarly, if the battery stack 200 of the charge storage device 100 produces voltage for nine coils then there may be about a 30° phase difference between the different voltages, etc.

The load (e.g. the EV motor) may represent a symmetric load with a plurality of phases (e.g., three phases, six phases, nine phases, etc.). Since each battery cell may produce part of the source that feeds this symmetric load, the low-frequency ripple component implied on the DC current of the cell may be about zero, or relatively negligible. Each battery cell may have essentially relatively pure DC current flowing through it (both while charging and discharging the electrochemical cell, either direction of the current) for a given steady load. For example, each battery cell may have relatively pure DC current flowing through it with relatively minimal filtering. This may reduce the need for a relatively large capacitor in each converter circuitry 306 of the battery cell. For example, the capacitors CZ1 in Fig. 3P to Fig. 3S may be relatively small capacitors. Providing essentially relatively pure DC current flowing through each battery cell may also help alleviate issues caused by an inner resistance of the electrochemical cell. Providing essentially relatively pure DC current flowing through each battery cell may also reduce an amount of heat produced by the battery cell. Using battery cells and/or battery stacks that produce a plurality of phase shifted AC voltages (or voltages equivalent to AC voltages) that are symmetrical may help balance the system and reduce voltage ripple on the electrochemical cell.

Reference is now made to Fig. 18, which shows an example graph of a first coil voltage VA1B1 which may be produced across a first coil 700, a second coil voltage VA2B2 which may be produced across a second coil 700, and a third coil voltage VA3B3 which may be produced across a third coil 700. There may be a 120° phase difference between coil voltage VA1B1 and coil voltage VA2B2. There may be a 120° phase difference between coil voltage VA2B2 and coil voltage VA3B3. There may be a 240° phase difference between coil voltage VA1B1 and coil voltage VA3B3. The coil voltages VA1B1, VA2B2, VA3B3 produced across the plurality of coils 700Z1, 700Z2, 700Z3, respectively, may be generated to be three-phase AC voltage or equivalent to three-phase AC voltage. For example, the three-phase AC voltage may be used to drive the motor of an electric vehicle (EV).

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

For example, various power systems 1000 (e.g., power systems 1000A, 1000B, 1000C, 1000D, 1000E, 1000F, 1000G, 1000I, 1000J, 1000L, 1000M, 1000N, 1000P, and 1000V) have been described as including a specific charge storage device battery stack, battery cell, and cell level converter circuitry. Each of these systems alternatively include examples of using any combination of the other described charge storage devices 100 (e.g., charge storage devices 100A, 100B, 100C, 100D, 100E, 100F, 100G, 100H, 100I, 100J, 100L, 100M, 100N, 100P, 100T, 100U, 100V, and 100Z), battery stacks 200 (e.g., battery stacks 200A, 200C, 200D, 200E, 200F, 200G, 200H, 2001, 200J, 200K, 200L, 200M, 200N, 200P, 200Q, 200R, 200S, 200T, 200U, 200V, 200W, 200Y, and 200Z), battery cells 300 (e.g., battery cells 300A, 300B, 300C, 300D, 300E, 300F, 300G, 300H, 3001, 300J, 300K, 300N, 300T, 300U, 300V, 300Y, and 300Z), and cell level converter circuitry 302 (e.g., cell level converter circuitry 302A, 302B, 302C, 302D, 302E, 302F, 302G, 302H, 302I, 302J, 302K, 302T, 302U, 302V, 302Y, and 302Z) as described herein.

Here follows a list of clauses highlighting various aspects of the disclosure.
Clause 1. An apparatus comprising:
   a battery stack comprising a plurality of battery cells, each battery cell of the plurality of battery cells comprising:
      an electrochemical cell, a series switch, and a parallel switch, wherein the plurality of battery cells are connected serially in a series string;
   bi-directional converter circuitry comprising:
      an inductor, a first switch, a second switch, and a capacitor;
   inverter circuitry comprising:
      a plurality of switches configured to convert a direct current (DC) input to a plurality of alternating current (AC) outputs; and
      a controller configured to output control signals to the series switch and the parallel switch of each of the plurality of battery cells, the first and the second switch of the bi-directional converter circuitry, and the plurality of switches of the inverter.
Clause 2. The apparatus of clause 1, further comprising an electric motor.
Clause 3. The apparatus of clause 1 or clause 2, wherein the plurality of AC outputs are configured to produce a plurality of waveforms to operate the electric motor.
Clause 4. The apparatus of any preceding clause, wherein the electric motor comprises a plurality of coils.
Clause 5. The apparatus of any preceding clause, further comprising an AC power source for charging one or more battery cells of the plurality of battery cells.
Clause 6. The apparatus of any preceding clause, further comprising rectifier circuitry configured to convert an AC input to a DC output, wherein the rectifier circuitry is connected to the AC power source, and wherein the rectifier circuitry is switchably connected to the bi-directional converter circuitry.
Clause 7. The apparatus of clause 6, wherein the bi-directional circuitry is configured to convert the DC output from the rectifier circuitry to a lower voltage DC input to the battery stack for charging one or more battery cells of the battery stack.
Clause 8. The apparatus of any preceding clause, further comprising an external DC input to the bi-directional converter circuitry.
Clause 9. The apparatus of any preceding clause, further comprising a DC power source configured to charge one or more battery cells of the plurality of battery cells.
Clause 10. The apparatus of clause 9, wherein the DC power source outputs DC voltage in a range of about 400 volts to about 800 volts.
Clause 11. The apparatus of clauses 9-10, wherein the DC power source is a photovoltaic power generator.
Clause 12. The apparatus of any preceding clause, wherein the bi-directional converter circuitry further comprises a first set of terminals connected to the series string, and a second set of terminals connected to the plurality of switches.
Clause 13. The apparatus of any preceding clause, wherein the controller is configured to operate the apparatus to charge one or more electrochemical cells in a charge mode by controlling the first switch of the bi-directional converter circuitry and the second switch of the bi-directional converter circuitry.
Clause 14. The apparatus of any preceding clause, wherein in each battery cell of the plurality of battery cells, the parallel switch comprises a bypass diode.
Clause 15. The apparatus of clause 14, wherein the bypass diode comprises an integral diode of the parallel switch.
Clause 16. The apparatus of any preceding clause, wherein in each battery cell of the plurality of battery cells, the series switch comprises a blocking diode.
Clause 17. The apparatus of clause 16, wherein the blocking diode comprises an integral diode of the series switch.
Clause 18. The apparatus of clauses 16-17, wherein the controller is configured to operate each battery cell of the plurality of battery cells in a charge mode by controlling the series switch ON or OFF, and controlling the parallel switch OFF to control a current to flow through the blocking diode of the series switch and charge the electrochemical cell.
Clause 19. The apparatus of clause, wherein the controller is configured to operate each battery cell of the plurality of battery cells in a bypass mode by controlling the series switch OFF and the parallel switch ON to control a string current to flow through the parallel switch and bypass the electrochemical cell.
Clause 20. The apparatus of any preceding clause, wherein the controller is configured to operate each battery cell of the plurality of battery cells in a discharge mode by controlling the series switch ON and the parallel switch OFF to control a current to flow from the electrochemical cell towards the series string.
Clause 21. The apparatus of clauses 14 or 15, wherein the bypass diode is configured to bypass the battery cell in a discharge bypass mode when the series switch is switched OFF and the parallel switch is switched OFF to control a string current to flow through the bypass diode and bypass the electrochemical cell.
Clause 22. The apparatus of clauses 16-18, wherein the blocking diode of the series switch is configured to block current from the electrochemical cell towards the series in the discharge bypass mode.
Clause 23. The apparatus clauses 14, 15, or 21, wherein the bypass diode of the parallel switch is configured to block current in the charge mode.
Clause 24. The apparatus of any preceding clause, wherein the controller is configured to determine one or more battery cells of the plurality of battery cells to bypass, and to bypass the determined one or more battery cells by controlling the series switch and the parallel switch of each of the one or more determined battery cells.
Clause 25. The apparatus of any preceding clause, wherein the controller is configured to determine the electrochemical cell of one of the plurality of battery cells is faulty, and based on the determination, control bypass of the faulty electrochemical cell.
Clause 26. The apparatus of any preceding clause, wherein the controller is configured to determine that the electrochemical cell of one of the plurality of battery cells is charged above a charge threshold, and based on the determination, control bypass of the charged electrochemical cell.
Clause 27. The apparatus of any preceding clause, further comprising one or more sensors configured to obtain one or more electrical parameters related to one or more of the plurality of battery cells.
Clause 28. The apparatus of any preceding clause, further comprising cell level converter circuitry configured to convert a first DC voltage to a second DC voltage, wherein the series switch and the parallel switch of each of the plurality of battery cells are comprised in the cell level converter circuitry.
Clause 29. The apparatus of any clause 28, wherein the cell level converter circuitry comprises inductorless half bridge converter circuitry.
Clause 30. The apparatus of any clauses 28-29, wherein the series switch and the parallel switch, of each of the plurality of battery cells, are configured to convert the first DC voltage to the second DC voltage by controlling a first duty cycle of switching of the series switch between ON and OFF, and a second duty cycle of switching of the parallel switch ON and OFF.
Clause 31. An apparatus comprising:
   a plurality of battery stacks,
   each battery stack of the plurality of battery stacks comprising a plurality of battery cells, each battery cell of the plurality of battery cells comprising:
      an electrochemical cell, and at least one pair of switches comprising a first switch and a second switch, wherein the plurality of battery cells are connected serially in a series string;
   an alternating current (AC) motor comprising a plurality of coils,
   wherein each respective battery stack of the plurality of battery stacks is connected to a respective coil of the plurality of coils; and
   a controller configured to operate, on and off, each of the at least one pair of switches of each battery cell of the plurality of battery cells of the plurality of battery stacks.
Clause 32. The apparatus of clause 31, wherein the plurality of battery stacks comprises three battery stacks.
Clause 33. The apparatus of clause 31 or clause 32, wherein the plurality of coils comprises three coils.
Clause 34. The apparatus of any one of clause 31 to clause 33, wherein the controller is configured to control each battery stack of the plurality of battery stacks to generate a respective waveform of a plurality of waveforms corresponding to the respective connected coil of the plurality of coils of the AC motor.
Clause 35. The apparatus of any one of clause 31 to clause 34, wherein, for one battery cell of the plurality of battery cells of one of the plurality of battery stacks, the controller is configured to operate the at least one pair of switches of battery cells to bypass the electrochemical cell in the battery cell by allowing a string current to flow through the parallel switch of the at least one pair of switches.
Clause 36. The apparatus of any one of clause 31 to clause 35, wherein the controller is configured to determine one or more battery cells of the plurality of battery cells of the plurality of battery stacks to bypass, and to control the plurality of switches to bypass the one or more battery cells determined to be bypassed.
Clause 37. The apparatus of any one of clause 31 to clause 36, wherein the controller is configured to determine that the electrochemical cell of one of the plurality of battery cells of one of the plurality of battery stacks is faulty, and based on the determination, control bypass of the faulty electrochemical cell.
Clause 38. The apparatus of any one of clause 31 to clause 37, wherein the controller is configured to determine that the electrochemical cell of one of the plurality of battery cells of one of the plurality of battery stacks is charged above a charge threshold, and based on the determination of the charge above the charge threshold, control bypass of the charged electrochemical cell.
Clause 39. The apparatus of any one of clause 31 to clause 38, wherein the controller is configured to control output voltages of each battery cell of the plurality of battery cells of the plurality of battery stacks to control the output of each battery stack to produce AC voltage.
Clause 40. The apparatus of any one of clause 31 to clause 39, wherein each battery stack of the plurality of battery stacks is connected to a phase line of the AC motor.
Clause 41. The apparatus of any one of clause 31 to clause 40, wherein the plurality of battery stacks comprises three battery stacks configured by the controller to produce 3 phase AC voltage to the AC motor.
Clause 42. The apparatus of any one of clause 31 to clause 41, wherein each battery stack is connected to a ground potential.
Clause 43. The apparatus of any one of clause 31 to clause 42, further comprising converter circuitry including a single inductor, and half bridge converter circuitry including a third switch and a fourth switch.
Clause 44. The apparatus of clause 43, wherein the converter circuitry is configured to convert a first DC voltage to a second DC voltage.
Clause 45. The apparatus of any one of clause 43 to clause 44, wherein the converter circuitry is connected to a DC power source and wherein the converter circuitry is switchably connected to the plurality of battery stacks.
Clause 46. The apparatus of any one of clause 43 to clause 45, wherein the converter circuitry is switchably connected to each battery stack of the plurality of battery stacks via a respective switch.
Clause 47. The apparatus of any one of clause 43 to clause 46, wherein the plurality of battery stacks comprises three battery stacks and the converter circuitry is connected to the plurality of battery stacks via three respective switches.
Clause 48. The apparatus of any one of clause 31 to clause 47, further comprising an AC power source configured to charge one or more battery cells of the plurality of cells of the plurality of battery stacks.
Clause 49. The apparatus of clause 48, further comprising charging circuitry connected to the AC power source and switchably connected to the plurality of battery stacks.
Clause 50. The apparatus of clause 49, wherein the charging circuitry is switchably connected to each battery stack of the plurality of battery stacks via a central switch connected to a plurality of switches, each respective switch of the plurality of switches switchably connected to a battery stack of the plurality of battery stacks.
Clause 51. The apparatus of any one of clause 31 to clause 50, wherein each battery cell of the plurality of cells of the plurality of battery stacks comprises inductorless half bridge converter circuitry and is configured to produce unipolar voltage.
Clause 52. The apparatus of any one of clause 31 to clause 51, wherein each battery cell of the plurality of cells of the plurality of battery stacks comprises inductorless full bridge converter circuitry and is configured to produce bipolar voltage comprising a positive voltage and a negative voltage.
Clause 53. The apparatus of any one of clause 31 to clause 52, wherein, in one of the plurality of battery stacks, a first inductorless full bridge converter circuitry of a first battery cell is connected in series to a second inductorless full bridge converter circuitry of a second battery cell via a first node located between two switches of a first plurality of switches of the first battery cell and a second node located between two switches of a second plurality of switches of the second battery cell.
Clause 54. The apparatus of any one of clause 31 to clause 53, further comprising a DC power source configured to charge one or more battery cells of the plurality of battery cells of the plurality of battery stacks, wherein the DC power source is connected to a ground potential and the DC power source is switchably connected to the plurality of battery stacks via the plurality of coils of the AC motor.
Clause 55. The apparatus of clause 54, wherein the coils of the AC motor are configured to operate as inductors when the plurality of battery stacks are charging.
Clause 56. The apparatus of any one of clause 54 to clause 55, wherein the DC power source is switchably connected to each battery stack of the plurality of battery stacks via a central switch connected to a plurality of coils of the AC motor, each respective coil of the plurality of coils being connected to a respective battery stack of the plurality of battery stacks.
Clause 57. The apparatus of any one of clause 55 to clause 56, wherein the apparatus is configured for zero torque charging when charging the plurality of battery stacks via the plurality of inductors of the AC motor.
Clause 58. The apparatus of any one of clause 54 to clause 57, wherein the controller is configured to control currents through the plurality of coils to each of the plurality of battery stacks using the at least one pair of switches of each of the plurality of battery cells such that the currents to each of the battery stacks is substantially equal, and wherein the currents through the plurality of coils cause flux generated by the respective coils to substantially cancel each other out resulting in substantially no torque of the AC motor.
Clause 59. The apparatus of any one of clause 31 to clause 58, wherein each battery cell of the plurality of battery cells of the plurality of battery stacks comprises converter circuitry comprising half bridge circuitry.
Clause 60. The apparatus of any one of clause 31 to clause 59, wherein each battery cell of the plurality of battery cells of the plurality of battery stacks comprises full bridge circuitry comprising a first pair of switches and a second pair of switches.
Clause 61. The apparatus of any one of clause 31 to clause 60, wherein the plurality of switches are configured to convert a first DC voltage to a second DC voltage by controlling the at least one pair of switches to be ON and OFF.
Clause 62. An apparatus comprising:
   a battery stack comprising a plurality of battery cells, each battery cell of the plurality of battery cells comprising:
      an electrochemical cell, a series switch, and a parallel switch, wherein the plurality of battery cells are connected serially in a series string;
   circuitry configured to connect the battery stack to an alternating current (AC) motor,
   the circuitry configured to provide substantially zero voltage from the battery stack to the AC motor when the circuitry is in a zero voltage loop mode.
Clause 63. The apparatus of any one of clause 62, wherein the AC motor comprises a plurality of coils.
Clause 64. The apparatus of any one of clause 62 or clause 63, wherein the AC motor comprises a switched reluctance motor (SRM).
Clause 65. The apparatus of any one of clause 63 to clause 64, wherein the circuitry comprises, for each coil of plurality of coils: a relay switch configured to switch between a charging mode and a discharge mode, a first switch, a second switch, and a diode.
Clause 66. The apparatus of clause 65, wherein the apparatus further comprises an inductor, and wherein the circuitry further comprises a third switch connected between the battery stack and a terminal of the inductor, wherein the terminal of the inductor is connected at a node to a pair of capacitors, and a fourth switch connected between the third switch and a terminal of one of the capacitors of the pair of capacitors.
Clause 67. The apparatus of clause 66, wherein the third switch is connected to a terminal of another one of the capacitors of the pair of capacitors.
Clause 68. The apparatus of any one of clause 62 to clause 67, wherein each battery cell comprises inductorless half bridge converter circuitry.
Clause 69. The apparatus of any one of clause 62 to clause 68, wherein in each battery cell of the plurality of battery cells, the series switch and the parallel switch are configured to bypass the electrochemical cell by allowing a string current to flow through the parallel switch.
Clause 70. An apparatus comprising:
   one or more battery stacks each comprising a plurality of battery cells connected in a series string, each battery cell comprising:
      an electrochemical cell and converter circuitry; and
   an alternating current (AC) motor comprising one or more coils;
   wherein the one or more battery stacks are connected to the one or more coils, respectively; and
   wherein each of the battery stacks is configured to provide substantially zero voltage from the battery stack to the AC motor when the battery stack is in a zero voltage loop mode.
Clause 71. The apparatus of clause 70, wherein the converter circuitry comprises inductorless half bridge converter circuitry.
Clause 72. The apparatus of clause 70 or clause 71, wherein the AC motor comprises a plurality of coils.
Clause 73. The apparatus of any one of clause 70 to clause 72, wherein the AC motor comprises a switched reluctance motor (SRM).
Clause 74. The apparatus of any one of clause 70 to clause 73, wherein the one or more battery stacks comprises three battery stacks.
Clause 75. The apparatus of any one of clause 70 to clause 74, wherein the one or more coils of the AC motor comprises three coils.
Clause 76. The apparatus of any one of clause 70 to clause 75, further comprising a controller configured to control each of the one or more battery stacks to generate one or more waveforms, respectively, corresponding to one or more coils, respectively.
Clause 77. The apparatus of any one of clause 70 to clause 76, wherein, in each of the plurality of battery cells, the converter circuitry is configured to bypass the electrochemical cell by allowing a string current to flow through at least one parallel switch or at least one bypass diode.
Clause 78. An apparatus comprising:
   one or more battery stacks each comprising a plurality of battery cells connected in series, each battery cell plurality of battery cells comprising:
      an electrochemical cell and four switches;
   an alternating current (AC) motor comprising one or more coils;
   wherein the one or more battery stacks are connected to one or more coils, respectively; and
   wherein each of the one or more battery stacks is configured to provide substantially zero voltage from the battery stack to the AC motor when the battery stack is in a zero voltage loop mode.
Clause 79. The apparatus of clause 78, wherein each battery cell comprises inductorless half bridge converter circuitry.
Clause 80. The apparatus of clause 78 or clause 79, wherein the AC motor comprises a plurality of coils.
Clause 81. The apparatus of any one of clause 78 to clause 80, wherein the AC motor comprises a switched reluctance motor (SRM).
Clause 82. The apparatus of any one of clause 78 to clause 81, wherein the one or more battery stacks comprises three battery stacks.
Clause 83. The apparatus of any one of any one of clause 78 to clause 82, wherein the one or more coils of the AC motor comprises three coils.
Clause 84. The apparatus of any one of clause 78 to clause 83, further comprising a controller configured to control each of the one or more battery stacks to generate one or more waveforms, respectively, corresponding to the one or more coils of the AC motor.
Clause 85. The apparatus of any one of clause 78 to clause 84, wherein, in each of the plurality of battery cells, the four switches are configured to bypass the electrochemical cell by allowing a string current to flow through at least one parallel switch of the four switches or at least one bypass diode of the four switches.
Clause 86. An apparatus comprising:
   one or more battery stacks each comprising a plurality of battery cells connected serially in series string, each battery cell of the plurality of battery cells comprising:
   an electrochemical cell, four switches, a capacitor, and energy transfer circuitry; and
   the energy transfer circuitry comprising an inductor and two switches.
Clause 87. The apparatus of clause 86, further comprising an AC motor comprising one or more coils.
Clause 88. The apparatus of clause 86 or clause 87, wherein the AC motor comprises a switched reluctance motor (SRM).
Clause 89. The apparatus of any one of clause 86 to clause 88, wherein the one or more battery stacks comprises three battery stacks.
Clause 90. The apparatus of any one of clause 86 to clause 89, wherein the AC motor comprises one or more coils.
Clause 91. The apparatus of any one of clause 86 to clause 90, wherein the one or more coils of the AC motor comprises three coils.
Clause 92. The apparatus of any one of clause 86 to clause 91, further comprising a controller configured to control each of the one or more battery stacks to generate one or more waveforms, respectively, corresponding to the one or more coils of the AC motor.
Clause 93. The apparatus of any one of clause 86 to clause 92, wherein each battery cell of the plurality of battery cells is connected to a coil of the AC motor.
Clause 94. The apparatus of clause 93, wherein the energy transfer circuitry is configured to transfer energy from the capacitor to the electrochemical cell via the inductor of the energy transfer circuitry, and not via an inductor of the motor.
Clause 95. The apparatus of any one of clause 86 to clause 94, wherein, in each of the plurality of battery cells, the four switches are configured to bypass the electrochemical cell by allowing a string current to flow through at least one parallel switch of the four switches or at least one bypass diode of the four switches.
Clause 96. The apparatus of any one of clause 86 to clause 95, wherein each battery cell of the plurality of battery cells comprises the cell level converter circuitry comprising half bridge converter circuitry, full bridge converter circuitry, and a capacitor.
Clause 97. The apparatus of any one of clause 86 to clause 96, wherein the energy transfer circuitry includes half bridge converter circuitry connected between the electrochemical cell and the capacitor.
Clause 98. An apparatus comprising:
   one or more battery stacks each comprising a plurality of battery cells connected serially in series string, each battery cell of the plurality of battery cells comprising:
   an electrochemical cell, four switches, a capacitor, and energy transfer circuitry; and
   the energy transfer circuitry comprising two inductors and two switches.
Clause 99. The apparatus of clause 98, further comprising an AC motor comprising one or more coils.
Clause 100. The apparatus of clause 98 or clause 99, wherein the AC motor comprises a switched reluctance motor (SRM).
Clause 101. The apparatus of any one of clause 98 to clause 100, wherein the one or more battery stacks comprises three battery stacks.
Clause 102. The apparatus of any one of clause 98 to clause 101, wherein the AC motor comprises one or more coils.
Clause 103. The apparatus of any one of clause 98 to clause 102, wherein the one or more coils of the AC motor comprises three coils.
Clause 104. The apparatus of any one of clause 98 to clause 103, further comprising a controller configured to control each of the one or more battery stacks to generate one or more waveforms, respectively, corresponding to the one or more coils of the AC motor.
Clause 105. The apparatus of any one of clause 98 to clause 104, wherein each battery cell of the plurality of battery cells is connected to a coil of the AC motor.
Clause 106. The apparatus of any one of clause 98 to clause 105, wherein the energy transfer circuitry is configured to transfer energy from the capacitor to the electrochemical cell via the two inductors of the energy transfer circuitry, and not via an inductor of the motor.
Clause 107. The apparatus of any one of clause 98 to clause 106, wherein, in each of the plurality of battery cells, the four switches the four switches are configured to bypass the electrochemical cell by allowing a string current to flow through at least one parallel switch of the four switches or at least one bypass diode of the four switches.
Clause 108. The apparatus of any one of clause 98 to clause 107, wherein each battery cell of the plurality of battery cells comprises cell level converter circuitry comprising two full bridge converter circuitries comprising a capacitor.
Clause 109. The apparatus of any one of clause 98 to clause 108, wherein the energy transfer circuitry comprises converter circuitry comprising two inductors connected between the electrochemical cell and the capacitor.
Clause 110. A battery stack comprising one or more battery cells, each of the one or more the battery cells configured to provide substantially zero voltage when the battery stack is in a zero voltage loop mode.
Clause 111. The battery stack of clause 110, wherein the one or more battery cells comprises two battery cells connected in series.
Clause 112. An apparatus comprising:
   a plurality of battery stacks,
   each battery stack of the plurality of battery stacks comprising a plurality of battery cells, wherein each battery cell of the plurality of battery cells comprises:
      an electrochemical cell, and at least one pair of switches comprising a first switch and a second switch, wherein the battery cells of the plurality of battery cells are connected in a series; and
   circuitry configured to control the apparatus in a charge mode by switchably connecting the plurality of battery stacks in series to a power source.
Clause 113. The apparatus of clause 112, wherein the circuitry is configured to control the apparatus in a discharge mode by switchably connecting each of the plurality of battery stacks across a plurality of coils, respectively, of a motor.
Clause 114. The apparatus of clause 113, wherein the circuitry is configured to switchably connect each battery stack to the respective coil of the motor via a first switch connected at a first end of the battery stack and a second switch connected at a second end of the battery stack.
Clause 115. The apparatus of clause 114, wherein the circuitry is configured to switchably connect each battery stack to the power source via the first switch at the first end and the second switch at the second end.
Clause 116. The apparatus of any one of clause 112 to clause 115, wherein the circuitry is configured to switchably disconnect the plurality of battery stacks from the motor and switchably connect the plurality of battery stacks in series to one another and to the power source when the charge storage device is in a charge mode.
Clause 117. The apparatus of any one of clause 112 to clause 116, wherein each battery stack is switchably connected in series to the power source via the first switch and the second switch of each battery stack.
Clause 118. The apparatus of any one of clause 112 to clause 117, wherein the circuitry is configured to switchably connect each battery stack in series to the power source via the first switch and the second switch of each battery stack to provide substantially zero torque charging.
Clause 119. The apparatus of any one of clause 112 to clause 118, wherein the plurality of battery stacks comprises three battery stacks.
Clause 120. The apparatus of any one of clause 112 to clause 119, wherein each battery cell of the plurality of battery cells of the plurality of battery stacks comprises inductorless half bridge converter circuitry.
Clause 121. The apparatus of any one of clause 112 to clause 120, wherein each battery cell of the plurality of battery cells of the plurality of battery stacks comprises inductorless full bridge converter circuitry.
Clause 122. The apparatus of any one of clause 112 to clause 121, wherein the circuity comprises six switches.
Clause 123. An apparatus comprising:
   a plurality of battery stacks,
   each battery stack of the plurality of battery stacks comprising a plurality of battery cells, each battery cell of a respective battery stack comprising:
      an electrochemical cell, and at least one pair of switches comprising a first switch and a second switch, wherein the plurality of battery cells are connected in a series; and
      a switch connected between a terminal of a coil of the motor and a terminal of the battery stack, the switch configured to switchably connect the respective battery stack in series to a power source and the rest of the plurality of battery stacks when the plurality of battery stacks are in a charge mode.
Clause 124. The apparatus of clause 123, wherein the circuity comprises four switches.
Clause 125. The apparatus of clause 123 or clause 124, wherein the circuity comprises a central, shared switch switchably connected to the power source.
Clause 126. The apparatus of any one of clause 123 to clause 125, wherein the circuitry is configured to switchably connect the plurality of battery stacks in a separate loops configuration to a motor when the charge storage device is in a discharge mode.
Clause 127. The apparatus of any one of clause 123 to clause 126, wherein the circuitry is configured to switchably disconnect the plurality of battery stacks from the power source when the charge storage device is in the discharge mode.
Clause 128. The apparatus of any one of clause 123 to clause 127, wherein each battery stack is connected in series to a coil of the motor and a respective switch is connected in parallel to each series connection of battery stack and coil, and the respective switch is connected to a terminal of the battery stack and a terminal of the coil.
Clause 129. The apparatus of any one of clause 123 to clause 128, wherein a terminal of each respective switch is connected to at least one terminal of another respective switch.
Clause 130. The apparatus of any one of clause 123 to clause 129, wherein the central switch is connected in series with the power source (to a terminal of the power source and to a terminal of one coil).
Clause 131. The apparatus of any one of clause 123 to clause 130, wherein the circuitry is configured to switchably disconnect the separate loop configuration of battery stacks when the charge storage device is in a charge mode.
Clause 132. The apparatus of any one of clause 123 to clause 131, wherein the circuitry is configured to switchably connect the plurality of battery stacks in series to one another and to connect the plurality of coils in series with the plurality of battery stacks in the series and to the power source when the charge storage device is in the charge mode.
Clause 133. The apparatus of any one of clause 123 to clause 132, wherein each battery stack and each coil are switchably connected in series to the power source by turning OFF the respective switch associated with each battery stack and inductor and turning ON the central switch connected in series with the power source.
Clause 134. The apparatus of any one of clause 123 to clause 133, wherein the apparatus is configured to provide relatively quick charging, and a relatively high voltage to the series connection of plurality of battery stacks.
Clause 135. The apparatus of any one of clause 123 to clause 134, wherein the apparatus is configured to provide substantially zero torque charging.
Clause 136. The apparatus of any one of clause 123 to clause 135, wherein the cell level converter circuitry comprises inductorless half bridge converter circuitry.
Clause 137. The apparatus of any one of clause 123 to clause 136, wherein the cell level converter circuitry comprises inductorless full bridge converter circuitry,
Clause 138. The apparatus of any one of clause 123 to clause 137, wherein the plurality of battery stacks comprises three battery stacks.
Clause 139. The apparatus of any one of clause 123 to clause 138, wherein the first switch and the second switch are configured to bypass the electrochemical cell by allowing a string current to flow through at least one parallel switch or at least one bypass diode of the pair of switches and bypass the electrochemical cell.
Clause 139. The apparatus of any one of clause 123 to clause 138, wherein herein the power source is a 1-phase AC power source.
Clause 140. The apparatus of any one of clause 123 to clause 138, herein the power source is a 3 phase AC power source, and further comprising a rectifier.
Clause 141. The apparatus of clause 140, wherein the central switch further comprises central rectifier circuitry connected between the three phase AC power source and the terminal of the inductor, wherein the rectifier circuitry is configured to convert three phase AC input to DC output.
Clause 142. The apparatus of clause 141, wherein the rectifier circuitry comprises a plurality of diodes.
Clause 143. The apparatus of clause 142, wherein the plurality of diodes comprises a diode bridge arranged as a three phase diode rectifier.
Clause 144. An apparatus comprising:
   a plurality of battery stacks,
   each battery stack of the plurality of battery stacks comprising a plurality of battery cells, each battery cell of a respective battery stack comprising:
      an electrochemical cell, and at least one pair of switches comprising a first switch and a second switch, wherein the plurality of battery cells are connected in a series; and
   circuitry configured to switchably connect the plurality of battery stacks to a motor in a star configuration when the plurality of battery stacks are in a star mode, and switchably connect the plurality of battery stacks to the motor in a delta configuration when the plurality of battery stacks are in a delta mode.
Clause 145. The apparatus of clause 144, wherein the circuitry is configured to switchably disconnect the plurality of battery stacks from a power source when the charge storage device is in the star mode.
Clause 146. The apparatus of clause 144 or clause 145, wherein the circuitry includes a first switch connected between a first plurality of battery stacks and a second switch connected between a second plurality of battery stacks, and a central switch is connected in series with the power source and a terminal of one battery stack.
Clause 147. The apparatus of any one of clause 144 to clause 146, wherein the circuitry is configured to switchably disconnect the plurality of battery stacks from the power source when the charge storage device is in the delta mode.
Clause 148. The apparatus of any one of clause 144 to clause 147, wherein the circuitry is configured to switchably connect the plurality of battery stacks in series to one another and to the power source when the charge storage device is in a charge mode.
Clause 149. The apparatus of any one of clause 144 to clause 148, wherein the circuitry is configured to switchably disconnect the battery stacks from the coils of the motor when the charge storage device is in the charge mode.
Clause 150. The apparatus of any one of clause 144 to clause 149, wherein each battery stack and each coil are switchably connected in series to the power source by controlling the first switch and the second switch and turning ON the central switch connected in series with the power source.
Clause 151. The apparatus of any one of clause 144 to clause 150, wherein the apparatus is configured to provide relatively quick charging, and a relatively high voltage to the series connection of plurality of battery stacks
Clause 152. The apparatus of any one of clause 144 to clause 151, wherein the apparatus is configured to provide substantially zero torque charging.
Clause 153. The apparatus of any one of clause 144 to clause 152, wherein the plurality of battery stacks comprises three battery stacks.
Clause 154. The apparatus of any one of clause 144 to clause 153, wherein the cell level converter circuitry comprises inductorless half bridge converter circuitry.
Clause 155. The apparatus of any one of clause 144 to clause 154, wherein the cell level converter circuitry comprises inductorless full bridge converter circuitry.
Clause 156. The apparatus of any one of clause 144 to clause 155, wherein the first switch and the second switch are configured to bypass the electrochemical cell by allowing a string current to flow through at least one parallel switch or at least one bypass diode of the pair of switches and bypass the electrochemical cell.
Clause 157. An apparatus comprising:
   a battery stack comprising a plurality of battery cells, each battery cell comprising:
      an electrochemical cell, and a plurality of switches, wherein the plurality of battery cells are connected in a series; and
   circuitry configured to control the output of each battery cell so that the output is either a positive voltage, a negative voltage, or substantially zero volts.
Clause 158. The apparatus of clause 157, wherein the negative voltage is relatively greater than the positive voltage.
Clause 159. The apparatus of clause 157 or clause 158, wherein the negative voltage is substantially twice the positive voltage.
Clause 160. The apparatus of any one of clause 157 to clause 159, wherein the cell level converter circuitry comprises full bridge converter circuitry.
Clause 161. The apparatus of any one of clause 157 to clause 160, wherein the plurality of battery stacks comprises three battery stacks.
Clause 162. The apparatus of any one of clause 157 to clause 161, wherein the plurality of switches are configured to bypass the electrochemical cell by allowing a string current to flow through at least one parallel switch or at least one bypass diode of the plurality of switches and bypass the electrochemical cell.
Clause 163. The apparatus of clause 157, wherein each battery cell comprises:
   an inductor comprising a first terminal of the inductor connected to a first terminal of the electrochemical cell, and a second terminal of the inductor connected between a first switch and a second switch, wherein a terminal of the first switch is connected to a second terminal of the electrochemical cell,
   a capacitor comprising a first terminal of the capacitor connected to the first terminal of the electrochemical cell, and a second terminal of the capacitor connected between the second switch and a third switch,
   a pair of series connected transistors with a first terminal of the series connected transistors connected to the first terminal of the electrochemical cell, and a second terminal of the series connected transistors connected between the third switch and a fourth switch, wherein a terminal of the fourth switch is connected to the second terminal of the electrochemical cell.
Clause 164. The apparatus of clause 163, wherein the first terminal of the electrochemical cell is connected to a second battery cell.
Clause 165. The apparatus of clause 162 or clause 163, wherein the first terminal of the electrochemical cell is connected between a respective third switch and a respective fourth switch of the second battery cell.
Clause 166. The apparatus of any one of clause 162 to clause 165, wherein the battery cell is configured to output the negative voltage when the third switch is turned ON (and the fourth switch is turned OFF, and the pair of series connected transistors are both turned OFF).
Clause 167. The apparatus of any one of clause 162 to clause 166, wherein the battery cell is configured to output the positive voltage when the fourth switch is turned ON (and the third switch is turned OFF, and the pair of series connected transistors are both turned OFF).
Clause 168. The apparatus of any one of clause 162 to clause 167, wherein the battery cell is configured to output the substantially zero volts when the pair of series connected transistors are both turned ON (and the third switch is turned OFF, and fourth switch is turned the OFF).
Clause 169. The apparatus of clause 157, wherein each battery cell comprises:
   an inductor comprising a first terminal of the inductor connected to a first terminal of the electrochemical cell, and a second terminal of the inductor connected between a first switch and a second switch, wherein a terminal of the first switch is connected to a second terminal of the electrochemical cell,
   a capacitor comprising a first terminal of the capacitor connected to the first terminal of the electrochemical cell, and a second terminal of the capacitor connected between the second switch and a third switch,
   a pair of series connected switches comprising a fifth switch and a sixth switch, wherein a first terminal of the series connected switches is connected to the first terminal of the electrochemical cell, and a second terminal of the series connected switches is connected between the second terminal of the electrochemical cell and a fourth switch, wherein a terminal of the fourth switch is connected to a terminal of the third switch.
Clause 170. The apparatus of clause 169, wherein a terminal between the series connected switches is connected to a second battery cell.
Clause 171. The apparatus of clause 169 or clause 170, wherein a node between the third switch and the fourth switch, the terminal of the fourth switch connected to the third switch, is connected to a second battery cell.
Clause 172. The apparatus any one of clause 169 to clause 171, wherein the terminal between the series connected switches of a first cell is connected to the node between a respective third switch and a respective fourth switch of the second battery cell.
Clause 173. The apparatus of any one of clause 169 to clause 172, wherein the battery cell is configured to output the negative voltage when the third switch is turned ON and the fifth switch is turned ON, and the fourth switch is turned OFF, and the sixth switch is turned OFF.
Clause 174. The apparatus of any one of clause 169 to clause 173, wherein the battery cell is configured to output the positive voltage when the fourth switch is turned ON and the fifth switch is turned ON, and the third switch is turned OFF, and the sixth switch is turned OFF.
Clause 175. The apparatus of any one of clause 169 to clause 174, wherein the battery cell is configured to output the substantially zero volts when the fourth switch is turned ON and the sixth switch is turned ON, and the third switch is turned OFF, and the fifth switch is turned OFF.
Clause 176. The apparatus of any one of clause 169 to clause 175, wherein the battery cell is configured to output the negative voltage by turning ON a pair of switches of the plurality of switches, and turning OFF a pair of switches of the plurality of switches.
Clause 177. The apparatus of any one of clause 169 to clause 176, wherein the battery cell is configured to output the positive voltage by turning ON a pair of switches of the plurality of switches, and turning OFF a pair of switches of the plurality of switches.
Clause 178. The apparatus of any one of clause 169 to clause 177, wherein the battery cell is configured to output the substantially zero volts by turning ON a pair of switches of the plurality of switches, and turning OFF a pair of switches of the plurality of switches.
Clause 179. The apparatus of any one of clause 169 to clause 177, wherein the battery cell is configured to control the output voltage to output the positive voltage, the negative voltage, or the substantially zero volts by controlling the plurality of switches, turning ON a pair of switches of the plurality of switches, and turning OFF a pair of switches of the plurality of switches.
Clause 180. The apparatus of clause 157, wherein each battery cell comprises:
   a first capacitor comprising a first terminal of the first capacitor connected between a first terminal of the electrochemical cell, a first terminal of a first switch, and a first terminal of a second switch,
   a second capacitor comprising a first terminal of the second capacitor connected between a second terminal of the electrochemical cell, a first terminal of a third switch, and a first terminal of a fourth switch,
   wherein a second terminal of the first capacitor is connected to a second terminal of the second capacitor at a first node,
   wherein a second terminal of the first switch is connected to a second terminal of the third switch at a second node,
   wherein a second terminal of the second switch is connected to a second terminal of the fourth switch at a fourth node,
   a first pair of series connected switches comprising a first terminal of the first pair of series connected switches connected to the first node, and a second terminal of the first pair of series connected switches connected to the second node, and
   a second pair of series connected switches comprising a first terminal of the second pair of series connected switches connected to the first node, and a second terminal of the second pair of series connected switches connected to the third node.
Clause 181. The apparatus of clause 158, comprising a connection between a plurality of battery cells, a connection between a first battery cell and a second battery cell.
Clause 182. The apparatus of any one of clause 157 to clause 181, comprising a connection between the battery stack and a coil of the motor.
Clause 183. The apparatus of clause 182, comprising a connection between the battery stack and a second coil of the AC motor.
Clause 184. The apparatus of clause 157, wherein each battery cell comprises neutral point clamped (NPC) converter circuitry with no inductor in the battery cell.
Clause 185. An apparatus comprising:
   a plurality of battery stacks,
   each battery stack of the plurality of battery stacks comprising a plurality of battery cells, each battery cell of a respective battery stack comprising:
      an electrochemical cell, and at least one pair of switches comprising a first switch and a second switch, wherein the plurality of battery cells are connected in a series; and
   a motor comprising at least one coil;
   the plurality of battery stacks comprising a first battery stack and a second battery stack, wherein the first battery stack is connected to the second battery stack via the at least one coil;
   wherein the plurality of battery stacks are configured to output either a positive voltage, a negative voltage, or substantially zero volts.
Clause 186. The apparatus of clause 185, wherein the at least one coil comprises an inductor of a motor.
Clause 187. The apparatus of clause 185 or clause 186, wherein the negative voltage is relatively greater than the positive voltage.
Clause 188. The apparatus of any one of clause 185 to clause 187, wherein the charge storage device is configured to output the voltage across the at least one coil.
Clause 189. The apparatus of any one of clause 185 to clause 188, wherein the motor comprises a switched reluctance motor (SRM).
Clause 190. The apparatus of any one of clause 185 to clause 189, wherein the plurality of battery stacks is configured to output substantially zero volts when the apparatus is in a zero voltage loop mode.
Clause 191. The apparatus of any one of clause 185 to clause 190, further comprising a plurality of coils, wherein the at least one coil is one coil of the plurality of coils, and wherein at least two battery stacks are associated with each coil of the plurality of coils.
Clause 192. The apparatus of clause 191, wherein the plurality of coils comprises three coils.
Clause 193. The apparatus of any one of clause 185 to clause 192, wherein the first switch and the second switch are configured to bypass the electrochemical cell by allowing a string current to flow through at least one parallel switch or at least one bypass diode of the pair of switches and bypass the electrochemical cell.
Clause 193. The apparatus of any one of clause 185 to clause 192, wherein the negative voltage is substantially twice the positive voltage.
Clause 194. The apparatus of clause 193, wherein the charge storage device comprises at least two battery stacks.
Clause 195. The apparatus of clause 193 or clause 194, wherein the at least two battery stacks comprise a first battery stack and a second battery stack.
Clause 196. The apparatus of any one of clause 193 to clause 195, wherein the first battery stack is connected to the second battery stack via the inductor, and the first battery stack has a first plurality of battery cells with a first type of cell level converter circuitry and the second battery stack has a second plurality of battery cells with a second different type of cell level converter circuitry.
Clause 197. The apparatus of any one of clause 193 to clause 196, wherein the first type of cell level converter circuitry comprises inductorless half bridge converter circuitry.
Clause 198. The apparatus of any one of clause 193 to clause 197, wherein the second type of cell level converter circuitry comprises inductorless full bridge converter circuitry.
Clause 199. An apparatus comprising:
   a plurality of battery stacks,
   each battery stack of the plurality of battery stacks comprising a plurality of battery cells, each battery cell of a respective battery stack comprising:
      an electrochemical cell, and at least one pair of switches comprising a first switch and a second switch, wherein the plurality of battery cells are connected in a series; and
   a motor comprising at least one coil;
   wherein at least two battery stacks of the plurality of battery stacks are connected to each at least one coil; and
   circuitry comprising a controller and a plurality of charging switches configured to control charge of the battery stacks;
   wherein the controller is configured to control the plurality of switches to arrange the circuitry in a charging arrangement from a plurality of different charging arrangements, the given charging arrangement corresponding to a charging mode of the plurality of battery stacks.
Clause 200. The apparatus of clause 199, wherein the at least one coil of the motor is split into two different windings comprising a first winding and a second winding.
Clause 201. The apparatus of clause 199 or clause 200, wherein a first battery stack of the at least two battery stacks is connected to the first winding and a second battery stack of the at least two battery stacks is connected to the second winding.
Clause 202. The apparatus of any one of clause 199 to clause 201, further comprising an alternating current (AC) power source, wherein at least one terminal of the AC power source is connected to a node between the first winding and the second winding, wherein the at least one terminal of the AC power source is related to at least one AC phase (u, v, w).
Clause 203. The apparatus of any one of clause 199 to clause 202, wherein the plurality of different charging arrangements comprise: an AC charging arrangement, a lower voltage DC charging arrangement, and a higher voltage DC charging arrangement.
Clause 204. The apparatus of any one of clause 199 to clause 203, wherein the controller is configured to control the plurality of switches to arrange the circuitry in a discharge arrangement.
Clause 205. The apparatus of any one of clause 199 to clause 204, wherein the circuitry comprises:
   a first switch (S1, S3) connected between a first node and a second node, wherein the first node is between a first winding of a first coil of the motor and a second winding of the first coil of the motor, and wherein the second node is between a first winding of a second coil of the motor and a second winding of the second coil of the motor,
   a second switch (S1, S3) connected between the second node and a third node, wherein the third node is between a first winding of a third coil of the motor and a second winding of the third coil of the motor, and
   a third switch (S2) connected between a first pair of battery stacks and a second pair of battery stacks.
Clause 206. The apparatus of any one of clause 199 to clause 205, wherein at least one terminal of each switch of the first switch, second switch, and third switch is connected to a terminal of a power source.
Clause 207. The apparatus of any one of clause 199 to clause 206, wherein the first switch and the second switch each comprise a plurality of terminals comprising a first switch terminal and a second switch terminal each connected to a terminal of an AC power source, the first switch terminal of the first switch connected to a first terminal of the AC power source and the second switch terminal of the first switch connected to a second terminal of the AC power source, and the first switch terminal of the second switch connected to the second terminal of the AC power source and the second switch terminal of the second switch connected to a third terminal of the AC power source.
Clause 208. The apparatus of any one of clause 199 to clause 207, wherein the third switch comprises a terminal connected to a terminal of a DC power source.
Clause 209. The apparatus of any one of clause 199 to clause 208, wherein in the discharge arrangement the third switch (S2) is switched ON.
Clause 210. The apparatus of any one of clause 199 to clause 209, wherein in the AC charging arrangement the third switch (S2) is switched ON, the first switch (S1) is switched OFF, and the second switch (S3) is switched OFF.
Clause 211. The apparatus of any one of clause 199 to clause 210, wherein in the lower voltage DC charging arrangement the first switch (S1) is switched ON, the second switch (S3) is switched ON, and the third switch (S2) is switched ON.
Clause 212. The apparatus of any one of clause 199 to clause 211, wherein in the higher voltage DC charging arrangement the first switch (S1) is switched ON, the second switch (S3) is switched OFF, and the third switch (S2) is switched OFF.
Clause 213. The apparatus of any one of clause 199 to clause 212, wherein in the lower voltage DC charging arrangement the DC power source provides about 400 volts.
Clause 214. The apparatus of any one of clause 199 to clause 213, wherein in the higher voltage DC charging arrangement the DC power source provides about 800 volts.
Clause 215. The apparatus of any one of clause 213, wherein in the lower voltage DC charging arrangement half of the battery cells are connected to the power source and half of the battery cells are disconnected from the power source.
Clause 216. The apparatus of any one of clause 199 to clause 215, wherein the AC source is connected in between the first winding and the second winding of each coil so that the flux of the coils cancels out and there is zero torque during charging mode.
Clause 217. The apparatus of any one of clause 199 to clause 216, wherein the DC source is connected in between the first winding and the second winding of one of the coils.
Clause 218. The apparatus of any one of clause 199 to clause 217, wherein in the higher voltage DC charging arrangement all of the battery stacks of the plurality of battery stacks are connected in series to the DC power source via the coils of the motor.
Clause 219. The apparatus of any one of clause 199 to clause 218, wherein in the lower voltage DC charging arrangement half of the battery stacks of the plurality of battery stacks are connected in series to the DC power source via the coils of the motor.
Clause 220. An apparatus comprising:
   a battery module comprising a plurality of battery stacks, each battery stack comprising a plurality of battery cells, each battery cell comprising:
      an electrochemical cell, a series cell switch, and a parallel cell switch, wherein the plurality of battery cells are connected in a first series;
   each battery stack comprising a series stack switch, and a parallel stack switch, wherein the plurality of battery stacks are connected in a second series.
Clause 221. The apparatus of clause 220, wherein the series cell switch and the parallel cell switch are configured to bypass the electrochemical cell by allowing a string current to flow through at least one parallel cell switch or at least one bypass cell diode of the plurality of cell switches and bypass the electrochemical cell.
Clause 222. The apparatus of clause 220 or clause 221, wherein the series stack switch and the parallel stack switch are configured to bypass the stack by allowing a string current to flow through at least one parallel stack switch or at least one bypass stack diode of the plurality of stack switches and bypass the stack.
Clause 223. The apparatus of any one of clause 220 to clause 222, further comprising a plurality of battery modules.
Clause 224. The apparatus of clause 223, wherein the plurality of battery modules comprises three battery modules.
Clause 225. The apparatus of any one of clause 220 to clause 224, wherein the cell level converter circuitry comprises inductorless full bridge converter circuitry.
Clause 226. The apparatus of clause any one of clause 220 to 224, wherein the cell level converter circuitry comprises inductorless half bridge converter circuitry.
Clause 227. The apparatus of any one of clause 220 to clause 226, wherein the series stack switch and the parallel stack switch are configured to convert input voltage to output voltage by controlling the series stack switch and the parallel stack switch to be ON and OFF.
Clause 228. The apparatus of any one of clause 220 to clause 227, wherein the parallel stack switch further comprises a bypass stack diode.
Clause 229. The apparatus of any one of clause 220 to clause 228, wherein the parallel stack switch is configured to bypass the battery stack during charge mode when the series stack switch is OFF and the parallel stack switch is ON allowing a string current to flow through the parallel stack switch and bypass the electrochemical cell of the respective plurality of battery cells of the given battery stack.
Clause 230. The apparatus of any one of clause 220 to clause 229, wherein the bypass stack diode is configured to bypass the battery stack during discharge mode when the series stack switch is OFF and the parallel stack switch is OFF allowing a string current to flow through the bypass stack diode and bypass the electrochemical cell of the respective plurality of battery cells of the given battery stack, and a blocking stack diode of the series stack switch blocks current from the electrochemical cell of the respective plurality of battery cells of the given battery stack towards the second series.
Clause 231. The apparatus of any one of clause 220 to clause 230, further comprising a controller configured to determine which one or more battery stacks of the plurality of battery stacks to bypass one or more faulty or charged electrochemical cells, and to control the series stack switch and the parallel stack switch to bypass the one or more battery stacks determined to be bypassed.
Clause 232. An apparatus comprising:
   a battery module comprising a plurality of battery modules, each battery module comprising a plurality of battery stacks, each battery stack comprising a plurality of battery cells, each battery cell comprising:
      an electrochemical cell, a series cell switch, and a parallel cell switch, wherein the plurality of battery cells are connected in a first series;
   each battery stack comprising a series stack switch, and a parallel stack switch, wherein the plurality of battery stacks are connected in a second series; and
   each battery module comprising a series module switch, and a parallel module switch, wherein the plurality of battery modules are connected in a third series.
Clause 233. The apparatus of clause 232, wherein the series cell switch and the parallel cell switch are configured to bypass the electrochemical cell by allowing a string current to flow through at least one parallel cell switch or at least one bypass cell diode of the plurality of cell switches and bypass the electrochemical cell.
Clause 234. The apparatus of clause 232 or clause 233, wherein the series stack switch and the parallel stack switch are configured to bypass the stack by allowing a string current to flow through at least one parallel stack switch or at least one bypass stack diode of the plurality of stack switches and bypass the stack.
Clause 235. The apparatus of any one of clause 232 to clause 234, wherein the series module switch and the parallel module switch are configured to bypass the module by allowing a string current to flow through at least one parallel module switch or at least one bypass module diode of the plurality of module switches and bypass the module.
Clause 236. The apparatus of any one of clause 232 to clause 235, further comprising a plurality of battery modules.
Clause 237. The apparatus of clause 237, wherein the plurality of battery modules comprises three battery modules.
Clause 238. The apparatus of any one of clause 232 to clause 237, wherein the cell level converter circuitry comprises inductorless full bridge converter circuitry.
Clause 239. The apparatus of any one of clause 232 to clause 237, wherein the cell level converter circuitry comprises inductorless half bridge converter circuitry.
Clause 240. The apparatus of any one of clause 232 to clause 239, wherein the series module switch and the parallel module switch are configured to convert input voltage to output voltage by controlling the series module switch and the parallel module switch to be ON and OFF.
Clause 241. The apparatus of any one of clause 232 to clause 240, wherein the parallel module switch further comprises a bypass module diode.
Clause 242. The apparatus of any one of clause 232 to clause 241, wherein the parallel module switch is configured to bypass the battery module during charge mode when the series module switch is OFF and the parallel module switch is ON allowing a string current to flow through the parallel module switch and bypass the electrochemical cell of the respective plurality of battery cells [of the given battery module.
Clause 243. The apparatus of any one of clause 232 to clause 242, wherein the bypass module diode is configured to bypass the battery module during discharge mode when the series module switch is OFF and the parallel module switch is OFF allowing a string current to flow through the bypass module diode and bypass the electrochemical cell of the respective plurality of battery cells of the given battery module, and a blocking module diode of the series module switch blocks current from the electrochemical cell of the respective plurality of battery cells of the given battery module towards the third series.
Clause 244. The apparatus of any one of clause 232 to clause 243, further comprising a controller configured to determine which one or more battery modules of the plurality of battery modules to bypass one or more faulty or charged electrochemical cells, and to control the series module switch and the parallel module switch to bypass the one or more battery modules determined to be bypassed.
Clause 245. An apparatus comprising:
   a battery stack comprising a plurality of battery cells, each battery cell comprising:
   an electrochemical cell, bi-directional converter circuitry, a series switch, and a pair of parallel switches, wherein the plurality of battery cells are connected in a series.
Clause 246. The apparatus of clause 245, wherein the bi-directional converter circuitry is configured as boost circuitry for discharge and as buck circuitry for charge.
Clause 247. The apparatus of clause 245 or clause 246, wherein the pair of parallel switches comprises a pair of parallel transistors.
Clause 248. The apparatus of any one of clause 245 to clause 247, further comprising an auxiliary power circuit.
Clause 249. The apparatus of clause 248, wherein the auxiliary power circuit is connected to a series of battery cells and is configured to provide backup power to a controller or a driver from the series of battery cells in a first backup mode.
Clause 250. The apparatus of clause 248 or clause 249, wherein the auxiliary power circuit unit is connected to at least one communication line and is configured to provide backup power to a controller or a driver from the at least one communication line in a second backup mode.
Clause 251. The apparatus of any one of clause 232 to clause 250, wherein a power harvesting unit is connected between the auxiliary power circuit and the at least one communication line, and the power harvesting unit comprises power harvesting circuitry configured to harvest power from the at least one communication line.
Clause 252. The apparatus of any one of clause 232 to clause 251, wherein the at least one communication line is a first communication line of a pair of communication lines.
Clause 253. The apparatus of any one of clause 232 to clause 252, wherein the cell level converter circuitry comprises cell level boost converter circuitry.
Clause 254. The apparatus of any one of clause 232 to clause 253, wherein the communication lines are configured to facilitate communication between a plurality of battery cells.
Clause 255. The apparatus of any one of clause 232 to clause 254, wherein the cell level converter circuitry is configured to bypass the electrochemical cell in response to an indication that the electrochemical cell is above a charge threshold, and allow a series string current to charge other electrochemical cells in the series.
Clause 256. The apparatus of any one of clause 232 to clause 255, wherein the cell level converter circuitry is configured to bypass the electrochemical cell in response to an indication that the electrochemical cell is faulty or discharged, and allow a series string current to discharge other electrochemical cells in the series.
Clause 257. The apparatus of any one of clause 232 to clause 256, further comprising at least one resistor connected between the at least one communication line and the power harvesting circuitry, wherein the at least one resistor is arranged to provide protection to the power harvesting circuitry.
Clause 258. The apparatus of any one of clause 232 to clause 257, further wherein the series switch is configured in a normally OFF state.
Clause 259. The apparatus of any one of clause 232 to clause 258, further wherein the pair of parallel switches are each configured in a normally ON state.
Clause 260. The apparatus of any one of clause 232 to clause 259, wherein the plurality of battery stacks comprises three battery stacks.
Clause 261. The apparatus of any one of clause 232 to clause 260, wherein the cell level converter circuitry comprises half bridge converter circuitry.
Clause 262. The apparatus of any one of clause 232 to clause 261, wherein the series switch and the pair of parallel switches are configured to bypass the electrochemical cell by allowing a string current to flow through at least one parallel switch of the pair of parallel switches or at least one bypass diode of the pair of parallel switches and bypass the electrochemical cell.
Clause 263. The apparatus of any one of clause 232 to clause 262, wherein the battery stack is configured to output a voltage value of about 400 volts across the series.
Clause 264. A vehicle comprising the apparatus of any one of clause 1 to clause 263.
Clause 265. The vehicle of clause 264, wherein the vehicle further comprises a motor connected to a drive train.
Clause 266. The apparatus of any one of clause 199 to clause 204, wherein the circuitry comprises:
   a first switch (S1, S3) connected between a first pair of battery stacks and a second pair of battery stacks,
   a second switch (S1, S3) connected between the second pair of battery stacks and a third pair of battery stacks, and
   a third switch (S2) connected between another end of the second pair of battery stacks and the third pair of battery stacks.
Clause 267. An apparatus comprising:
   a coil of an electric motor comprising a first terminal and a second terminal;
   a first battery stack connected to the first terminal of the coil;
   a second battery stack connected to the second terminal of the coil;
   wherein:
      the first battery stack comprises a first plurality of battery cells;
      the first plurality of battery cells are connected serially in a first series string;
      the second battery stack comprises a second plurality of battery cells;
      the second plurality of battery cells are connected serially in a second series string;
      each battery cell of the first plurality of battery cells and the second plurality of battery cells comprises an electrochemical cell;
      the first series string is configured to generate a first alternating current (AC) voltage that comprises a first amplitude, a first phase, and a first direct current (DC) voltage offset;
      the second series string is configured to generate a second AC voltage that comprises a second amplitude, a second phase, and a second DC voltage offset; and
      the first battery stack and the second battery stack are configured to generate a third AC voltage across the coil, wherein:
         the third AC voltage is a combination of the first AC voltage and the second AC voltage, and
         the third AC voltage comprises a third amplitude, a third phase, and substantially no DC voltage offset.
Clause 268. The apparatus of clause 267, wherein the second amplitude is about equal to the first amplitude.
Clause 269. The apparatus of clause 268 or clause 269, wherein the second phase is about 180 degrees different than the first phase.
Clause 270. The apparatus of any of clause 267 to clause 269, wherein the third amplitude is about double the first amplitude.
Clause 271. The apparatus of any of clause 267 to clause 270, wherein the third phase is about equal to the first phase.
Clause 272. The apparatus of any of clause 267 to clause 271, further comprising a second coil connected to a third battery stack and a fourth battery stack.
Clause 273. The apparatus of clause 272, wherein the third battery stack and the fourth battery stack are configured to generate a fourth AC voltage across the second coil.
Clause 274. The apparatus of clause 272 or clause 273, further comprising a third coil connected to a fifth battery stack and a sixth battery stack.
Clause 275. The apparatus of clause 274, wherein the fifth battery stack and the sixth battery stack are configured to generate a fifth AC voltage across the third coil.
Clause 276. The apparatus of any of clause 267 to clause 271, further comprising a second coil connected to the first battery stack and the second battery stack.
Clause 277. The apparatus of clause 276, wherein the first battery stack and the second battery stack are configured to generate a fourth AC voltage across the second coil.
Clause 278. The apparatus of clause 276 or clause 277, further comprising a third coil connected to the first battery stack and the second battery stack.
Clause 279. The apparatus of any of clause 278, wherein the first battery stack and the second battery stack are configured to generate a fifth AC voltage across the third coil.
Clause 280. The apparatus of any of clause 273 to clause 279, wherein the fourth AC voltage comprises a fourth amplitude, a fourth phase, and substantially no DC voltage offset.
Clause 281. The apparatus of clause 280, wherein the fourth amplitude is about equal to the third amplitude.
Clause 282. The apparatus of clause 280 or clause 282, wherein the fourth phase is about 120 degrees different than the third phase.
Clause 283. The apparatus of clause 275 or clause 279, wherein the fifth AC voltage comprises a fifth amplitude, a fifth phase, and substantially no DC voltage offset.
Clause 284. The apparatus of clause 283, wherein the fifth amplitude is about equal to the third amplitude.
Clause 285. The apparatus of clause 283 or clause 284, wherein the fifth phase is about 240 degrees different than the third phase.
Clause 286. An apparatus comprising:
   a battery cell comprising a plurality of connection terminals;
   wherein each connection terminal of the plurality of connection terminals is configured to connect to a respective coil of an electric motor.
Clause 287. The apparatus of clause 286, wherein the battery cell comprises a plurality of isolated boost converter circuits.
Clause 288. The apparatus of clause 286 or clause 287, wherein each isolated boost converter circuit of the plurality of isolated boost converter circuits is configured to be connected to an electrochemical cell.
Clause 289. The apparatus of any of clause 286 to clause 288, wherein the battery cell comprises a plurality of bypass circuits.
Clause 290. The apparatus of clause 289, wherein each bypass circuit of the plurality of bypass circuits comprises a series switch and a parallel switch.
Clause 291. The apparatus of any of clause 286 to clause 290, wherein the battery cell comprises a second plurality of connection terminals.
Clause 292. The apparatus of clause 291, wherein each connection terminal of the second plurality of connection terminals is configured to connect to a second battery cell.
Clause 293. The apparatus of clause 292, wherein the battery cell and the second battery cell are configured to be in a first battery stack.
Clause 294. The apparatus of clause 292 or clause 293, wherein each respective coil is configured to be connected to a third battery cell.
Clause 295. The apparatus of clause 294, wherein the third battery cell is configured to be in a second battery stack.
Clause 296. The apparatus of clause 295, wherein the third battery cell is configured to be connected to a fourth battery cell.
Clause 297. The apparatus of clause 296, wherein the fourth battery cell is configured to be in the second battery stack.
Clause 298. The apparatus of clause 297, wherein the fourth battery cell is configured to be connected to the second battery cell.
Clause 299. The apparatus of any of clause 286 to clause 298, wherein the plurality of coils comprises three coils.
Clause 300. The apparatus of any of clause 286 to clause 299, wherein the electric motor is configured to be connected to an electric vehicle.
Clause 301. The apparatus of any of clause 286 to clause 300, wherein the battery cell comprises a plurality of full bridge converter circuits.
Clause 302. The apparatus of any of clause 286 to clause 301, wherein the battery cell further comprises a second plurality of connection terminals, wherein each connection terminal of the second plurality of connection terminals is configured to connect to a second terminal of the respective coil of the electric motor.
Clause 302. The apparatus of any of clause 286 to clause 302, wherein the battery cell comprises an electrochemical cell.
Clause 303. The apparatus of clause 303, wherein a ripple on the electrochemical cell is about zero during charging of the electrochemical cell.
Clause 304. The apparatus of clause 303, wherein a ripple on the electrochemical cell is about zero during discharging of the electrochemical cell.
Clause 305. The apparatus of any of clause 286 to clause 304, wherein the current through the battery cell is substantially a DC current.

## Claims

1. An apparatus comprising:
a battery stack comprising a plurality of battery cells, each battery cell of the plurality of battery cells comprising: an electrochemical cell, a series switch, and a parallel switch, wherein the plurality of battery cells are connected serially in a series string;
bi-directional converter circuitry comprising: an inductor, a first switch, a second switch, and a capacitor; and
inverter circuitry comprising:
a plurality of switches configured to convert a direct current (DC) input to a plurality of alternating current (AC) outputs; and
a controller configured to output control signals to the series switch and the parallel switch of each of the plurality of battery cells, the first and the second switch of the bi-directional converter circuitry, and the plurality of switches of the inverter.

2. The apparatus of claim 1, further comprising an electric motor, wherein the plurality of AC outputs are configured to produce a plurality of waveforms to operate the electric motor.

3. The apparatus of any preceding claim, further comprising rectifier circuitry connected to the bi-directional converter circuitry, wherein the rectifier circuitry is configured to convert an AC input to a DC output, and the bi-directional circuitry is configured to convert the DC output from the rectifier circuitry to a lower voltage DC input to the battery stack for charging one or more battery cells of the battery stack.

4. The apparatus of any preceding claim, wherein the controller is configured to operate the apparatus to charge one or more electrochemical cells in a charge mode by controlling the first switch of the bi-directional converter circuitry and the second switch of the bi-directional converter circuitry.

5. The apparatus of any preceding claim, wherein the controller is configured to operate each battery cell of the plurality of battery cells in a bypass mode by controlling the series switch OFF and the parallel switch ON to control a string current to flow through the parallel switch and bypass the electrochemical cell.

6. The apparatus of any preceding claim, wherein the controller is configured to operate each battery cell of the plurality of battery cells in a discharge mode by controlling the series switch ON and the parallel switch OFF to control a current to flow from the electrochemical cell towards the series string.

7. The apparatus of any preceding claim, wherein in each battery cell of the plurality of battery cells, the series switch comprises a blocking diode.

8. The apparatus of claim 7, wherein the controller is configured to operate each battery cell of the plurality of battery cells to charge the electrochemical cell of a given battery cell by controlling the series switch ON or OFF, and controlling the parallel switch OFF to control a current flow through the blocking diode of the series switch, and wherein the blocking diode of the series switch is configured to block current from the electrochemical cell towards the series string in a discharge bypass mode.

9. The apparatus of any preceding claim, wherein in each battery cell of the plurality of battery cells, the parallel switch comprises a bypass diode.

10. The apparatus of claim 9, wherein the bypass diode comprises an integral diode of the parallel switch and the blocking diode comprises an integral diode of the series switch.

11. The apparatus of claim 9 or claim 10, wherein the bypass diode is configured to bypass the electrochemical cell of a given battery cell when the series switch is switched OFF and the parallel switch is switched OFF to control a string current to flow through the bypass diode and bypass the electrochemical cell, and wherein the bypass diode of the parallel switch is configured to block current when the electrochemical cell of a given battery cell is charging.

12. The apparatus of any preceding claim, wherein the controller is configured to determine one or more battery cells of the plurality of battery cells to bypass, and to bypass the determined one or more battery cells by controlling the series switch and the parallel switch of each of the one or more determined battery cells.

13. The apparatus of any preceding claim, wherein the controller is configured to determine charge of the electrochemical cell of one of the plurality of battery cells or the electrochemical cell of one of the plurality of battery cells is faulty, and based on the determination, control bypass of the electrochemical cell.

14. The apparatus of any preceding claim, further comprising cell level converter circuitry configured to convert a first DC voltage to a second DC voltage, wherein the series switch and the parallel switch of each of the plurality of battery cells are comprised in the cell level converter circuitry, and the cell level converter circuitry comprises inductorless half bridge converter circuitry.

15. The apparatus of claim 14, wherein the series switch and the parallel switch, of each of the plurality of battery cells, are configured to convert the first DC voltage to the second DC voltage by controlling a first duty cycle of switching of the series switch between ON and OFF, and a second duty cycle of switching of the parallel switch between ON and OFF.
